# EUROPEAN PATENT APPLICATION

(11) **EP 4 514 013 A1**
(43) Date of publication of application: **26.02.2025**
(21) Application number: 23791834.7
(22) Date of filing: 17.04.2023
(51) Int. Cl.: H04W 72/0446, H04B 7/06, H04B 7/08, H04L 27/26, H04W 16/26, H04W 16/28, H04W 56/00, H04W 92/20

(54) **COMMUNICATION SYSTEM**

(30) Priority: 22.04.2022 JP 2022070970
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP); IWAYAMA, Naofumi, Tokyo 100-8310 (JP)
(74) Representative: Mewburn Ellis LLP
(86) International application number: PCT/JP2023/015354
(87) International publication number: WO 2023/204186

(57) **Abstract**

A communication system that can control smart repeaters includes: a base station that is applied to a fifth-generation wireless access system; and a smart repeater having a beamforming function and performing relay processing between the base station and a communication terminal or between a communication terminal connected to the base station and another communication terminal. The base station transmits information related to a beam used in the relay processing to the smart repeater, and the smart repeater forms a beam based on the information related to the beam received from the base station and performs the relay processing.

## Description

### Field

The present disclosure relates to wireless communication technology.

### Background

In the 3rd Generation Partnership Project (3GPP), which is an association for standardizing mobile communication systems, fifth-generation (hereinafter may be referred to as "5G") wireless access systems have been developed as a successor to Long Term Evolution (LTE) and Long Term Evolution Advanced (LTE-A) (see Non Patent Literature 1), which is one of fourth-generation wireless access systems (for example, Non Patent Literature 2). Technology for 5G wireless sections is referred to as "New Radio Access Technology" ("New Radio" is abbreviated as "NR"). NR systems have been developed based on the LTE systems and the LTE-A systems.

For example, in Europe, requirements for 5G have been compiled by an association called METIS (see Non Patent Literature 3). The requirements for 5G wireless access systems include 1000 times larger system capacity, 100 times higher data transmission rate, 1/5 lower data processing latency, and 100 times more communication terminals simultaneously connected than LTE systems, so as to achieve further reduction in power consumption and reduction in device cost (see Non Patent Literature 3).

In order to satisfy these requirements, 3GPP has devised 5G standards (see Non Patent Literatures 4 to 23).

As NR access schemes, Orthogonal Frequency Division Multiplexing (OFDM) is used for downlink, and OFDM and Discrete Fourier Transform-spread-OFDM (DFT-s-OFDM) is used for uplink. In addition, similarly to LTE and LTE-A, 5G systems do not include circuit switching and include only a packet communication scheme.

NR allows for the use of higher frequencies than LTE to improve transmission speed and reduce processing delay.

NR, in which higher frequencies than LTE may be used, ensures cell coverage by forming a narrow beam-shaped transmission/reception range (beamforming) and changing the beam direction (beamsweeping).

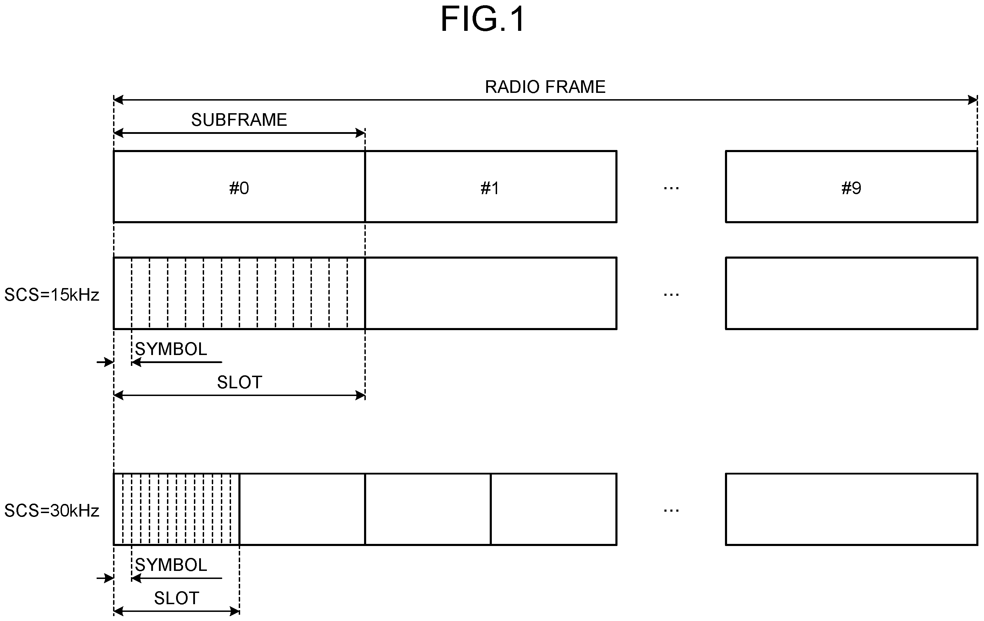

The 3GPP agreements regarding frame configurations for NR systems described in Non Patent Literature 1 (Chapter 5) will be described with reference to FIG. 1. FIG. 1 is an explanatory diagram illustrating a configuration of a radio frame for use in an NR-based communication system. In FIG. 1, one radio frame is 10 ms long. A radio frame is divided into 10 equally sized subframes. In the frame configuration of NR, one or more numerologies, that is, one or more subcarrier spacings (SCS), are supported. Regardless of subcarrier spacing in NR, one subframe is 1 ms long, and one slot is composed of 14 symbols. In addition, the number of slots included in one subframe is one in a subcarrier spacing of 15 kHz, and the number of slots in another subcarrier spacing increases in proportion to subcarrier spacing (see Non Patent Literature 11 (3GPP TS38.211)).

The 3GPP agreements regarding channel configurations for NR systems are described in Non Patent Literature 2 (Chapter 5) and Non Patent Literature 11.

Physical Broadcast Channel (PBCH) is a channel for downlink transmission from base station devices (hereinafter may be simply referred to as "base stations") to communication terminal devices (hereinafter may be simply referred to as "communication terminals") such as mobile terminal devices (hereinafter may be referred to as "mobile terminals" or "terminals"). The PBCH is transmitted together with a downlink synchronization signal.

The downlink synchronization signals in NR are classified as primary synchronization signals (P-SS) and secondary synchronization signals (S-SS). Synchronization signals are transmitted as a synchronization signal burst (hereinafter may be referred to as an SS burst) from the base station at predetermined intervals for a predetermined duration. The SS burst includes a synchronization signal block (hereinafter may be referred to as an SS block) for each beam of the base station.

The base station transmits the SS block of each beam in different beams within the duration of the SS burst. The SS block includes P-SS, S-SS, and PBCH.

Physical Downlink Control Channel (PDCCH) is a channel for downlink transmission from base stations to communication terminals. The PDCCH carries downlink control information (DCI). The DCI includes, for example, resource allocation information of Downlink Shared Channel (DL-SCH), which is one of the transport channels to be described later, resource allocation information of Paging Channel (PCH), which is one of the transport channels to be described later, and hybrid automatic repeat request (HARQ) information related to the DL-SCH. In addition, the DCI may include an uplink scheduling grant. The DCI may include acknowledgement (Ack)/negative acknowledgement (Nack) as a response signal to uplink transmission. In addition, in order to flexibly switch between DL and UL in a slot, the DCI may include a slot configuration indication (SFI). The PDCCH or DCI is also called a L1/L2 control signal.

In NR, a time and frequency domain that is a candidate including the PDCCH is provided. This domain is referred to as a control resource set (CORESET). The communications terminal monitors the CORESET, and acquires the PDCCH.

Physical Downlink Shared Channel (PDSCH) is a channel for downlink transmission from base stations to communication terminals. Downlink shared channel (DL-SCH) and PCH, which are transport channels, are mapped to the PDSCH.

Physical Uplink Control Channel (PUCCH) is a channel for uplink transmission from communication terminals to base stations. The PUCCH carries uplink control information (UCI). The UCI includes Ack/Nack which is a response signal to the downlink transmission, channel state information (CSI), scheduling request (SR), and the like. The CSI includes rank indicator (RI), precoding matrix indicator (PMI), and channel quality indicator (CQI) report. The RI is rank information of a channel matrix in multiple input multiple output (MIMO). The PMI is information of a precoding weight matrix for use in MIMO. The CQI is quality information indicating the quality of received data or channel quality. The UCI may be carried by the PUSCH described below. The PUCCH or UCI is also called a L1/L2 control signal.

Physical Uplink Shared Channel (PUSCH) is a channel for uplink transmission from communication terminals to base stations. To the PUSCH, Uplink Shared Channel (UL-SCH) is mapped as one of the transport channels.

Physical Random Access Channel (PRACH) is a channel for uplink transmission from communication terminals to base stations. The PRACH carries a random access preamble.

Downlink reference signals (RS) are known as symbols for NR-based communication systems. The following four types of downlink reference signals are defined: Data demodulation reference signals (DM-RS) which are UE-specific reference signals, phase tracking reference signals (PT-RS), positioning reference signals (PRS), and channel state information reference signals (CSI-RS). The measurement of the physical layer of the communication terminal includes reference signal received power (RSRP) measurement and reference signal received quality (RSRQ) measurement.

Similarly, uplink reference signals are known as symbols for NR-based communication systems. The following three types of uplink reference signals are defined: Demodulation reference signals (DM-RS), phase tracking reference signals (PT-RS), and sounding reference signals (SRS).

The transport channels described in Non Patent Literature 2 (Chapter 5) will be described. Among the downlink transport channels, Broadcast Channel (BCH) is broadcast to the entire coverage of the base station (cell). The BCH is mapped to Physical Broadcast Channel (PBCH).

Retransmission control by HARQ is applied to Downlink Shared Channel (DL-SCH). The DL-SCH can be broadcast to the entire coverage of the base station (cell). The DL-SCH supports dynamic or semi-static resource allocation. Semi-static resource allocation is also called semi-persistent scheduling. The DL-SCH supports discontinuous reception (DRX) at communication terminals in order to reduce the power consumption of the communication terminals. The DL-SCH is mapped to the physical downlink shared channel (PDSCH).

Paging Channel (PCH) supports DRX at communication terminals so that the power consumption of the communication terminals can be reduced. The PCH is required to be broadcast to the entire coverage of the base station (cell). The PCH is mapped to physical resources such as the physical downlink shared channel (PDSCH) dynamically available for traffic.

Retransmission control by HARQ is applied to Uplink Shared Channel (UL-SCH) among the uplink transport channels. The UL-SCH supports dynamic or semi-static resource allocation. Semi-static resource allocation is also called configured grant. The UL-SCH is mapped to Physical Uplink Shared Channel (PUSCH).

Random Access Channel (RACH) is limited to control information. The RACH has a risk of collision. The RACH is mapped to Physical Random Access Channel (PRACH).

HARQ will be described. HARQ is a technology for improving the communication quality of transmission paths by combining automatic repeat request (ARQ) and forward error correction. HARQ is advantageous for transmission paths with changing communication quality because error correction effectively functions through retransmission. In particular, further improvement in quality can be obtained through retransmission by combining the reception result of the first transmission and the reception result of the retransmission.

An example of a retransmission method will be described. If the reception side cannot correctly decode the received data, in other words, if a cyclic redundancy check (CRC) error occurs (CRC=NG), then "Nack" is transmitted from the reception side to the transmission side. Upon receiving "Nack", the transmission side retransmits the data. If the reception side can correctly decode the received data, in other words, if no CRC error occurs (CRC=OK), then "Ack" is transmitted from the reception side to the transmission side. Upon receiving "Ack", the transmission side transmits the next data.

Another example of a retransmission method will be described. In a case where a CRC error occurs on the reception side, a retransmission request is made from the reception side to the transmission side. The retransmission request is made by toggling of a new data indicator (NDI). Upon receiving the retransmission request, the transmission side retransmits the data. In a case where a CRC error does not occur on the reception side, the retransmission request is not made. In a case where the transmission side does not receive the retransmission request for a predetermined period of time, it is considered that a CRC error has not occurred on the reception side.

The logical channels described in Non Patent Literature 1 (Chapter 6) will be described. Broadcast Control Channel (BCCH) is a downlink channel for broadcasting system control information. The BCCH, which is a logical channel, is mapped to a transport channel: broadcast channel (BCH) or downlink shared channel (DL-SCH).

Paging Control Channel (PCCH) is a downlink channel for transmitting a change in paging information and system information. The PCCH, which is a logical channel, is mapped to Paging Channel (PCH), which is a transport channel.

Common Control Channel (CCCH) is a channel for transmitting control information between communication terminals and base stations. The CCCH is used when a communication terminal does not have an RRC connection with the network. In downlink, the CCCH is mapped to the downlink shared channel (DL-SCH), which is a transport channel. In the uplink direction, the CCCH is mapped to the uplink shared channel (UL-SCH), which is a transport channel.

Dedicated Control Channel (DCCH) is a channel for transmitting dedicated control information between communication terminals and the network on a one-to-one basis. The DCCH is used when a communication terminal has an RRC connection with the network. The DCCH is mapped to the uplink shared channel (UL-SCH) in uplink, and is mapped to the downlink shared channel (DL-SCH) in downlink.

Dedicated Traffic Channel (DTCH) is a channel for one-to-one communication with communication terminals for transmitting user information. The DTCH exists in both uplink and downlink. The DTCH is mapped to the uplink shared channel (UL-SCH) in uplink, and is mapped to the downlink shared channel (DL-SCH) in downlink.

The position tracking of a communication terminal is performed in units of segments each consisting of one or more cells. The position tracking is performed to track the position of the communication terminal even in the idle state and call the communication terminal, in other words, enable the communication terminal to receive a call. Segments for the position tracking of the communication terminal are referred to as tracking areas (TA).

NR supports calling of a communication terminal in a range the unit of which is an area smaller than the tracking area. This range is referred to as a RAN notification area (RNA). Paging of the communication terminal in the RRC_INACTIVE state, which will be described later, is performed in this range.

NR employs Carrier Aggregation (CA), in which two or more Component Carriers (CCs) are aggregated in order to support wider transmission bandwidths up to 100 MHz. CA is described in Non Patent Literature 1.

When CA is configured, a communication terminal, or a UE, has only one RRC connection with a network (NW). In the RRC connection, one serving cell provides NAS mobility information and security input. This cell is referred to as a Primary Cell (PCell). Depending on UE capabilities, a Secondary Cell (SCell) can be configured to form a set of serving cells together with the PCell. A set of serving cells consisting of one PCell and one or more SCells is configured for one UE.

3GPP has Dual Connectivity (abbreviated as DC), in which a UE is connected to and communicates with two base stations in order to further increase the communication capacity. DC is described in Non Patent Literatures 1 and 22.

One of the base stations that perform dual connectivity (DC) may be referred to as a "master base station (MN)", and the other may be referred to as a "secondary base station (SN)". The serving cells configured by the master base station may be collectively referred to as a master cell group (MCG), and the serving cells configured by the secondary base station may be collectively referred to as a secondary cell group (SCG). In the DC, a primary cell in the MCG or the SCG is referred to as a special cell (SpCell or SPCell). A special cell in the MCG is referred to as a PCell, and a special cell in the SCG is referred to as a primary SCG cell (PSCell).

In addition, NR reduces the power consumption of a UE by allowing a base station to set a part of the carrier frequency band (hereinafter may be referred to as a bandwidth part (BWP)) in advance for the UE so that the UE can perform transmission and reception with the base station using the BWP.

In addition, 3GPP has developed a framework for supporting services (or applications) using sidelink (SL) communication (also referred to as PC5 communication) in both the Evolved Packet System (EPS) to be described later and the 5G core system (see Non Patent Literatures 1, 2, and 26 to 28). In SL communication, communication is performed between terminals. Examples of services using SL communication include vehicle-to-everything (V2X) services and proximity-based services. In SL communication, not only direct communication between terminals but also communication between UE and NW via a relay has been proposed (See Non Patent Literatures 26 and 28).

Physical channels for use in SL (see Non Patent Literatures 2 and 11) will be described. Physical Sidelink Broadcast Channel (PSBCH) carries information related to the system and synchronization and is transmitted from UE.

Physical Sidelink Control Channel (PSCCH) carries control information from UE for sidelink communication and V2X sidelink communication.

Physical Sidelink Shared Channel (PSSCH) carries data from UE for sidelink communication and V2X sidelink communication.

Physical Sidelink Feedback Channel (PSFCH) carries HARQ feedback on the sidelink from the UE that has received the PSSCH transmission to the UE that has transmitted the PSSCH.

Transport channels for use in SL (see Non Patent Literature 1) will be described. Sidelink Broadcast Channel (SL-BCH) has a predetermined transport format and is mapped to the physical channel PSBCH.

Sidelink Shared Channel (SL-SCH) supports broadcast transmission. The SL-SCH supports both UE autonomous resource selection and resource allocation scheduled by the base station. There is a collision risk in the UE autonomous resource selection, and there is no collision when the UE is allocated individual resources by the base station. The SL-SCH also supports dynamic link adaptation by changing transmission power, modulation, and coding. The SL-SCH is mapped to the physical channel PSSCH.

Logical channels for use in SL (see Non Patent Literature 2) will be described. Sidelink Broadcast Control Channel (SBCCH) is a sidelink channel for broadcasting sidelink system information from one UE to other UEs. The SBCCH is mapped to the transport channel SL-BCH.

Sidelink Traffic Channel (STCH) is a one-to-many sidelink traffic channel for transmitting user information from one UE to other UEs. The STCH is used only by UEs having sidelink communication capability and UEs having V2X sidelink communication capability. One-to-one communication between two UEs having sidelink communication capability is also implemented by the STCH. The STCH is mapped to the transport channel SL-SCH.

Sidelink Control Channel (SCCH) is a control channel for sidelink for transmitting control information from one UE to other UEs. The SCCH is mapped to the transport channel SL-SCH.

In LTE, SL communication is applied only to broadcast. In NR, SL communication is designed to support unicast and groupcast in addition to broadcast (see Non Patent Literature 27 (3GPP TS23.287)).

Unicast communication and groupcast communication in SL support HARQ feedback (Ack/Nack), CSI reporting, and the like.

In addition, 3GPP has developed Integrated Access and Backhaul (IAB), in which both an access link that is a link between UE and a base station and a backhaul link that is a link between base stations are wirelessly performed (see Non Patent Literatures 2, 20, and 29).

3GPP has developed several new technologies. For example, extension of mobility control technology in NR has been proposed (Non Patent Literature 30). Conventionally, control technology involving RRC (sometimes referred to as L3 mobility) is used for cell-level mobility, in other words, inter-cell (inter-cell) mobility. However, in order to reduce the delay time or the like at the time of mobility, it has been proposed that inter-cell mobility is performed by mobility control not involving RRC (sometimes referred to as L1/L2 mobility).

### Citation List

### Non Patent Literature

Non Patent Literature 1: 3GPP TS36.300 V16.7.0
Non Patent Literature 2: 3GPP TS38.300 V16.8.0
Non Patent Literature 3: "Scenarios, requirements and KPIs for 5G mobile and wireless system", ICT-317669-METIS/D1.1
Non Patent Literature 4: 3GPP TR23.799 V14.0.0
Non Patent Literature 5: 3GPP TR38.801 V14.0.0
Non Patent Literature 6: 3GPP TR38.802 V14.2.0
Non Patent Literature 7: 3GPP TR38.804 V14.0.0
Non Patent Literature 8: 3GPP TR38.912 V16.0.0
Non Patent Literature 9: 3GPP RP-172115
Non Patent Literature 10: 3GPP TS23.501 V17.3.0
Non Patent Literature 11: 3GPP TS38.211 V17.0.0
Non Patent Literature 12: 3GPP TS38.212 V17.0.0
Non Patent Literature 13: 3GPP TS38.213 V17.0.0
Non Patent Literature 14: 3GPP TS38.214 V17.0.0
Non Patent Literature 15: 3GPP TS38.321 V16.7.0
Non Patent Literature 16: 3GPP TS38.322 V16.2.0
Non Patent Literature 17: 3GPP TS38.323 V16.6.0
Non Patent Literature 18: 3GPP TS37.324 V16.3.0
Non Patent Literature 19: 3GPP TS38.331 V16.7.0
Non Patent Literature 20: 3GPP TS38.401 V16.8.0
Non Patent Literature 21: 3GPP TS38.413 V16.8.0
Non Patent Literature 22: 3GPP TS37.340 V16.8.0
Non Patent Literature 23: 3GPP TS38.423 V16.8.0
Non Patent Literature 24: 3GPP TS38.305 V16.7.0
Non Patent Literature 25: 3GPP TS23.273 V17.3.0
Non Patent Literature 26: 3GPP TR23.703 V12.0.0
Non Patent Literature 27: 3GPP TS23.287 V17.2.0
Non Patent Literature 28: 3GPP TS23.303 V17.0.0
Non Patent Literature 29: 3GPP TS38.340 V16.5.0
Non Patent Literature 30: 3GPP RP-212710
Non Patent Literature 31: 3GPP RP-201831
Non Patent Literature 32: IETF RFC 4960:"Stream Control Transmission Protocol"
Non Patent Literature 33: Umesh et al., "O-RAN Fronthaul Specification Overview", NTT DOCOMO Technical Journal pp. 43-55, Vol.27, No.1, Apr. 2019
Non Patent Literature 34: 3GPP RP-213700

### Summary of Invention

### Problem to be solved by the Invention

In 5G wireless access systems, communication for a wide variety of services is performed. In order to enable such communication, for example, communication using smart repeaters, support of high-speed mobile terminals, and support of a large number of transmission reception points (TRPs) and the like have also been developed. Such systems are required to reduce the delay time, overhead, and interruption time in mobility control. In order to meet such a requirement, it has been proposed that control of smart repeaters and inter-cell mobility control (L1/L2 mobility) are performed by control technology not involving RRC in 3GPP (Non Patent Literatures 30 and 34). However, no specific method has been disclosed for implementing control of smart repeaters or for executing inter-cell mobility control with L1/L2 signaling. This leads to a problem that control of smart repeaters and inter-cell mobility control cannot be implemented, and the delay time of control or the like cannot be reduced.

In view of the above problem, one of the objects of the present disclosure is to realize a communication system that can control smart repeaters.

### Means to Solve the Problem

A communication system according to the present disclosure comprises: a base station to be applied to a fifth-generation wireless access system; and a smart repeater having a beamforming function and to perform relay processing between the base station and a communication terminal or between a communication terminal connected to the base station and another communication terminal, wherein the base station transmits information related to a beam used in the relay processing to the smart repeater, and the smart repeater forms a beam based on the information related to the beam received from the base station and performs the relay processing.

### Effects of the Invention

The present disclosure can realize a communication system that can control smart repeaters.

Objects, features, aspects, and advantages of the present disclosure will become more apparent from the following detailed description and the accompanying drawings.

### Brief Description of Drawings

FIG. 1 is an explanatory diagram illustrating a configuration of a radio frame for use in an NR-based communication system.
FIG. 2 is a block diagram illustrating an overall configuration of an NR-based communication system 210 discussed in 3GPP.
FIG. 3 is a diagram illustrating a DC configuration with a base station connected to an NG core.
FIG. 4 is a block diagram illustrating a configuration of the mobile terminal 202 illustrated in FIG. 2.
FIG. 5 is a block diagram illustrating a configuration of the base station 213 illustrated in FIG. 2.
FIG. 6 is a block diagram illustrating a configuration of a 5GC unit.
FIG. 7 is a flowchart schematically illustrating the procedure from a cell search to an idle operation performed by a communication terminal (UE) in an NR-based communication system.
FIG. 8 is a diagram illustrating an exemplary configuration of a cell in the NR system.
FIG. 9 is a connection configuration diagram illustrating an exemplary connection configuration of terminals in the SL communication.
FIG. 10 is a connection configuration diagram illustrating an exemplary connection configuration of a base station supporting Integrated Access and Backhaul.
FIG. 11 is a diagram illustrating an example of an instruction from the base station to the repeater and the transmission and reception operation of the repeater according to the instruction according to the first embodiment.
FIG. 12 is a diagram illustrating another example of an instruction from the base station to the repeater and the transmission and reception operation of the repeater according to the instruction according to the first embodiment.
FIG. 13 is a diagram illustrating an example of allocation of SS block identifiers to the beams that can be configured by the base station and the repeater according to the third modification of the first embodiment.
FIG. 14 is a diagram illustrating another example of allocation of SS block identifiers to the beams that can be configured by the base station and the repeater according to the third modification of the first embodiment.
FIG. 15 is a diagram illustrating another example of allocation of SS block identifiers to the beams that can be configured by the base station and the repeater according to the third modification of the first embodiment.
FIG. 16 is a diagram illustrating another example of allocation of SS block identifiers to the beams that can be configured by the base station and the repeater according to the third modification of the first embodiment.
FIG. 17 is a diagram illustrating an example of a connection sequence of the repeater to the base station according to the second embodiment.
FIG. 18 is a diagram illustrating an example of the C-plane protocol stack of the base station (gNB) and the repeater according to the third embodiment.
FIG. 19 is a diagram illustrating an example of the C-plane protocol stack of the AMF, the base station (gNB), and the repeater according to the third embodiment.
FIG. 20 is a diagram illustrating an example of the C-plane protocol stack of the base station (gNB) and the repeater according to the third embodiment.
FIG. 21 is a diagram illustrating an example of the C-plane protocol stack of the base station (gNB), the repeater, and the UE according to the third embodiment.
FIG. 22 is a diagram illustrating another example of the C-plane protocol stack of the base station (gNB), the repeater, and the UE according to the third embodiment.
FIG. 23 is a diagram illustrating an example of the U-plane protocol stack of the base station (gNB), the repeater, and the UE according to the third embodiment.
FIG. 24 is a conceptual diagram of inter-cell L1/L2 mobility.
FIG. 25 is a diagram illustrating the first half of a sequence indicating an example of an inter-cell L1/L2 mobility processing method in the DU according to the fourth embodiment.
FIG. 26 is a diagram illustrating the second half of a sequence indicating an example of an inter-cell L1/L2 mobility processing method in the DU according to the fourth embodiment.
FIG. 27 is a diagram illustrating the first half of a sequence indicating an example of an inter-cell L1/L2 mobility processing method including a cell change between different DUs according to the fourth embodiment.
FIG. 28 is a diagram illustrating the second half of a sequence indicating an example of an inter-cell L1/L2 mobility processing method including a cell change between different DUs according to the fourth embodiment.
FIG. 29 is a sequence diagram illustrating an example of an inter-cell L1/L2 mobility processing method between different DUs according to the fourth embodiment.
FIG. 30 is a sequence diagram illustrating another example of an inter-cell L1/L2 mobility processing method between different DUs according to the fourth embodiment.
FIG. 31 is a sequence diagram illustrating an example of a method for notification of the UE identifier in the T-PCell in inter-cell L1/L2 mobility between different DUs according to the fifth embodiment.
FIG. 32 is a sequence diagram illustrating another example of a method for notification of the UE identifier in the T-PCell in inter-cell L1/L2 mobility between different DUs according to the fifth embodiment.
FIG. 33 is a sequence diagram illustrating another example of a method for notification of the UE identifier in the T-PCell in inter-cell L1/L2 mobility between different DUs according to the fifth embodiment.
FIG. 34 is a sequence diagram illustrating an example of a data transmission method in inter-cell L1/L2 mobility processing according to the sixth embodiment.
FIG. 35 is a sequence diagram illustrating another example of a data transmission method in inter-cell L1/L2 mobility processing according to the sixth embodiment.
FIG. 36 is a sequence diagram illustrating another example of a data transmission method in inter-cell L1/L2 mobility processing according to the sixth embodiment.
FIG. 37 is a sequence diagram illustrating another example of a data transmission method in inter-cell L1/L2 mobility processing according to the sixth embodiment.

### Description of Embodiments

### First Embodiment.

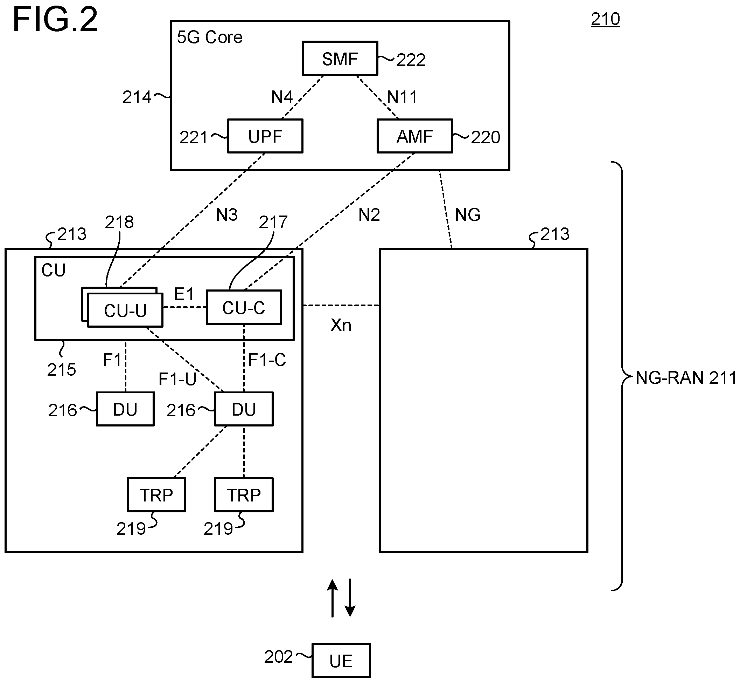

FIG. 2 is a block diagram illustrating an overall configuration of an NR-based communication system 210 discussed in 3GPP. Below is a description of FIG. 2. The wireless access network is referred to as a Next Generation Radio Access Network (NG-RAN) 211. A mobile terminal device (hereinafter referred to as a "mobile terminal or user equipment (UE)") 202 which is a communication terminal device can wirelessly communicate with a base station device (hereinafter referred to as an "NR base station (NG-RAN NodeB (gNB)") 213, and transmits and receives signals by wireless communication. The NG-RAN 211 includes one or more NR base stations 213.

Here, "communication terminal devices" include not only mobile terminal devices such as mobile phone terminal devices that can move but also non-moving devices such as sensors. In the following description, a "communication terminal device" may be simply referred to as a "communication terminal".

Access Stratum (AS) protocol is terminated between the UE 202 and the NG-RAN 211. As the AS control protocol, for example, Radio Resource Control (RRC), Service Data Adaptation Protocol (SDAP), Packet Data Convergence Protocol (PDCP), Radio Link Control (RLC), Medium Access Control (MAC), or Physical layer (PHY) is used. RRC is used in control plane (hereinafter may be referred to as C-plane), SDAP is used in user plane (hereinafter may be referred to as U-plane) and PDCP, MAC, RLC, and PHY are used in both C-plane and U-plane.

The control protocol "Radio Resource Control (RRC)" between the UE 202 and the NR base station 213 performs broadcast, paging, RRC connection management, and the like. The states of the NR base station 213 and the UE 202 in RRC are classified as RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has an RRC connection and can transmit and receive data to and from the network. In RRC_CONNECTED, handover (HO), measurement of a neighbor cell, and the like are performed. In RRC_INACTIVE, the connection between a 5G core unit 214 and the NR base station 213 is maintained, and meanwhile system information (SI) broadcast, paging, cell re-selection, mobility, and the like are performed.

The gNB 213 is connected via an NG interface to the 5G core unit (hereinafter may be referred to as the "5GC unit") 214 including an Access and Mobility Management Function (AMF), a Session Management Function (SMF), a User Plane Function (UPF), or the like. Control information and/or user data is communicated between the gNB 213 and the 5GC unit 214. The NG interface is a generic term for the N2 interface between the gNB 213 and the AMF 220, the N3 interface between the gNB 213 and the UPF 221, the N11 interface between the AMF 220 and the SMF 222, and the N4 interface between the UPF 221 and the SMF 222. A plurality of 5GC units 214 may be connected to one gNB 213. Different gNBs 213 are connected by an Xn interface, and control information and/or user data is communicated between the gNBs 213.

The 5GC unit 214 is a higher-level device, specifically, a higher-level node, and performs control of connection between the NR base station 213 and the mobile terminal (UE) 202, distribution of a paging signal to one or more NR base stations (gNBs) 213 and/or LTE base stations (E-UTRAN NodeB: eNB), and the like. The 5GC unit 214 also performs mobility control in the idle state. The 5GC unit 214 manages a tracking area list when the mobile terminal 202 is in the idle state, inactive state, and active state. The 5GC unit 214 starts the paging protocol by transmitting a paging message to a cell belonging to a tracking area in which the mobile terminal 202 is registered.

The gNB 213 may configure one or more cells. In a case where one gNB 213 configures a plurality of cells, every single cell is configured to be able to communicate with the UE 202.

The gNB 213 may be divided into a central unit (hereinafter may be referred to as CU) 215 and a distributed unit (hereinafter may be referred to as DU) 216. One CU 215 is configured in the gNB 213. One or more DUs 216 are configured in the gNB 213. One DU 216 constitutes one or more cells. The CU 215 is connected to the DU 216 by an F1 interface, and control information and/or user data is communicated between the CU 215 and the DU 216. The F1 interface includes an F1-C interface and an F1-U interface. The CU 215 is responsible for the functions of the RRC, SDAP, and PDCP protocols, and the DU 216 is responsible for the functions of the RLC, MAC, and PHY protocols. One or more transmission reception points (TRPs) 219 may be connected to the DU 216. The TRP 219 transmits and receives wireless signals to and from the UE.

The CU 215 may be divided into a CU for C-plane (CU-C) 217 and a CU for U-plane (CU-U) 218. One CU-C 217 is configured in the CU 215. One or more CU-Us 218 are configured in the CU 215. The CU-C 217 is connected to the CU-U 218 by an E1 interface, and control information is communicated between the CU-C 217 and the CU-U 218. The CU-C 217 is connected to the DU 216 via the F1-C interface, and control information is communicated between the CU-C 217 and the DU 216. The CU-U 218 is connected to the DU 216 by the F1-U interface, and user data is communicated between the CU-U 218 and the DU 216.

In the 5G-based communication system, the Unified Data Management (UDM) function and the Policy Control Function (PCF) described in Non Patent Literature 10 (3GPP TS23.501) may be included. The UDM and/or the PCF may be included in the 5GC unit 214 in FIG. 214.

In the 5G-based communication system, the Location Management Function (LMF) described in Non Patent Literature 24 (3GPP TS38.305) may be provided. The LMF may be connected to the base station via the AMF as disclosed in Non Patent Literature 25 (3GPP TS23.273).

In the 5G-based communication system, the Non-3GPP Interworking Function (N3IWF) described in Non Patent Literature 10 (3GPP TS23.501) may be included. The N3IWF may terminate the Access Network (AN) with the UE in non-3GPP access with the UE.

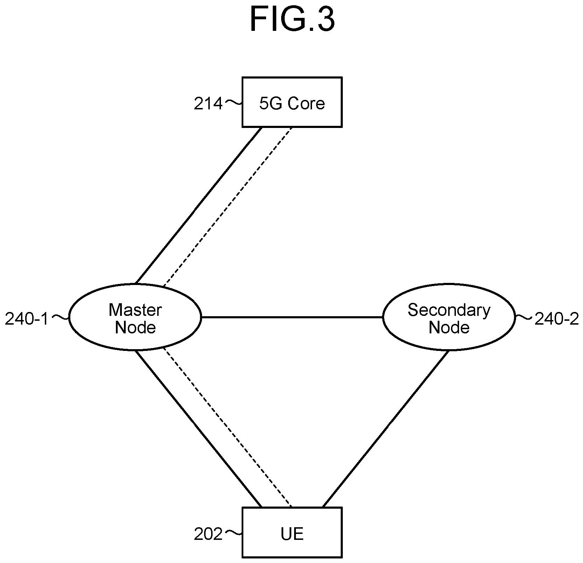

FIG. 3 is a diagram illustrating a dual connectivity (DC) configuration for connection to an NG core. In FIG. 3, a solid line indicates a U-Plane connection, and a broken line indicates a C-Plane connection. In FIG. 3, a master base station 240-1 may be a gNB or an eNB. In addition, a secondary base station 240-2 may be a gNB or an eNB. For example, in FIG. 3, a DC configuration in which the master base station 240-1 is a gNB and the secondary base station 240-2 is an eNB may be referred to as NG-EN-DC. Although FIG. 3 illustrates an example in which the U-Plane connection between the 5GC unit 214 and the secondary base station 240-2 is established via the master base station 240-1, the U-Plane connection may be directly established between the 5GC unit 214 and the secondary base station 240-2. Further, in FIG. 3, instead of the 5GC unit 214, an evolved packet core (EPC) which is a core network connected to the LTE system or the LTE-A system may be connected to the master base station 240-1. The U-Plane connection between the EPC and the secondary base station 240-2 may be directly established.

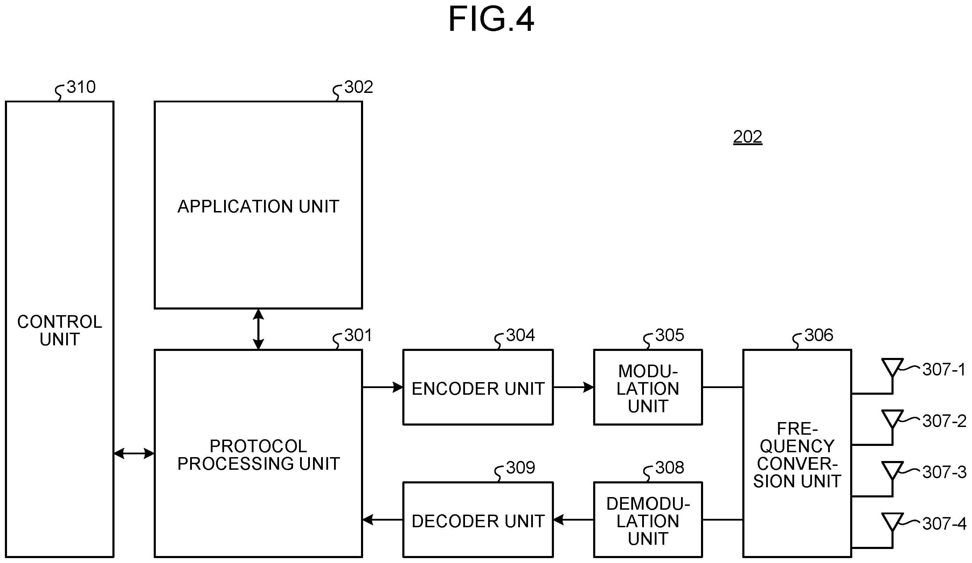

FIG. 4 is a block diagram illustrating a configuration of the mobile terminal 202 illustrated in FIG. 2. A transmission process in the mobile terminal 202 illustrated in FIG. 4 will be described. First, control data from a control unit 310 and user data from an application unit 302 are sent to a protocol processing unit 301. Control data and user data may be buffered. A buffer for control data and user data may be provided in the control unit 310, in the application unit 302, or in the protocol processing unit 301. The protocol processing unit 301 performs protocol processing such as SDAP, PDCP, RLC, and MAC, for example, determining a transmission destination base station in DC or the like, adding a header in each protocol, and the like. The data that has undergone the protocol processing is passed to an encoder unit 304 and subjected to encoding such as error correction. Some data may be directly output from the protocol processing unit 301 to a modulation unit 305 without being subjected to encoding. The data encoded by the encoder unit 304 is subjected to modulation in the modulation unit 305. The modulation unit 305 may perform precoding for MIMO. The modulated data is converted into a baseband signal and then output to a frequency conversion unit 306 to be converted into a wireless transmission frequency. Thereafter, the transmission signals are transmitted from antennas 307-1 to 307-4 to the base station 213. FIG. 4 illustrates the case where the number of antennas is four, but the number of antennas is not limited to four.

A reception process in the mobile terminal 202 is executed as follows. Wireless signals from the base station 213 are received by the antennas 307-1 to 307-4. The reception signal is converted from the wireless reception frequency into a baseband signal in the frequency conversion unit 306, and demodulation is performed in a demodulation unit 308. The demodulation unit 308 may perform weight calculation and multiplication. The demodulated data is passed to a decoder unit 309, and decoding such as error correction is performed. The decoded data is passed to the protocol processing unit 301, and protocol processing such as MAC, RLC, PDCP, and SDAP, for example, an operation such as removal of a header in each protocol, is performed. Among the data that has undergone the protocol processing, the control data is passed to the control unit 310, and the user data is passed to the application unit 302.

A series of processes of the mobile terminal 202 is controlled by the control unit 310. Therefore, the control unit 310 is also connected to the respective units 302 and 304 to 309, which is not illustrated in FIG. 4.

Each unit of the mobile terminal 202, for example, the control unit 310, the protocol processing unit 301, the encoder unit 304, and the decoder unit 309, is implemented by, for example, processing circuitry including a processor and a memory. For example, the control unit 310 is implemented by the processor executing a program in which a series of processes of the mobile terminal 202 is described. The program in which a series of processes of the mobile terminal 202 is described is stored in the memory. The memory is exemplified by a nonvolatile or volatile semiconductor memory such as a random access memory (RAM), a read only memory (ROM), or a flash memory. Each unit of the mobile terminal 202, for example, the control unit 310, the protocol processing unit 301, the encoder unit 304, and the decoder unit 309, may be implemented by dedicated processing circuitry such as a field programmable gate array (FPGA), an application specific integrated circuit (ASIC), or a digital signal processor (DSP). In FIG. 4, the number of antennas used for transmission and the number of antennas used for reception by the mobile terminal 202 may be the same or different.

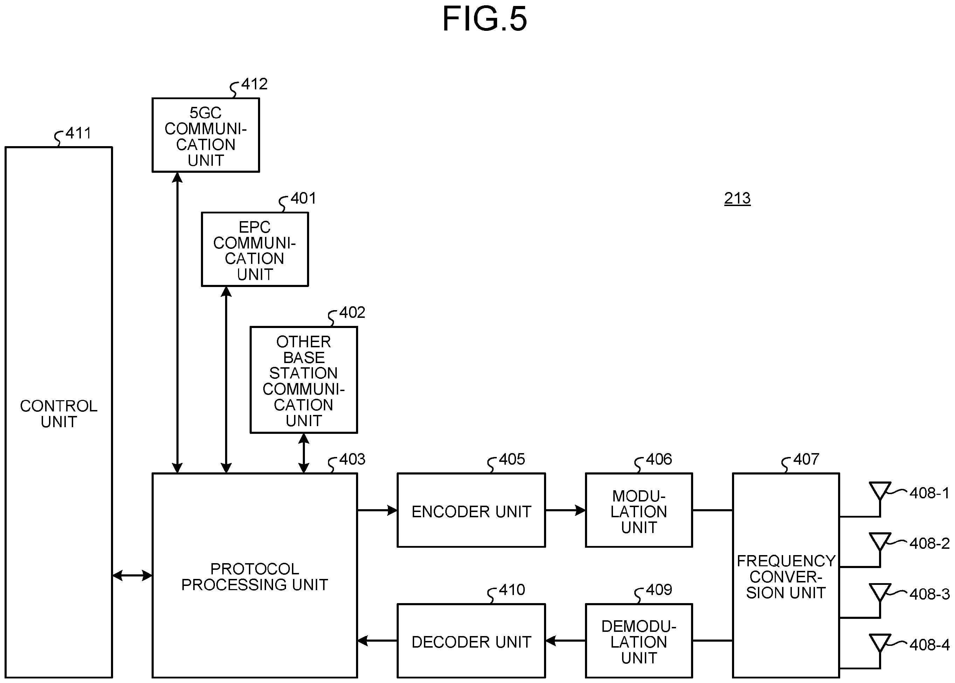

FIG. 5 is a block diagram illustrating a configuration of the base station 213 illustrated in FIG. 2. A transmission process in the base station 213 illustrated in FIG. 5 will be described. An EPC communication unit 401 transmits and receives data between the base station 213 and the EPC. A 5GC communication unit 412 transmits and receives data between the base station 213 and the 5GC (such as the 5GC unit 214). An other base station communication unit 402 transmits and receives data to and from other base stations. The EPC communication unit 401, the 5GC communication unit 412, and the other base station communication unit 402 each exchange information with a protocol processing unit 403. Control data from a control unit 411 and user data and control data from the EPC communication unit 401, the 5GC communication unit 412, and the other base station communication unit 402 are sent to the protocol processing unit 403. Control data and user data may be buffered. A buffer for control data and user data may be provided in the control unit 411, in the EPC communication unit 401, in the 5GC communication unit 412, or in the other base station communication unit 402.

The protocol processing unit 403 performs protocol processing such as SDAP, PDCP, RLC, and MAC, for example, routing transmission data in DC or the like, adding a header in each protocol, and the like. The data that has undergone the protocol processing is passed to an encoder unit 405 and subjected to encoding such as error correction. Some data may be directly output from the protocol processing unit 403 to a modulation unit 406 without being subjected to encoding. In addition, data may be sent from the protocol processing unit 403 to the other base station communication unit 402. For example, in the DC, data sent from the 5GC communication unit 412 or the EPC communication unit 401 may be sent to another base station, for example, a secondary base station, via the other base station communication unit 402. The encoded data is subjected to modulation in the modulation unit 406. The modulation unit 406 may perform precoding for MIMO. The modulated data is converted into a baseband signal and then output to a frequency conversion unit 407 to be converted into a wireless transmission frequency. Thereafter, the transmission signals are transmitted from antennas 408-1 to 408-4 to one or more mobile terminals 202. FIG. 5 illustrates the case where the number of antennas is four, but the number of antennas is not limited to four.

A reception process in the base station 213 is executed as follows. Wireless signals from one or more mobile terminals 202 are received by the antennas 408-1 to 408-4. The reception signal is converted from the wireless reception frequency into a baseband signal in the frequency conversion unit 407, and demodulation is performed in a demodulation unit 409. The demodulated data is passed to a decoder unit 410, and decoding such as error correction is performed. The decoded data is passed to the protocol processing unit 403, and protocol processing such as MAC, RLC, PDCP, and SDAP, for example, an operation such as removal of a header in each protocol, is performed. Among the data that has undergone the protocol processing, the control data is passed to the control unit 411, the 5GC communication unit 412, the EPC communication unit 401, or the other base station communication unit 402, and the user data is passed to the 5GC communication unit 412, the EPC communication unit 401, or the other base station communication unit 402. Data sent from the other base station communication unit 402 may be sent to the 5GC communication unit 412 or the EPC communication unit 401. The data may be, for example, uplink data that is sent to the 5GC communication unit 412 or the EPC communication unit 401 via another base station in the DC.

A series of processes of the base station 213 is controlled by the control unit 411. Therefore, the control unit 411 is also connected to the respective units 401, 402, 405 to 410, and 412, which is not illustrated in FIG. 5.

Each unit of the base station 213, for example, the control unit 411, the protocol processing unit 403, the 5GC communication unit 412, the EPC communication unit 401, the other base station communication unit 402, the encoder unit 405, and the decoder unit 410, is implemented by processing circuitry including a processor and a memory, or dedicated processing circuitry such as FPGA, ASIC, or DSP, similarly to the mobile terminal 202 described above. In FIG. 5, the number of antennas used for transmission and the number of antennas used for reception by the base station 213 may be the same or different.

As an example of the configuration of the CU 215 illustrated in FIG. 2, one including a DU communication unit may be used except for the encoder unit 405, the modulation unit 406, the frequency conversion unit 407, the antennas 408-1 to 408-4, the demodulation unit 409, and the decoder unit 410 illustrated in FIG. 5. The DU communication unit is connected to the protocol processing unit 403. The protocol processing unit 403 in the CU 215 performs protocol processing such as PDCP and SDAP.

As an example of the configuration of the DU 216 illustrated in FIG. 2, a configuration in which a CU communication unit is provided may be used except for the EPC communication unit 401, the other base station communication unit 402, and the 5GC communication unit 412 illustrated in FIG. 5. The CU communication unit is connected to the protocol processing unit 403. The protocol processing unit 403 in the DU 216 performs protocol processing such as PHY, MAC, and RLC.

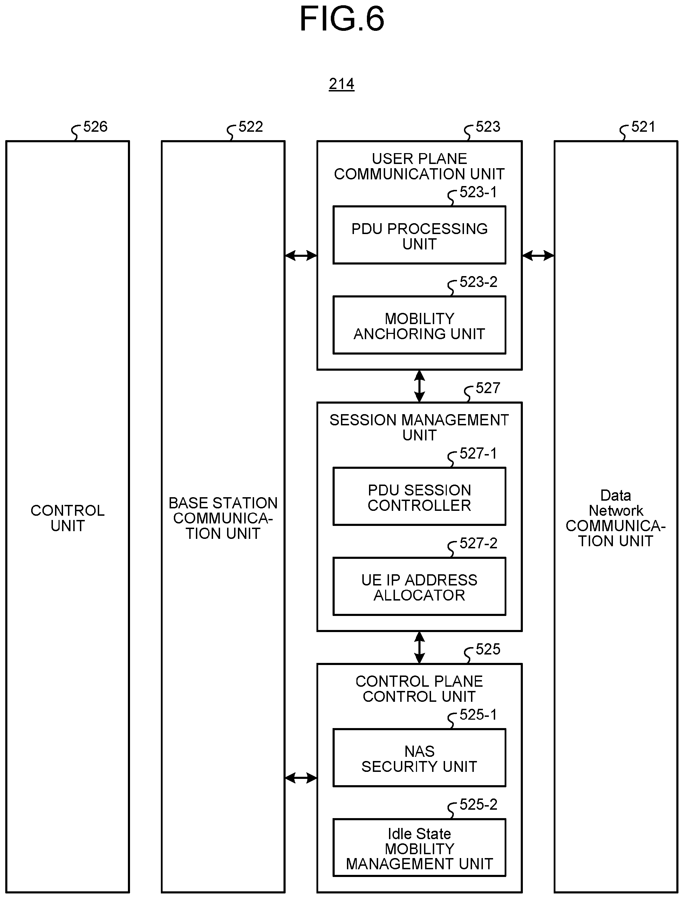

FIG. 6 is a block diagram illustrating a configuration of a 5GC unit. FIG. 6 depicts the configuration of the 5GC unit 214 illustrated in FIG. 2 described above. FIG. 6 depicts a case where an AMF configuration, an SMF configuration, and a UPF configuration are included in the 5GC unit 214 illustrated in FIG. 2. In the example illustrated in FIG. 6, the AMF may have the function of a control plane control unit 525, the SMF may have the function of a session management unit 527, and the UPF may have the functions of a user plane communication unit 523 and a Data Network communication unit 521. The Data Network communication unit 521 transmits and receives data between the 5GC unit 214 and the Data Network. A base station communication unit 522 transmits and receives data by means of the NG interface between the 5GC unit 214 and the base station 213. The user data sent from the Data Network is passed from the Data Network communication unit 521 to the base station communication unit 522 via the user plane communication unit 523, and transmitted to one or more base stations 213. The user data sent from the base station 213 is passed from the base station communication unit 522 to the Data Network communication unit 521 via the user plane communication unit 523, and transmitted to the Data Network.

The control data sent from the base station 213 is passed from the base station communication unit 522 to the control plane control unit 525. The control plane control unit 525 may pass the control data to the session management unit 527. Control data may be sent from the Data Network. The control data sent from the Data Network may be sent from the Data Network communication unit 521 to the session management unit 527 via the user plane communication unit 523. The session management unit 527 may send the control data to the control plane control unit 525.

The user plane control unit 523 includes a PDU processing unit 523-1, a mobility anchoring unit 523-2, and the like, and performs general processing on the user plane (hereinafter may be referred to as U-Plane.). The PDU processing unit 523-1 processes data packets, for example, transmits and receives packets to and from the Data Network communication unit 521 and transmits and receives packets to and from the base station communication unit 522. The mobility anchoring unit 523-2 is responsible for anchoring a data path at the time of mobility of the UE.

The session management unit 527 manages a PDU session provided between the UE and the UPF. The session management unit 527 includes a PDU session controller 527-1, a UE IP address allocator 527-2, and the like. The PDU session controller 527-1 manages a PDU session between the mobile terminal 202 and the 5GC unit 214. The UE IP address allocator 527-2 performs, for example, allocation of an IP address to the mobile terminal 202.

The control plane control unit 525 includes a NAS security unit 525-1, an Idle State mobility management unit 525-2, and the like, and performs general processing on the control plane (hereinafter may be referred to as C-Plane). The NAS security unit 525-1 ensures security of Non-Access Stratum (NAS) messages and the like. The Idle State mobility management unit 525-2 performs, for example: mobility management in the idle state (also referred to as RRC_IDLE state or simply as idle); generation and control of paging signals in the idle state; and addition, deletion, update, and search of tracking areas and management of tracking area lists for one or more mobile terminals 202 under control.

A series of processes of the 5GC unit 214 is controlled by a control unit 526. Therefore, the control unit 526 is connected to the respective units 521 to 523, 525, and 527, which is not illustrated in FIG. 6. Similarly to the control unit 310 of the mobile terminal 202 described above, each unit of the 5GC unit 214 is implemented by, for example, processing circuitry including a processor and a memory, or by dedicated processing circuitry such as FPGA, ASIC, or DSP.

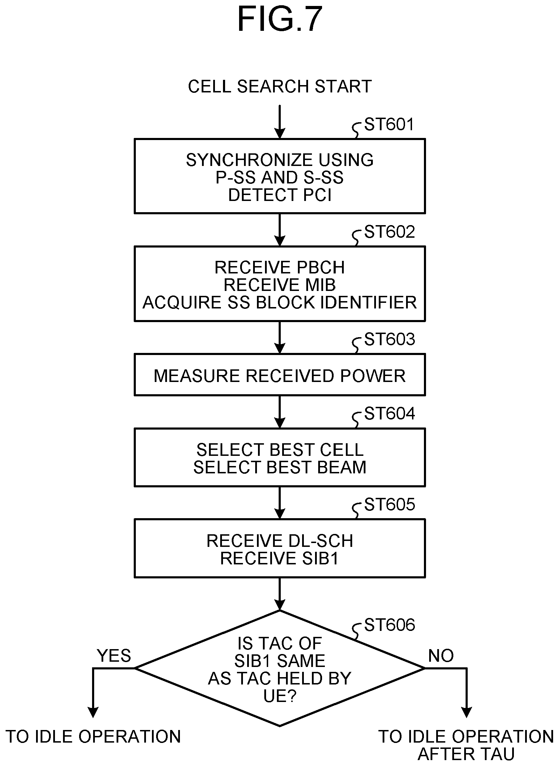

Next, an example of a cell search method in a communication system will be described. FIG. 7 is a flowchart schematically illustrating the procedure from a cell search to an idle operation performed by a communication terminal (UE) in an NR-based communication system. Starting the cell search, the communication terminal synchronizes the slot timing and the frame timing using the primary synchronization signal (P-SS) and the secondary synchronization signal (S-SS) transmitted from a nearby base station in step ST601.

The P-SS and the S-SS are collectively referred to as synchronization signals (SS). The synchronization signals (SS) are allocated synchronization codes corresponding one-to-one to physical cell identifiers (PCIs) allocated to cells. The number of PCIs available is 1008. The communication terminal performs synchronization using the 1008 PCIs and detects (identifies) the PCI of a synchronized cell.

The communication terminal receives the PBCH in step ST602 for the next synchronized cell. A Master Information Block (MIB) including cell configuration information is mapped to the BCCH on the PBCH. Therefore, the MIB is obtained by receiving the PBCH and obtaining the BCCH. Examples of the information of the MIB include system frame number (SFN), scheduling information of system information block (SIB) 1, subcarrier spacing of SIB 1 or the like, and information of DM-RS position.

Further, the communication terminal acquires an SS block identifier from the PBCH. A part of the bit string of the SS block identifier is included in the MIB. The remaining part of the bit string is included in an identifier that is used for sequence generation of the DM-RS accompanying the PBCH. The communication terminal acquires the SS block identifier by using the MIB included in the PBCH and the DM-RS sequence accompanying the PBCH.

Next, in step ST603, the communication terminal measures the received power of the SS block.

Next, in step ST604, the communication terminal selects, from among the one or more cells detected by step ST603, a cell having the best reception quality, e.g. a cell having the highest received power, or the best cell. In addition, the communication terminal selects a beam having the best reception quality, for example, a beam having the highest received power of the SS block, that is, the best beam. For the selection of the best beam, for example, the received power of the SS block for each SS block identifier is used.

Next, in step ST605, the communication terminal receives the DL-SCH based on the scheduling information of SIB1 included in the MIB, and obtains System Information Block (SIB) 1 in the broadcast information BCCH. The SIB1 includes information related to access to the cell, configuration information of the cell, and scheduling information of other SIBs (SIBk; k is an integer of ≥2). The SIB1 also includes a Tracking Area Code (TAC).

Next, in step ST606, the communication terminal compares the TAC of the SIB1 received in step ST605 with the TAC portion of the Tracking Area Identity (TAI) in the tracking area list already held by the communication terminal. The tracking area list is also referred to as the TAI list. The TAI is identification information for identifying the tracking area, and includes a Mobile Country Code (MCC), a Mobile Network Code (MNC), and a Tracking Area Code (TAC). The MCC is a country code. The MNC is a network code. The TAC is the code number of the tracking area.

If the result of the comparison in step ST606 shows that the TAC received in step ST605 is the same as the TAC included in the tracking area list, the communication terminal starts the idle operation in the cell. If the comparison shows that the TAC received in step ST605 is not included in the tracking area list, the communication terminal requests, through the cell, the core network (EPC) including the MME and the like to change the tracking area for performing Tracking Area Update (TAU).

A device constituting the core network (hereinafter may be referred to as a "core-network-side device") updates the tracking area list based on the identification number (such as UE-ID) of the communication terminal transmitted from the communication terminal together with the TAU request signal. The core-network-side device transmits the updated tracking area list to the communication terminal. The communication terminal rewrites (updates) the TAC list held by the communication terminal based on the received tracking area list. Thereafter, the communication terminal starts the idle operation in the cell.

Next, an example of a random access method in a communication system will be described. In the random access, four-step random access and two-step random access are used. In addition, for each of the four-step random access and the two-step random access, there are contention-based random access, that is, random access in which timing collision with another mobile terminal may occur and contention-free random access without collision.

An example of a contention-based four-step random access method will be described. As a first step, the mobile terminal transmits a random access preamble to the base station. The random access preamble may be selected by the mobile terminal from a predetermined range, or may be individually assigned to mobile terminals and provided as notification from the base station.

As a second step, the base station transmits a random access response to the mobile terminal. The random access response includes the uplink scheduling information that is used in a third step, the terminal identifier that is used in the uplink transmission in the third step, and the like.

As the third step, the mobile terminal performs uplink transmission to the base station. The mobile terminal uses the information acquired in the second step for uplink transmission. As a fourth step, the base station notifies the mobile terminal of the presence or absence of contention resolution. The mobile terminal that has been notified that there is no contention ends the random access processing. The mobile terminal that has been notified that there is a contention performs the processing again from the first step.

The contention-free four-step random access method is different from the contention-based four-step random access method in the following points. That is, prior to the first step, the base station pre-allocates a random access preamble and uplink scheduling to the mobile terminal. In addition, the notification of the presence or absence of contention resolution in the fourth step is unnecessary.

An example of a contention-based two-step random access method will be described. As a first step, the mobile terminal performs random access preamble transmission and uplink transmission to the base station. As a second step, the base station notifies the mobile terminal of the presence or absence of contention. The mobile terminal that has been notified that there is no contention ends the random access processing. The mobile terminal that has been notified that there is a contention performs the processing again from the first step.

The collision-free two-step random access method is different from the contention-based two-step random access method in the following points. That is, prior to the first step, the base station pre-allocates a random access preamble and uplink scheduling to the mobile terminal. In addition, in a second step, the base station transmits a random access response to the mobile terminal.

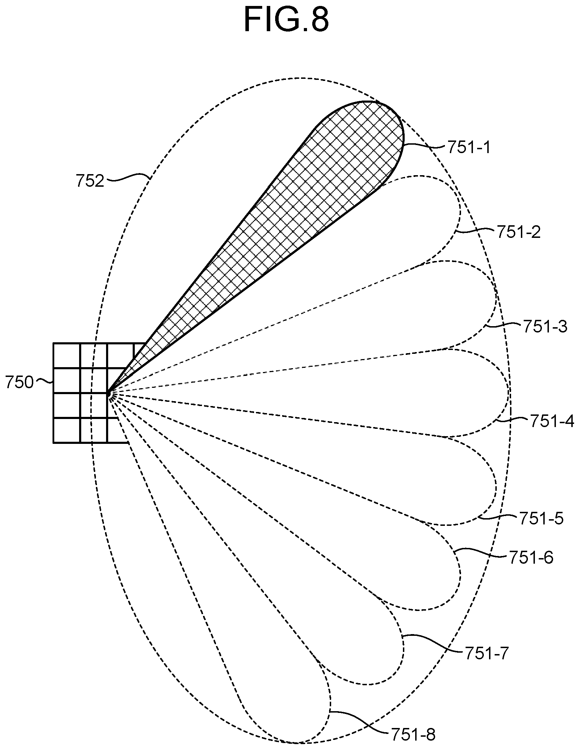

FIG. 8 illustrates an exemplary configuration of a cell in NR. In the NR cell, narrow beams are formed and transmitted in different directions. In the example illustrated in FIG. 8, a base station 750 performs transmission and reception with mobile terminals using a beam 751-1 in a certain time. In another time, the base station 750 performs transmission and reception with mobile terminals using a beam 751-2. Similarly, the base station 750 performs transmission and reception with mobile terminals using one or more of beams 751-3 to 751-8. In this way, the base station 750 configures a wide-range cell 752.

FIG. 8 illustrates an example in which the number of beams the base station 750 uses is eight, but the number of beams may be different from eight. In addition, the number of beams the base station 750 simultaneously uses is one in the example illustrated in FIG. 8, but may be two or more.

The concept of quasi-colocation (QCL) is used to identify the beam (see Non Patent Literature 14 (3GPP TS 38.214)). That is, the beam is identified by information indicating which reference signal (e.g. SS Block, CSI-RS) beam can be regarded as the same as the beam. The information may include information related to the type of information about a viewpoint from which beams can be regarded as the same, for example, information related to Doppler shift, Doppler shift spread, average delay, average delay spread, and spatial Rx parameters (see Non Patent Literature 14 (3GPP TS 38.214)).

3GPP supports sidelink (SL) for device-to-device (D2D) communication and vehicle-to-vehicle (V2V) communication (see Non Patent Literature 1 and Non Patent Literature 16). SL is defined by the PC5 interface.

SL communication is designed to support PC5-S signaling in order to support unicast and groupcast in addition to broadcast (see Non Patent Literature 27 (3GPP TS23.287)). For example, PC5-S signaling is performed to establish a link for performing SL, i.e. PC5 communication. This link is implemented in the V2X layer and is also referred to as the layer 2 link.

In addition, SL communication is designed to support RRC signaling (see Non Patent Literature 27 (3GPP TS23.287)). RRC signaling in SL communication is also referred to as PC5 RRC signaling. Examples of proposed techniques include notification of UE capabilities between UEs that perform PC5 communication, and notification of AS layer settings for performing V2X communication using PC5 communication.

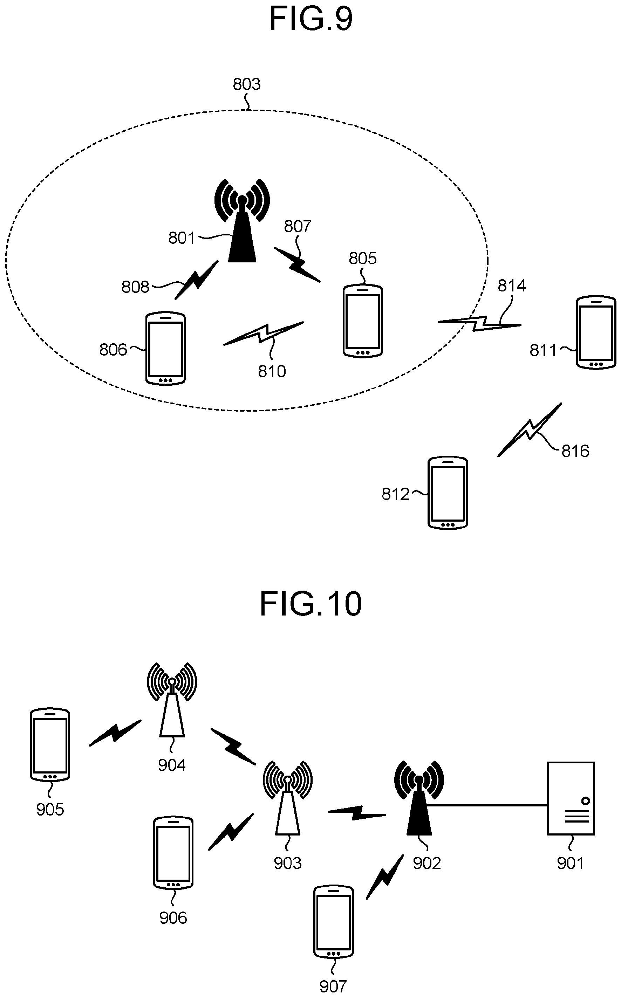

FIG. 9 illustrates an exemplary connection configuration of mobile terminals in the SL communication. In the example illustrated in FIG. 9, a UE 805 and a UE 806 exist within a coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 exist outside the coverage 803. SL communication 814 is performed between the UE 805 and the UE 811. In addition, SL communication 816 is performed between the UE 811 and the UE 812.

As an example of communication between the UE and the NW via a relay in the SL communication, the UE 805 illustrated in FIG. 9 relays communication between the UE 811 and the base station 801.

A configuration similar to that in FIG. 4 may be used for the UE that performs relay. The relay processing in the UE will be described with reference to FIG. 4. The relay processing by the UE 811 in the communication from the UE 805 to the base station 801 will be described. Wireless signals from the base station UE 811 are received by the antennas 307-1 to 307-4. The reception signal is converted from the wireless reception frequency into a baseband signal in the frequency conversion unit 306, and demodulation is performed in the demodulation unit 308. The demodulation unit 308 may perform weight calculation and multiplication. The demodulated data is passed to the decoder unit 309, and decoding such as error correction is performed. The decoded data is passed to the protocol processing unit 301, and protocol processing such as MAC and RLC for use in communication with the UE 811, for example, an operation such as removal of a header in each protocol, is performed. In addition, protocol processing such as RLC and MAC for use in communication with the base station 801, for example, adding a header in each protocol, is performed. In the protocol processing unit 301 of the UE 811, protocol processing of the PDCP and the SDAP may be performed. The data that has undergone the protocol processing is passed to the encoder unit 304 and subjected to encoding such as error correction. Some data may be directly output from the protocol processing unit 301 to the modulation unit 305 without being subjected to encoding. The data encoded by the encoder unit 304 is subjected to modulation in the modulation unit 305. The modulation unit 305 may perform precoding for MIMO. The modulated data is converted into a baseband signal and then output to the frequency conversion unit 306 to be converted into a wireless transmission frequency. Thereafter, the transmission signals are transmitted from antennas 307-1 to 307-4 to the base station 801.

Although the example of the relay by the UE 811 in the communication from the UE 805 to the base station 801 has been described above, similar processing is also used in the relay of the communication from the base station 801 to the UE 811.

5G base stations can support Integrated Access and Backhaul (IAB) (see Non Patent Literature 2 and 20). A base station (hereinafter may be referred to as an IAB base station) that supports IAB is constituted by an IAB donor CU that is a CU of a base station that operates as an IAB donor providing the IAB function, an IAB donor DU that is a DU of a base station that operates as an IAB donor, and an IAB node that is connected to the IAB donor DU and to UE using a wireless interface. An F1 interface is provided between the IAB node and the IAB donor CU (see Non Patent Literature 2).

An example connection of the IAB base station is illustrated in FIG. 10. An IAB donor CU 901 is connected to an IAB donor DU 902. An IAB node 903 is connected to the IAB donor DU 902 using a wireless interface. The IAB node 903 is connected to an IAB node 904 using a wireless interface. That is, multi-stage connection of IAB nodes may be performed. A UE 905 is connected to the IAB node 904 using a wireless interface. A UE 906 may be connected to the IAB node 903 using a wireless interface, or a UE 907 may be connected to the IAB donor DU 902 using a wireless interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

In the connection between the IAB donor DU and the IAB node and the connection between the IAB nodes, a Backhaul Adaptation Protocol (BAP) layer is provided (see Non Patent Literature 29). The BAP layer performs operations such as routing of received data to the IAB donor DU and/or the IAB node, mapping to the RLC channel, and the like (see Non Patent Literature 29).

As an example of the configuration of the IAB donor CU, a configuration similar to that of the CU 215 is used.

As an example of the configuration of the IAB donor DU, a configuration similar to that of the DU 216 is used. The protocol processing unit of the IAB donor DU performs processing of the BAP layer, for example, adding a BAP header in downlink data, routing to the IAB node, removing a BAP header in uplink data, and the like.

As an example of the configuration of the IAB node, a configuration without the EPC communication unit 401, the other base station communication unit 402, and the 5GC communication unit 412 illustrated in FIG. 5 may be used.

The transmission/reception processing in the IAB node will be described with reference to FIGS. 5 and 10. The transmission/reception processing of the IAB node 903 in communication between the IAB donor CU 901 and the UE 905 will be described. In the uplink communication from the UE 905 to the IAB donor CU 901, a wireless signal from the IAB node 904 is received by the antenna 408 (some or all of the antennas 408-1 to 408-4). The reception signal is converted from the wireless reception frequency into a baseband signal in the frequency conversion unit 407, and demodulation is performed in a demodulation unit 409. The demodulated data is passed to a decoder unit 410, and decoding such as error correction is performed. The decoded data is passed to the protocol processing unit 403, and protocol processing such as MAC and RLC for use in communication with the IAB node 904, for example, an operation such as removal of a header in each protocol, is performed. In addition, routing to the IAB donor DU 902 using the BAP header is performed, and protocol processing such as RLC and MAC for use in communication with the IAB donor DU 902, for example, an operation of adding a header in each protocol, is performed. The data that has undergone the protocol processing is passed to the encoder unit 405 and subjected to encoding such as error correction. Some data may be directly output from the protocol processing unit 403 to the modulation unit 406 without being subjected to encoding. The encoded data is subjected to modulation in the modulation unit 406. The modulation unit 406 may perform precoding for MIMO. The modulated data is converted into a baseband signal and then output to the frequency conversion unit 407 to be converted into a wireless transmission frequency. Thereafter, transmission signals are transmitted from the antennas 408-1 to 408-4 to the IAB donor DU 902. Similar processing is performed in the downstream communication from the IAB donor CU 901 to the UE 905.

The IAB node 904 also performs transmission/reception processing similar to that of the IAB node 903. In the protocol processing unit 403 of the IAB node 903, as the processing of the BAP layer, for example, processing such as adding a BAP header in uplink communication, routing to the IAB node 904, and removing a BAP header in downstream communication, is performed.

A smart repeater (hereinafter may be simply referred to as a "repeater") may be used for communication (hereinafter may be referred to as an access link (AL) (see Non Patent Literature 31)) between the base station and the UE. The repeater may have a plurality of beams. The repeater may receive and amplify a signal from a source and transmit the amplified signal to a destination (this operation may be referred to as AL transmission and reception). The repeater may use a beam for AL transmission and reception.

The base station may control the repeater. The base station may transmit a control signal to the repeater (a link used for control signal transmission between the base station and the repeater may be referred to as a fronthaul link (FL) (see Non Patent Literature 31)). L1/L2 signaling may be used for the control signal.

However, no specific method for the above operation has been disclosed. This leads to a problem that control of the repeater cannot be realized from the base station, and communication between the base station and the UE via the repeater cannot be realized.

The first embodiment discloses a method for solving this problem.

In the method, the base station instructs the repeater in advance. The instruction from the base station to the repeater may be performed prior to AL transmission and reception, for example, downlink transmission from the base station to the UE and uplink transmission from the UE to the base station, or may be performed prior to sidelink communication between terminals. The repeater may perform the AL transmission and reception in response to the instruction. The AL transmission and reception may be performed on the U-plane data, on the control information, or on the reference signal.

The AL may include communication between UEs, or may include communication between base stations, for example, between an IAB donor DU and/or an IAB node and an IAB node. The AL transmission and reception in the repeater may be performed for the above-described AL, for example, transmission and reception between the base station and the UE, may be performed for transmission and reception between UEs, or may be performed for transmission and reception between base stations, for example, between an IAB donor DU and/or an IAB node and an IAB node. The AL transmission and reception in the repeater may be performed for the downlink, the uplink, or the sidelink.

L1/L2 signaling may be used for the instruction. A new DCI may be provided. A new DCI may be used for the instruction. Consequently, for example, it is possible to prevent malfunction related to another UE receiving the DCI directed to the repeater. As another example, MAC signaling may be used for the instruction. Consequently, for example, a large amount of information can be transmitted from the base station to the repeater. As another example, RRC signaling may be used for the instruction. Consequently, for example, a larger amount of information can be transmitted from the base station to the repeater.

As examples of information included in the instruction, (1) to (14) below are disclosed.
(1) Information for identifying the transmission device and/or the reception device in AL transmission and reception.
(2) Information related to connection between the transmission device and the reception device in AL transmission and reception.
(3) Information related to time resource.
(4) Information related to frequency resource.
(5) Information related to the beam used for AL transmission and reception.
(6) Information related to transmission/reception angle.
(7) Information related to the gain of transmission and reception of the repeater.
(8) Information related to the transmission power of the repeater.
(9) Information related to ON/OFF of the AL transmission and reception operation of the repeater.
(10) Information related to the direction of the repeater's AL transmission and reception link.
(11) Information related to the signal/channel that the repeater transmits and receives.
(12) Information related to default operation.
(13) Information related to transmission in the repeater or the like.
(14) Combinations of (1) to (13).

The above-described information item (1) may include the identifier of the UE. The identifier of the UE may include, for example, a cell radio network temporary identifier (C-RNTI). This enables, for example, the repeater to quickly recognize the UE that is the partner of the AL transmission and reception. As another example, the information may include the identifier of a base station, may include the identifier of a DU, may include the identifier of a TRP, may include the identifier of a cell, or may include the identifier of an IAB node. This enables, for example, the repeater to quickly recognize the base station, the DU, and/or the IAB node to be the partner of the AL transmission and reception.

The above-described information item (2) may include, for example, information related to a PDU session used by the UE. The repeater may recognize the transmission source device and the destination device by using the information. Consequently, for example, the size of signaling from the base station to the repeater can be reduced.

The above-described information item (3) may include information related to the time at which the AL transmission and reception is started, information related to the duration of the AL transmission and reception, or information related to the time at which the AL transmission and reception ends. The foregoing information may include any one or a combination of radio frame number, subframe number, slot number, and symbol number. As another example, the above-described information item (3) may include information related to the time from the instruction to the start of the AL transmission and reception. The information may include any one or a combination of radio frame number, subframe number, slot number, and symbol number. As another example, the above-described information item (3) may include information related to the slot length or information related to the subcarrier spacing (SCS). The repeater may acquire information related to the timing at which AL transmission and reception is performed using the information. The repeater may perform the AL transmission and reception in the time resource included in the above-described information item (3). The repeater may stop the AL transmission and reception or may perform the default AL transmission and reception outside the time resource included in the above-described information item (3). This enables, for example, the repeater to execute AL transmission and reception at an appropriate timing, and the power consumption of the repeater can be reduced.

The above-described information item (4) may include information related to the lower end of the frequency resource (e.g. subcarrier) in which the AL transmission and reception is performed, or may include information related to the upper end of the frequency resource. The foregoing information may include information related to frequency, information related to subcarrier number, or information related to physical resource block (PRB). The above-described information item (4) may include information related to the range of the frequency resource. The information related to the range may include information related to frequency width, information related to the number of subcarriers, or information related to the number of PRBs. The above-described information item (4) may include information related to the frequency band in which the frequency resource is included. The information related to the frequency band may include information related to carrier band or information related to BWP. The repeater may acquire information related to the frequency used for the AL transmission and reception using the information. The repeater may perform the transmission/reception operation for the AL transmission and reception in the frequency resource included in the above-described information item (4). The repeater may not perform the transmission/reception operation for the AL transmission and reception outside the frequency resource included in the above-described information item (4). For example, the repeater can execute AL transmission and reception in an appropriate frequency range, and the power consumption of the repeater can be reduced.

The above-described information item (5) may include information related to the beam used by the base station, the DU, the TRP, and/or the IAB node (hereinafter may be collectively referred to as the base station or the like), may include information related to the beam used by the repeater in transmission and reception with the base station or the like, or may include information related to the beam used by the repeater in transmission and reception with the UE. As another example, the above-described information item (5) may include information related to the beam used by the repeater for the reception operation, or may include information related to the beam used by the repeater for the transmission operation. The foregoing information related to the beam may include, for example, the identifier of the SS block or the identifier of the CSI-RS. The foregoing identifier may be, for example, the identifier of the SS block and/or the CSI-RS included in a beam having a QCL relationship with the beam received by the repeater. The above-described information item (5) may include information related to the RS transmitted by the repeater. The information related to the RS may include, for example, information related to the setting of the CSI-RS transmitted by the repeater or information related to the setting of the SS block transmitted by the repeater. The repeater may use the information to direct the beam to the device to be the partner of the AL transmission and reception. This enables, for example, communication between the base station or the like and the UE via the repeater.

The above-described information item (5) may include information related to the beam width. The repeater may use the information to determine the beam width. For example, a narrow beam may be used in the transmission from the repeater to the base station, or a wide beam may be used in the transmission from the repeater to a frequently moving UE. This enables, for example, reliable communication with small power consumption.

The above-described information item (6) may include information related to the reception angle in the repeater or information related to the transmission angle in the repeater. The foregoing information related to the angle may include, for example, information related to the azimuth angle or information related to the elevation angle. The foregoing information related to the angle may be given as an angle relative to a predetermined direction. The predetermined direction may be an absolute direction, for example, a horizontal north direction, or a relative direction, for example, a direction from the repeater toward the base station. The repeater may perform the transmission/reception operation for the AL transmission and reception using the information. The repeater may not receive radio waves from outside the reception angle included in the above-described information item (6). Consequently, for example, performance (for example, Signal to Interference Noise Ratio (SINR)) in transmission and reception via the repeater can be improved.

The above-described information item (6) may include information related to the reflected wave sending angle at the repeater. The information may be included, for example, in a case where a reflector is used instead of the repeater, or may be included in a case where a reconfigurable intelligent surface (RIS) is used. Consequently, for example, the coverage of the base station can be expanded while reducing the power consumption in the communication system.

The above-described information item (7) may include information related to the reception gain at the repeater, information related to the transmission gain at the repeater, or information related to the gain from the reception end to the transmission end at the repeater. The repeater may perform the amplification operation in the AL transmission and reception using the information. This enables, for example, the repeater to execute AL transmission and reception using power necessary and sufficient for AL transmission and reception between the base station and the like and the UE, and as a result, interference with other base stations and the like and/or UEs can be reduced.

The above-described information item (7) may include information related to the attenuation amount in the repeater. The information related to the attenuation amount may include information related to the attenuation amount in the reception unit, information related to the attenuation amount in the transmission unit, or information related to the attenuation amount from the transmission end to the reception end. Consequently, for example, in a case where the power used for AL transmission and reception is large, the power can be reduced, and as a result, interference with peripheral communication system devices can be reduced. In addition, in a case where a relay device that does not perform amplification, for example, a reflector or a RIS, is used, it is possible to control power for AL transmission and reception.

The repeater may transmit a signal to the base station or the like and/or the UE by using the information related to (8) described above. Consequently, for example, it is possible to reduce interference with other base stations and the like and/or UEs while enabling transmission and reception between the base station and the like and the UE.

The repeater may start the AL transmission and reception operation or stop the AL transmission and reception operation using the above-described information item (9). Consequently, for example, power consumption in the repeater can be reduced.

The above-described information item (10) may include, for example, information related to the uplink, information related to the downlink, or information related to the sidelink. The repeater may determine the source and/or the destination in the AL transmission and reception using the information. Consequently, for example, the amount of signaling from the base station to the repeater can be reduced.

The above-described information item (11) may include, for example, information indicating that the signal/channel is individually transmitted to the UE, or may include information indicating that the signal/channel is commonly transmitted to the UE. The above-described information item (11) may include information indicating data (e.g. U-plane data), information indicating a control signal, or information indicating a reference signal. The above-described information item (11) may include, for example, information for identifying the signal/channel (e.g. PDCCH, PUSCH, and SS block). The repeater may perform the AL transmission and reception operation using the information. Consequently, for example, complexity in the control of the repeater can be avoided.

The above-described information item (11) may include information related to repetition of the foregoing signal/channel. The information may include, for example, information related to the number of repetitions. The repeater may perform AL transmission and reception a plurality of times using the information. This enables, for example, signal/channel repetition via the repeater in the communication system.

The above-described information item (12) may include, for example, information related to the AL transmission and reception operation of the repeater in the absence of an instruction from the base station. The information may be, for example, information indicating that the AL transmission and reception of the repeater is turned OFF, information indicating that the repeater performs the reception operation using a predetermined beam, or information indicating that the repeater performs the transmission operation using a predetermined beam. The repeater may perform the default AL transmission and reception operation using the information. Consequently, for example, the amount of signaling for AL transmission and reception can be reduced.

The above-described information item (13) may include, for example, information related to transmittance with respect to incident power, information related to transmitted power, information related to reflectance with respect to incident power, or information related to reflected power. The information may be used in, for example, the reflector and/or the RIS. For example, the device such as the repeater may control itself using the information. Consequently, for example, even when the control of the attenuation amount is complicated, complexity in the control of the reflected power can be avoided.

The above-described information items (1) to (14) may be provided for each UE or may be provided for each signal/channel. For example, the beam used for transmission of the SS block may be different from the beam used for transmission of the PDCCH and/or the PDSCH. Consequently, for example, in the communication system, it is possible to improve coverage while securing power efficiency.

The repeater may acquire all the information necessary for the AL transmission and reception using an instruction from the base station. Consequently, for example, complexity in the processing in the repeater can be avoided.

As another example, the repeater may perform the AL transmission and reception partially based on determination by itself. For example, the repeater may determine the destination beam or the transmission power by using the information related to the UE provided as notification from the base station. Consequently, for example, the amount of signaling from the base station to the repeater can be reduced.

The instruction from the base station to the repeater may be performed sequentially. The repeater may stop the AL transmission and reception operation or perform the default AL transmission and reception after the end of the access link transmission and reception according to the instruction.

The base station may notify the UE of information related to the beam. Information indicating that communication is performed via the repeater may be provided as notification. The information related to the beam may include information related to the beam used by the repeater, for example, the beam directed by the repeater to the UE. The information related to the beam used by the repeater may include transmission configuration indication (TCI)-state information (see Non Patent Literature 14 (3GPP TS 38.214)) of the cell covered by the repeater. The information of the TCI-state may include information related to the CSI-RS and/or SS block transmitted by the repeater, or may include information related to the QCL. The notification from the base station to the UE may be given using RRC signaling, for example, RRC reconfiguration, may be performed using MAC signaling, or may be performed using L1/L2 signaling. The UE may use the notification to acquire information related to the beam used by the repeater. This enables, for example, the UE to communicate with the base station via the repeater.

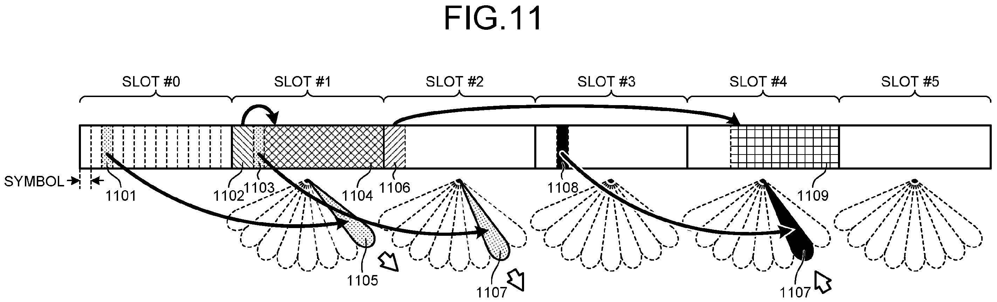

FIG. 11 is a diagram illustrating an example of an instruction from the base station to the repeater and the AL transmission and reception operation of the repeater according to the instruction. FIG. 11 illustrates a case where sequential control is performed for each slot from the base station to the repeater. FIG. 11 illustrates an example in which the repeater is used for communication between the base station and UE#1 and communication between the base station and UE#2. The beams illustrated in FIG. 11 indicate only beams used for transmission and reception with the UE, and beams used for transmission and reception with the base station are omitted. In the example illustrated in FIG. 11, UE#1 resides in beam 1105 and UE#2 resides in beam 1107.

In the example illustrated in FIG. 11, the PDCCH is allocated three symbols from the head of each slot. The control signal from the base station to the repeater is allocated to the third symbol from the head in the PDCCH. The control signal from the base station to the repeater is reflected in the next slot.

In slot #0 illustrated in FIG. 11, control signal 1101 is transmitted from the base station to the repeater. The control signal 1101 includes information indicating that downlink signal transmission using the beam 1105 is performed.

In slot #1 illustrated in FIG. 11, the repeater receives PDCCH 1102 and PDSCH 1104 from the base station and transmits the PDCCH and the PDSCH to UE#1 using the beam 1105. The PDCCH 1102 includes scheduling allocation information relevant to the PDSCH 1104. UE#1 receives the PDCCH 1102 and PDSCH1104 transmitted from the repeater.

In slot #1, control signal 1103 is transmitted from the base station to the repeater. The control signal 1103 includes information indicating that downlink signal transmission using the beam 1107 is performed.

In slot #2 illustrated in FIG. 11, the repeater receives PDCCH 1106 from the base station and transmits the PDCCH to UE#2 using the beam 1107. The PDCCH 1106 includes information of the uplink grant relevant to PUSCH 1109 in slot #4. UE#2 receives the PDCCH 1106 transmitted from the repeater and acquires information of the uplink grant.

In slot #2, no control signal is transmitted from the base station to the repeater. In response to no control signal being included in slot #2, the repeater does not transmit a downlink signal to UE#1 or UE#2 or receive an uplink signal from UE#1 or UE#2 in slot #3.

In slot #3 illustrated in FIG. 11, control signal 1108 is transmitted from the base station to the repeater. The control signal 1108 includes information indicating that uplink signal transmission using the beam 1107 is performed.

In slot #4 illustrated in FIG. 11, the repeater receives the PUSCH 1109 from UE#2 using the beam 1107 and transmits the PUSCH to the base station.

In slot #4, no control signal is transmitted from the base station to the repeater. In response to no control signal being included in slot #4, the repeater does not transmit a downlink signal to UE#1 or UE#2 or receive an uplink signal from UE#1 or UE#2 in slot #5.

In the example illustrated in FIG. 11, the control signals 1101, 1103, and 1108 from the base station to the repeater may not be transmitted to UE#1 and/or UE#2. Consequently, for example, power consumption of the repeater can be reduced. As another example, the control signal 1103 from the base station to the repeater may be transmitted from the repeater using the beam 1105. Consequently, for example, complexity in the control of the repeater can be avoided.

The foregoing method may be applied when a plurality of beams are used for AL transmission and reception. For example, the foregoing method may be used when different beams are used for the PDCCH and the PDSCH for the same UE, or the foregoing method may be used when different beams are used for the PDCCH and the PUSCH for the same UE. For example, the instruction from the base station to the repeater may include the above-described information items (1) to (14) corresponding to each of the plurality of beams. Consequently, for example, flexibility in the communication system can be improved.

Information related to some of the plurality of beams may be included in the time/frequency domain of control information (e.g. PDCCH) from the base station to the UE. The information related to some beams may be, for example, information related to the beams used for transmission and reception of signals/channels relevant to the control information. The repeater may acquire information related to some of the beams by receiving the time/frequency domain of the control information. Consequently, for example, resources required for the instruction from the base station to the repeater can be distributed, and as a result, resource use efficiency in the communication system can be improved.

As another example of the instruction from the base station to the repeater, the instruction may have continuity. For example, the repeater may continuously perform the AL transmission and reception in response to the instruction.

The instruction may include information related to the cycle. Information related to the offset associated with the cycle may be included. The repeater may perform AL transmission and reception in every cycle. Information related to the duration may be provided in the instruction. The repeater may perform the AL transmission and reception for the duration. The repeater may not perform the AL transmission and reception or may perform the default AL transmission and reception after the elapse of the duration.

A plurality of instructions having continuity may be provided. This enables, for example, transmission and reception between the base station and a plurality of UEs via the repeater.

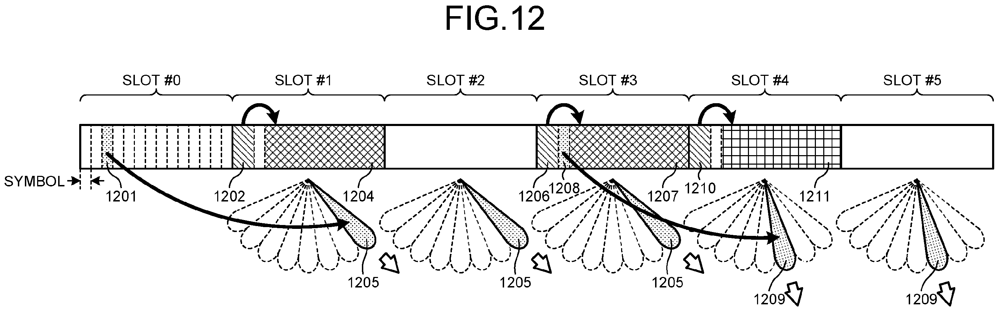

FIG. 12 is a diagram illustrating another example of an instruction from the base station to the repeater and the AL transmission and reception operation of the repeater according to the instruction. FIG. 12 illustrates a case where an instruction having continuity is issued from the base station to the repeater. FIG. 12 illustrates an example in which the repeater is used for communication between the base station and UE#1 and communication between the base station and UE#2. The beams illustrated in FIG. 12 indicate only beams used for transmission and reception with the UE, and beams used for transmission and reception with the base station are omitted. In the example illustrated in FIG. 12, UE#1 resides in beam 1205 and UE#2 resides in beam 1209. FIG. 12 illustrates an example in which the control of the repeater from the base station is reflected in the subsequent slots.

In the example illustrated in FIG. 12, the PDCCH is allocated three symbols from the head of each slot. The control signal from the base station to the repeater is allocated to the third symbol from the head in the PDCCH. The control signal from the base station to the repeater is reflected in the next slot.

In slot #0 illustrated in FIG. 12, control signal 1201 is transmitted from the base station to the repeater. The control signal 1201 includes information indicating that downlink signal transmission using the beam 1205 is performed. The repeater performs a downlink signal transmission operation using the beam 1205 in slot #1 according to the information included in the control signal 1201.

In slot #1 illustrated in FIG. 12, the repeater receives PDCCH 1202 and PDSCH 1204 from the base station and transmits the PDCCH and the PDSCH to UE#1 using the beam 1205. The PDCCH 1202 includes scheduling allocation information relevant to the PDSCH 1204. UE#1 receives the PDCCH 1202 and PDSCH 1204 transmitted from the repeater.

In slot #1, no control signal is transmitted from the base station to the repeater. In response to no control signal being included in slot #1, the repeater continues the downlink signal transmission operation using the beam 1205 in slot #2.

In slot #2 illustrated in FIG. 12, since nothing is transmitted from the base station, the repeater does not perform the downlink transmission using the beam 1205.

In slot #2, no control signal is transmitted from the base station to the repeater. In response to no control signal being included in slot #2, the repeater continues the downlink signal transmission operation using the beam 1205 in slot #3.

In slot #3 illustrated in FIG. 12, the repeater receives PDCCH 1206 and PDSCH 1207 from the base station and transmits the PDCCH and the PDSCH to UE#1 using the beam 1205. The PDCCH 1206 includes scheduling allocation information relevant to the PDSCH 1207. UE#1 receives the PDCCH 1206 and PDSCH 1207 transmitted from the repeater.

In slot #3 illustrated in FIG. 12, control signal 1208 is transmitted from the base station to the repeater. The control signal 1208 includes information indicating that downlink signal transmission using the beam 1209 is performed. The repeater performs a downlink signal transmission operation using the beam 1209 in slot #4 according to the information included in the control signal 1208.

In slot #4 illustrated in FIG. 12, the repeater receives PDCCH 1210 and PDSCH 1211 from the base station and transmits the PDCCH and the PDSCH to UE#2 using the beam 1209. The PDCCH 1210 includes scheduling allocation information relevant to the PDSCH 1211. UE#2 receives PDCCH 1210 and PDSCH1211 transmitted from the repeater.

In slot #4, no control signal is transmitted from the base station to the repeater. In response to no control signal being included in slot #4, the repeater continues the downlink signal transmission operation using the beam 1209 in slot #5.

In slot #5 illustrated in FIG. 12, since nothing is transmitted from the base station, the repeater does not perform the downlink transmission using the beam 1209.

In the example illustrated in FIG. 12, the control signals 1201 and 1208 from the base station to the repeater may not be transmitted to UE#1 and/or UE#2. Consequently, for example, power consumption of the repeater can be reduced. As another example, the control signal 1208 from the base station to the repeater may be transmitted from the repeater using the beam 1205. Consequently, for example, complexity in the control of the repeater can be avoided.

The instruction that is sequential and the instruction that is continuous may coexist. The instruction may include information indicating whether the instruction is sequential or continuous. The repeater may determine whether the instruction is sequential or continuous using the information.

A priority may be provided between the sequential and continuous instructions. For example, the sequential instruction may have priority over the continuous instruction, or the subsequent instruction may have priority over the preceding instruction. Consequently, for example, complexity related to the control of the repeater can be avoided.

Disclosed below are other solutions. The repeater performs AL transmission and reception using a control signal transmitted from the base station to the UE. The repeater may receive the control signal, e.g. DCI. From the DCI, the repeater may acquire information related to the UE or information related to transmission/reception resources. The DCI may include the above-described information items (1) to (14), information related to the downlink scheduling allocation, information related to the uplink scheduling grant, information related to the sidelink scheduling allocation, information related to pre-emption, or other information disclosed in Non Patent Literature 12 (3GPP TS38.212).

The repeater may receive the downlink signal transmitted by the base station and transmit the downlink signal to the UE. The downlink signal may include a PDCCH, a PDSCH, a demodulation reference signal (DMRS), a PT-RS, a CSI-RS, an SS block, or a PRS. The downlink signal may include the above-described control signal. The repeater may transmit the downlink signal using the above-described DCI. For example, the repeater may transmit the downlink signal using information of the time resource included in the DCI, or may transmit the downlink signal to the beam in which the UE resides using information of the UE (e.g. C-RNTI) included in the DCI.

The repeater may receive the uplink signal transmitted by the UE and transmit the uplink signal to the base station. The uplink signal may include a PUSCH, a PUCCH, a DMRS, a PT-RS, an SRS, or a PRACH. The repeater may transmit the uplink signal using the above-described DCI. For example, the repeater may transmit the uplink signal using information of the time resource included in the DCI, or may receive the uplink signal from the UE using the beam in which the UE resides using information of the UE (e.g. C-RNTI) included in the DCI.

The repeater may acquire information necessary for the UE to receive the control signal from the base station. The base station may notify the repeater of the information. The information may be, for example, information related to the CORESET of the UE. This enables, for example, the repeater to receive the control signal that is transmitted from the base station to the UE.

The information may include information related to the signaling radio bearer (SRB) setting of the UE. The repeater may use the information to receive signaling from the base station to the UE, for example, RRC signaling. This enables, for example, the repeater to recognize a change in the CORESET of the UE.

Information related to the processing time of the repeater may be provided. The processing time may include, for example, the time required for receiving a control signal transmitted from the base station to the UE, may be the time from when the downlink signal transmitted by the base station is received to when the downlink signal is transmitted to the UE, may be the time from when the uplink signal transmitted by the UE is received to when the uplink signal is transmitted to the base station, or the plurality of processing times described above may be provided. The processing time may be statically determined in a standard, or may be provided as notification from the repeater to the base station. The notification from the repeater to the base station may be given using L1/L2 signaling, may be given using MAC signaling, may be given using RRC signaling, or may be given as capability. The base station may perform scheduling of the UE by using the information related to the processing time. For example, the base station may determine the offset time from the PDCCH to the PDSCH or may determine the offset time from the PDCCH to the PUSCH by using the information related to the processing time.

The repeater may receive broadcast information transmitted from the base station to the UE. The repeater may perform AL transmission and reception using the broadcast information. For example, the repeater may perform the AL transmission and reception relevant to the PRACH transmission from the UE to the base station by acquiring the information related to the PRACH transmission timing included in the broadcast information. Consequently, for example, the amount of signaling from the base station to the repeater can be reduced.

The repeater may perform a cell search. The repeater may acquire the transmission timing of the SS block in response to the cell search. The repeater may use the cell search result to transmit the SS block from the base station to the UE. Consequently, for example, the amount of signaling from the base station to the repeater can be reduced.

The methods disclosed in the first embodiment may be used in combination. For example, a combination of AL transmission and reception using an instruction given in advance from the base station to the repeater and AL transmission and reception using a control signal to the UE may be used. For example, AL transmission and reception using an instruction given in advance from the base station to the repeater may be used for the signal/channel to be commonly transmitted among the UEs, and AL transmission and reception using a control signal to the UE may be used for the signal/channel to be transmitted for each UE. Consequently, for example, flexibility in the communication system can be improved.

According to the first embodiment, it is possible to perform beam control of the repeater, and as a result, it is possible to perform transmission and reception between the base station and the UE via the repeater.

### First Modification of First Embodiment.

The repeater may receive a control signal from the base station and perform AL transmission and reception. The control signal may be, for example, DCI to the repeater. The control signal may include the instruction information disclosed in the first embodiment. However, a method for the repeater to recognize that the control signal is directed to the repeater itself has not been disclosed. This leads to a problem that the repeater may erroneously recognize the control signal from the base station, resulting in instability of the communication system.

The first modification discloses a method for solving this problem.

That is, in the communication system according to the first modification, an identifier is allocated to the repeater. The identifier may be, for example, a radio network temporary identifier (RNTI), see Non Patent Literature 15 (3GPP TS38.321)).

A region of identifiers allocated to repeaters may be provided. The region may be newly provided in an unused region, or a part of a region allocated to another use may be allocated to repeaters.

The identifier may be fixedly allocated to each repeater.

The repeater may have a subscriber identity module (SIM). The SIM may include information related to the identifier. Information related to the identifier may be fixedly allocated to each repeater.

As another example, the base station may allocate the identifier to the repeater. Random access processing or RRC signaling may be used for the allocation from the base station to the repeater.

The base station may encode the control signal to the repeater using the identifier of the repeater. The repeater may decode the control signal using the identifier allocated to itself. The repeater may recognize that the control signal is a control signal directed to the repeater itself by using the decoding result which is successful.

Disclosed below are other solutions. A control signal for repeater control may be provided. A new DCI may be provided. For example, the new DCI may be used for repeater control. The repeater may recognize that the control signal is directed to the repeater itself by using the decoding result of the control signal which matches the format of the DCI for repeater control. The UE may recognize that the control signal is not directed to the UE itself by using the decoding result which does not match the format of the control signal for the UE. Consequently, for example, it is not necessary to allocate an identifier to the repeater, and as a result, complexity in the communication system can be avoided.

The foregoing solutions may be used in combination. For example, an identifier may be allocated to the repeater, and a new DCI may be used as a control signal for repeater control.

The repeater and the UE may be allowed to be allocated the same identifier (e.g. RNTI). The repeater may decode the control signal using the identifier allocated to the repeater itself. The repeater may recognize that the control signal is directed to the repeater itself by using the decoding result which matches the format of the DCI for repeater control, or may recognize that the control signal is not directed to the repeater itself by using the decoding result which does not match the format of the DCI for repeater control. The UE may decode the control signal using the identifier allocated to the UE itself. The UE may recognize that the control signal is directed to the UE itself by using the decoding result which matches the format of the DCI for UE control, or may recognize that the control signal is not directed to the UE itself by using the decoding result which does not match the format of the DCI for UE control. Consequently, for example, it is possible to prevent erroneous recognition of the control signal between repeaters, and it is possible to prevent erroneous recognition of the control signal between the repeater and the UE.

A plurality of identifiers may be allocated to the repeater. For example, the repeater may perform AL transmission and reception using different settings (e.g. settings included in the above-described items (1) to (14)) for each identifier used for decoding the control signal for repeater control. The foregoing setting for each identifier may be provided as notification from the base station to the repeater in advance. Consequently, for example, the size of the control signal for repeater control can be reduced.

As another example in which a plurality of identifiers are allocated to the repeater, the identifier same as the identifier of some or all the connected UEs may be allocated to the repeater. The repeater may identify the UE to be subjected to AL transmission and reception using the identifier used for decoding the control signal for repeater control. Consequently, for example, the size of the control signal for repeater control can be reduced.

The base station (hereinafter may be referred to as base station A) may notify another base station (hereinafter may be referred to as base station B) of information related to the identifier of the repeater subordinate to the base station. The base station A may give the notification using an inter-base-station interface, for example, Xn signaling. The base station B may assign the identifier to the subordinate repeater using the information. For example, the base station B may allocate an identifier different from the identifier of the repeater subordinate to the base station A to the repeater subordinate to the base station B. Consequently, for example, it is possible to prevent overlapping of identifiers between a repeater subordinate to the base station A and a repeater subordinate to the base station B, and as a result, it is possible to prevent, for example, a repeater subordinate to the base station A from erroneously receiving a signal from the base station B.

The first modification enables the repeater to recognize the control signal directed to the repeater itself, and as a result, enables communication between the base station and the UE via the repeater.

### Second Modification of First Embodiment.

The repeater may receive a control signal from the base station and perform AL transmission and reception. However, resources (e.g. frequency and time) used for control signal transmission from the base station to the repeater have not been disclosed. This leads to a problem that the repeater cannot receive the control signal from the base station, resulting in AL transmission and reception via the repeater being inexecutable.

The second modification discloses a method for solving this problem.

That is, in the communication system according to the second modification, the repeater acquires information related to resources (e.g. frequency and time) used for transmission and reception of control signals from the base station.

A method similar to that for the UE may be used to acquire information related to the resources in the repeater. For example, the base station may individually notify the repeater of information related to the resources. The information related to the resources may include, for example, CORESET. For the notification from the base station to the repeater, RRC dedicated signaling, for example, signaling of RRC Reconfiguration (see Non Patent Literature 19 (3GPP TS 38.331)) or signaling of RRC Setup (see Non Patent Literature 19 (3GPP TS 38.331)) may be used. The information may include information related to the signaling radio bearer. The repeater may acquire information related to the resources relevant to transmission and reception of the control signal using the notification.

A method different from that for the UE may be used to acquire information related to the resources in the repeater. For example, broadcast information may be used. System information for the repeater may be newly provided. The system information for the repeater may include, for example, CORESET or information related to the SRB. The base station may broadcast the broadcast information. The repeater may acquire information related to the resources using the broadcast information.

As another example, MAC signaling may be used. The MAC signaling may include information similar to that described above. This enables, for example, the base station to promptly provide notification of the information related to the resources. As another example, L1/L2 signaling may be used. This enables, for example, the base station to more promptly provide notification of the information related to the resources.

A preset resource may be used. The resource may be defined in advance in a standard. A correspondence may be provided between the identifier of the repeater disclosed in the first modification of the first embodiment and the preset resource.

The repeater may notify the base station of information related to the preset resource. For the notification, RRC signaling may be used, MAC signaling may be used, L1/L2 signaling may be used, or signaling used for random access, for example, Msg3 and/or MsgA included in random access processing, may be used. The base station may use the notification to acquire information related to the resources set for the repeater.

The foregoing items may be used in combination. For example, some information related to the resources may be given as notification or broadcast using RRC signaling, and the remaining information may be given as notification using MAC signaling and/or L1/L2 signaling. As another example, a possible candidate may be given as notification using RRC signaling, or information indicating the resources to be actually used may be given as notification using MAC signaling and/or L1/L2 signaling. Consequently, for example, notification of a lot of information can be promptly provided.

The second modification enables the repeater to secure resources for receiving the control signal from the base station, and as a result, enables AL transmission and reception via the repeater to be executed.

### Third Modification of First Embodiment.

The UE may connect to the base station via the repeater. However, a method for the UE to connect to the base station via the repeater has not been disclosed. This leads to a problem that the UE cannot be connected to the base station via the repeater.

The third modification discloses a method for solving this problem.

That is, in the communication system according to the third modification, the repeater transmits an SS block. The UE performs a cell search using the SS block.

For transmission of the SS block from the repeater, the method disclosed in the first embodiment may be used. For example, the repeater may receive, amplify, and transmit the SS block transmitted from the base station.

As another example, the base station may notify in advance the repeater of information related to the SS block to be transmitted by the repeater. The notification may include, for example, information related to the identifier of the SS block, information related to PCI, information included in the PBCH, information related to the transmission timing of each SS block, or information related to the frequency resource on which the SS block is transmitted. The information may include information related to the PRACH transmittable resources (e.g. time/frequency resources) from the UE. The repeater may transmit the SS block using the information provided as notification from the base station. The repeater may receive and transmit the SS block without an instruction from the base station disclosed in the first embodiment.

The repeater may acquire the information related to the transmission timing of the SS block by itself. For example, the repeater may acquire information related to the timing using a cell search. Consequently, for example, the size of signaling from the base station to the repeater can be reduced.

The repeater may allocate identifiers of SS blocks to the beams that can be configured by the repeater itself. The same applies to the identifier of the CSI-RS.

As another example, the base station may allocate identifiers of SS blocks to the beams that can be configured by the repeater. The same applies to the identifier of the CSI-RS. The base station may notify the repeater of information related to the allocation. For the notification, RRC signaling, MAC signaling, or L1/L2 signaling may be used.

An example of how to allocate identifiers of SS blocks to the beams that can be configured by the repeater is disclosed below.

All beams configured by the repeater are allocated the identifier of the same SS block. The allocation may be used when the repeater has a beam. As another example, the allocation may be used in a case where the repeater does not configure a beam, or may be used in a case where the repeater transmits only the SS block without using a beam, and performs transmission using a beam in normal communication, for example, notification of a control signal for each UE, transmission and reception of U-plane data, and the like. Consequently, for example, complexity in the communication system can be avoided.

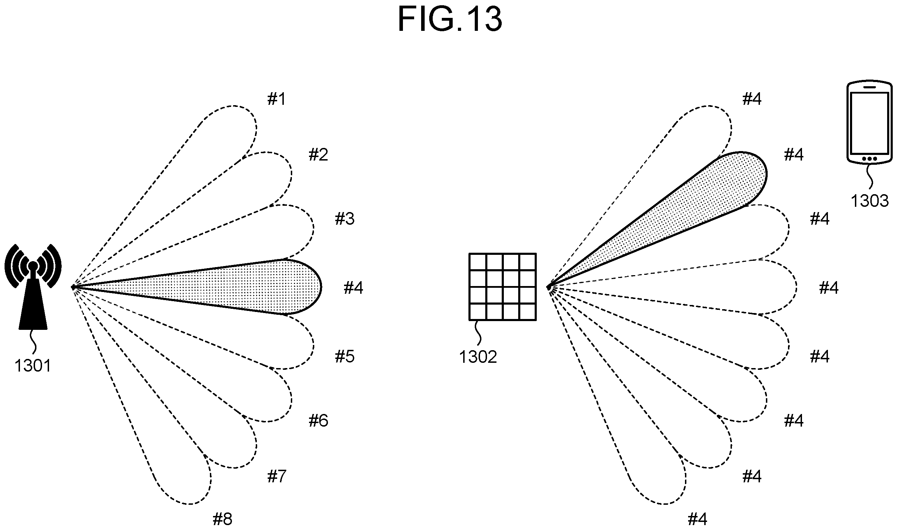

FIG. 13 is a diagram illustrating an example of allocation of SS block identifiers to the beams that can be configured by the base station and the repeater. FIG. 13 illustrates an example in which all beams configured by a repeater 1302 are allocated the same SS block identifier.

In FIG. 13, SS block identifiers #1 to #8 are allocated to the beams configured by a base station 1301. The repeater 1302 belongs to the beam of SS block identifier #4. SS block identifier #4 is allocated to each beam configured by the repeater 1302. The repeater 1302 transmits the SS block of SS block identifier #4 to a UE 1303 using the SS block transmitted from the base station 1301. The UE 1303 performs a cell search using the SS block.

As another example, different SS block identifiers may be allocated to the beams configured by the repeater 1302.

The same SS block identifier as the SS block identifier allocated to the repeater 1302 may be allocated to the beam in which the repeater 1302 resides among the beams configured by the base station 1301. A plurality of SS block identifiers may be redundantly allocated to the beam of the base station 1301. The base station 1301 may transmit a number of SS blocks equal to the number of beams configured by the repeater 1302 to the repeater 1302. The repeater 1302 may transmit the SS block from the base station 1301 using the beam configured by the repeater itself.

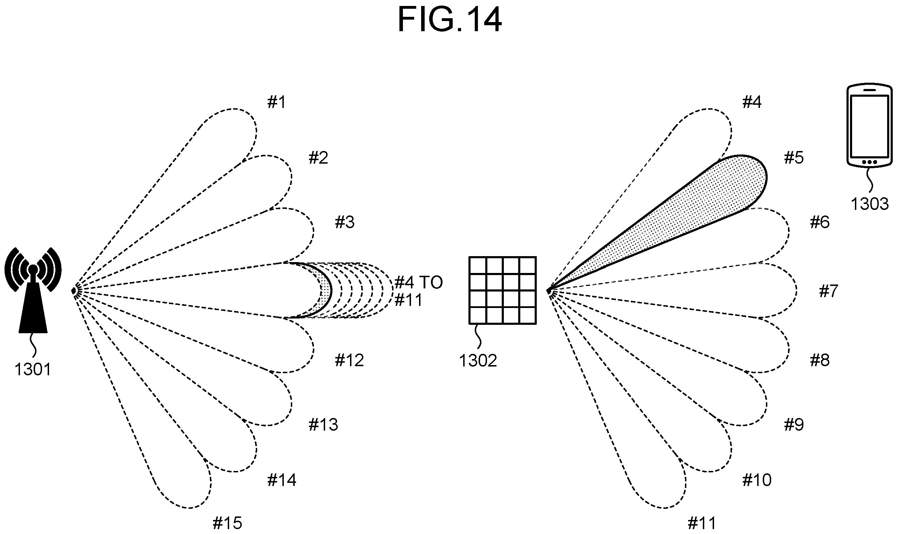

FIG. 14 is a diagram illustrating another example of allocation of SS block identifiers to the beams that can be configured by the base station and the repeater. FIG. 14 illustrates an example in which beams configured by the repeater 1302 are allocated different SS block identifiers.

In FIG. 14, SS block identifiers #1 to #15 are allocated to the beams configured by the base station 1301. SS block identifiers #4 to #11 are redundantly allocated to the beam in which the repeater 1302 resides among the beams configured by the base station 1301. SS block identifiers #4 to #11 are allocated to the beams configured by the repeater 1302. In the example illustrated in FIG. 14, the base station 1301 may transmit SS blocks to the repeater 1302 eight times. The repeater 1302 may transmit the SS blocks received from the base station 1301 using different beams. The UE 1303 may perform a cell search using the SS block relevant to SS block identifier #5 transmitted from the repeater 1302.

One SS block may include information of a plurality of SS blocks. For example, a plurality of SS block identifiers may be included as the information, or information of a plurality of MIBs may be included. The base station 1301 may transmit the SS block including the information of the plurality of SS blocks to the repeater 1302. The repeater 1302 may transmit the information of each SS block using each beam that can be configured by the repeater itself, using the SS block including the information of the plurality of SS blocks. Consequently, for example, the number of times of beam transmission from the base station 1301 to the repeater 1302 can be reduced, and as a result, the efficiency of the communication system can be improved.

Different SS block identifiers from the SS block identifier allocated to the repeater 1302 may be allocated to the beam in which the repeater 1302 resides among the beams configured by the base station 1301. The base station 1301 may transmit the SS block to the repeater 1302 only once. The repeater 1302 may transmit the SS block from the base station 1301 using the beam configured by the repeater itself.

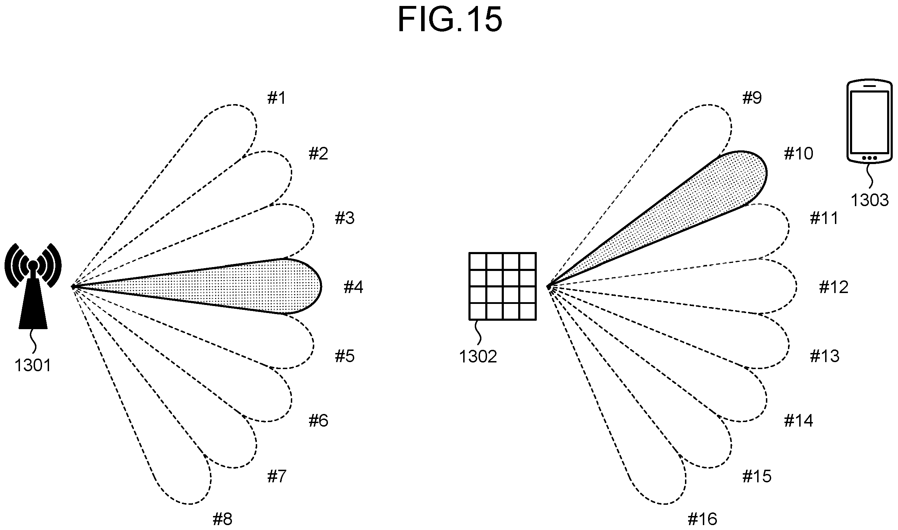

FIG. 15 is a diagram illustrating another example of allocation of SS block identifiers to the beams that can be configured by the base station and the repeater. FIG. 15 illustrates an example in which SS block identifiers are independently allocated to each beam configured by the base station 1301 and the repeater 1302.

In FIG. 15, SS block identifiers #1 to #8 are allocated to the beams configured by the base station 1301. SS block identifier #4 is allocated to the beam in which the repeater 1302 resides among the beams configured by the base station 1301. SS block identifiers #9 to #16 are allocated to the beams configured by the repeater 1302. In the example illustrated in FIG. 15, the base station 1301 may transmit the SS block to the repeater 1302 once. The repeater 1302 may transmit the SS block from the base station 1301 using each of the beams configured by the repeater itself. The UE 1303 may perform a cell search using the SS block relevant to SS block identifier #10.

The same SS block identifier as that of the beam configured by the base station 1301 may be allocated to some of the beams configured by the repeater 1302. For example, in FIG. 15, SS block identifier #4 may be allocated to some of the beams configured by the repeater 1302. Consequently, for example, the number of allocated SS blocks in the communication system can be reduced, and as a result, the exhaustion of SS block identifiers can be prevented.

The repeater 1302 may acquire system information in advance. For example, the repeater 1302 may acquire the system information using the broadcast information transmitted from the base station 1301. The base station 1301 may notify the repeater of the system information in advance. For the notification, for example, RRC signaling, MAC signaling, or L1/L2 signaling may be used. The system information acquired by the repeater 1302 may be, for example, data of a logical channel, data of a transport channel, or data of a physical channel, for example, data after channel encoding. The repeater 1302 may provide the acquired system information as notification or broadcast to the UE 1303. Consequently, for example, the amount of signaling from the base station 1301 to the repeater 1302 can be reduced.

The foregoing methods may be used in combination. For example, SS block transmission may be performed a plurality of times from the base station to the repeater. Each SS block transmitted from the base station to the repeater may include information related to a plurality of SS blocks. Consequently, for example, with the reduction in the number of times of SS block transmission from the base station to the repeater, the efficiency in the communication system can be improved, and the amount of information included in the SS block can be prevented from becoming excessive.

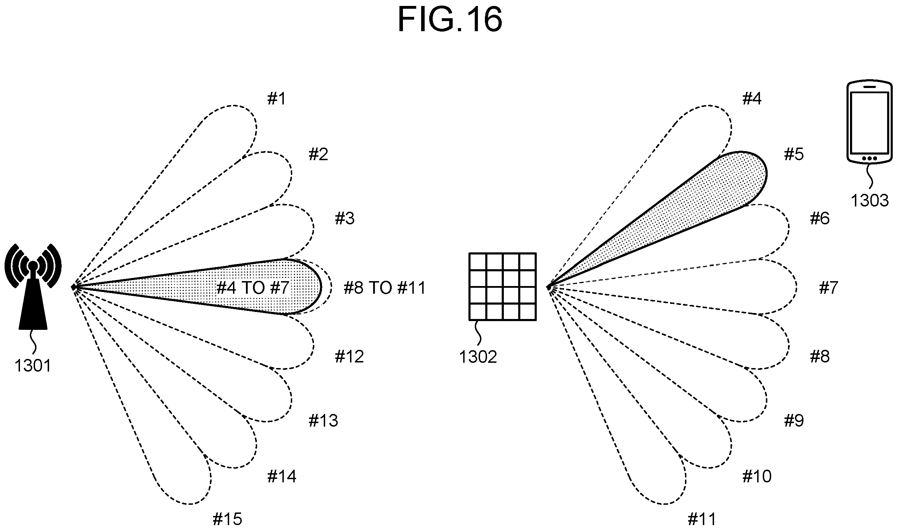

FIG. 16 is a diagram illustrating another example of allocation of SS block identifiers to the beams that can be configured by the base station and the repeater. FIG. 16 illustrates an example in which the base station 1301 transmits SS blocks including information on a plurality of SS blocks to the repeater 1302 a plurality of times.

In FIG. 16, SS block identifiers #1 to #15 are allocated to the beams configured by the base station 1301. SS block identifiers #4 to #11 are allocated to the beam in which the repeater 1302 resides among the beams configured by the base station 1301. SS block identifiers #4 to #11 are allocated to the beams configured by the repeater 1302. In the example illustrated in FIG. 16, the base station 1301 may transmit SS blocks to the repeater 1302 twice. Information held by SS block identifiers #4 to #7 is included in the first SS block transmission from the base station 1301 to the repeater 1302. Information held by SS block identifiers #8 to #11 is included in the second SS block transmission from the base station 1301 to the repeater 1302. The UE 1303 may perform a cell search using the SS block relevant to SS block identifier #5.

The UE 1303 performs a cell search using the SS block transmitted from the repeater 1302. The UE 1303 acquires the system information using the SS block. For example, the UE 1303 may acquire information related to the time/frequency resources on which the system information is transmitted using the SS block.

The UE 1303 performs a random access to the base station 1301 via the repeater 1302. The UE 1303 may transmit the PRACH at the PRACH transmission timing corresponding to the SS block identifier transmitted from the repeater 1302. The repeater 1302 may acquire information related to the PRACH transmission timing from the UE1303. The method disclosed in the first embodiment may be used to acquire the information in the repeater 1302. For example, the notification may be given from the base station 1301 to the repeater 1302, or the repeater 1302 may acquire the information using the broadcast information from the base station 1301.

A plurality of identifiers may be provided in the beams configured by the repeater. The plurality of identifiers may include, for example, identifiers of the beams of the base station and/or the repeater used for communication between the base station and the repeater, and identifiers of the beams used between the repeater and the UE. The TCI state may include a plurality of TCI states, for example, the TCI state between the base station and the repeater and the TCI state between the repeater and the UE. Consequently, for example, complexity in the communication system can be avoided.

The method in the third modification has been mainly described for SS blocks, but may be used for CSI-RS. Consequently, for example, an effect similar to that for SS blocks can be obtained in the allocation of CSI-RS beams.

The method in the third modification allows for connection from the UE to the base station via the repeater, and as a result, allows for expansion of the coverage of the communication system.

### Second Embodiment.

The repeater itself needs to be connected to the base station. The UE may connect to the base station via the repeater. However, a method for the repeater to connect to the base station has not been disclosed. In addition, a method for the UE to connect to the base station via the repeater has not been disclosed. This leads to a problem that the UE cannot be connected to the base station via the repeater.

The second embodiment discloses a method for solving this problem.

That is, in the communication system according to the second embodiment, the repeater receives the SS block from the base station and performs a cell search. The repeater acquires system information from the base station. The repeater performs a random access with the base station.

The repeater transmits the PRACH to the base station. The repeater may acquire information related to the time/frequency resources on which the PRACH can be transmitted using the system information transmitted from the base station.

The repeater may use a random access (RA) preamble similar to that of the UE. Consequently, for example, complexity of the communication system can be avoided. As another example, an RA preamble region for the repeater may be provided. The repeater may select an RA preamble from the region and use the RA preamble for PRACH transmission. Consequently, for example, it is possible to avoid the RA preamble collision between the repeater and the UE, and as a result, it is possible to quickly complete the random access in the repeater and the UE.

The base station may broadcast information related to the RA preamble region to be allocated to the repeater. The repeater may use the information to select the RA preamble. The UE may use the information to select the RA preamble. For example, the UE may not select the RA preamble included in the RA preamble region for the repeater by using the information. That is, the UE may select the RA preamble from a region other than the RA preamble region for the repeater. This makes it possible to avoid redundant RA preamble selection between the repeater and the UE, for example.

The base station transmits a random access response (RAR) to the repeater. The RAR transmitted by the base station to the repeater may include a temporary C-RNTI used by the repeater. The repeater may acquire the temporary C-RNTI used by the repeater itself from the RAR.

The repeater may transmit Msg3 to the base station. For the transmission of Msg3 from the repeater to the base station, the temporary C-RNTI acquired by the repeater may be used, or the RNTI disclosed in the first modification of the first embodiment may be used.

An RRC connection may be established between the repeater and the base station.

Msg3 may include signaling of an RRC setup request (see Non Patent Literature 19 (3GPP TS 38.331)).

The base station may transmit Msg4 to the repeater. The base station may transmit Msg4 in response to Msg3 from the repeater.

Two-step random access may be used for the random access between the base station and the repeater. Consequently, for example, random access processing between the base station and the repeater can be promptly executed.

The repeater may notify the base station of information related to the repeater itself. For the notification, for example, the above-described Msg3 may be used, MsgA in two-step random access may be used, or other signaling, for example, RRC Setup Complete (see Non Patent Literature 19 (3GPP TS 38.331)) may be used. As another example, the information may be included in the capability (e.g. UE capability) and given as notification.

As examples of information given as notification from the repeater to the base station, (A) to (G) below are disclosed.
(A) Information indicating repeater.
(B) Information related to supportable beams.
(C) Information related to coverage.
(D) Information related to transmission power.
(E) Information related to reception power.
(F) Information related to processing time.
(G) Combinations of (A) to (F).

The above-described information item (A) may include information indicating that the sender is a repeater. The information may include information related to the type of repeater. The information related to the type of repeater may be, for example, information indicating that the repeater is a smart repeater, information indicating that the repeater is a conventional repeater, information indicating that the repeater is a RIS, or information indicating that the repeater is a conventional reflector. The base station may recognize that the communication partner is a repeater by using the above-described information item (A). This enables, for example, the base station to transmit a control signal to the repeater.

The above-described information item (B) may include information related to the number of beams supportable by the repeater itself. The information related to the number of beams may be the number of beams on which SS blocks are transmitted or the number of beams on which CSI-RS is transmitted. The base station may allocate SS blocks to the repeater or may determine the beam for use in communication with the UE by using the information. Consequently, for example, complexity related to the control of the repeater from the base station can be avoided.

The above-described information item (C) may include information related to the distance over which the repeater itself can perform transmission and reception. The distance over which transmission and reception can be performed may be provided for each of the SS block and the CSI-RS, for example. The base station may perform power control in transmission and reception with the UE by using the information. Consequently, for example, power consumption in the repeater can be reduced, and it is possible to prevent failure of transmission to the UE due to power shortage from the repeater.

The above-described information item (D) may include information related to the transmission power with which the repeater itself can perform transmission. The base station may determine the transmission power of the repeater by using the information. Consequently, for example, power consumption in the repeater can be reduced, and it is possible to prevent failure of transmission to the UE due to power shortage from the repeater.

The above-described information item (E) may include information related to the reception power with which the repeater itself can perform reception. Using the information, the base station may determine the power for transmission from the base station to the repeater, or may determine the transmission power of the UE. This makes it possible to prevent, for example, deterioration in performance in transmission and reception between the base station and the UE via the repeater.

The above-described information item (F) may include, for example, information related to the processing time disclosed in the first embodiment. The base station may perform scheduling of the UE by using the above-described information item (F). This enables, for example, the base station to perform scheduling of the UE to be connected via the repeater.

The base station may configure the setting of the repeater. The base station may configure the setting by using information related to the repeater, for example, the above-described information items (A) to (G). The base station may notify the repeater of the setting. The setting provided as notification from the base station to the repeater may include information related to (1) to (14) described above, information related to the SS block transmitted by the repeater, information related to the CSI-RS transmitted by the repeater, information related to the beam configured by the repeater, or broadcast information and/or system information transmitted by the repeater to the UE. For the notification from the base station to the repeater, RRC signaling, for example, RRC reconfiguration signaling, MAC signaling, or L1/L2 signaling may be used. The repeater may determine the beam to be used by the repeater itself using the notification from the base station.

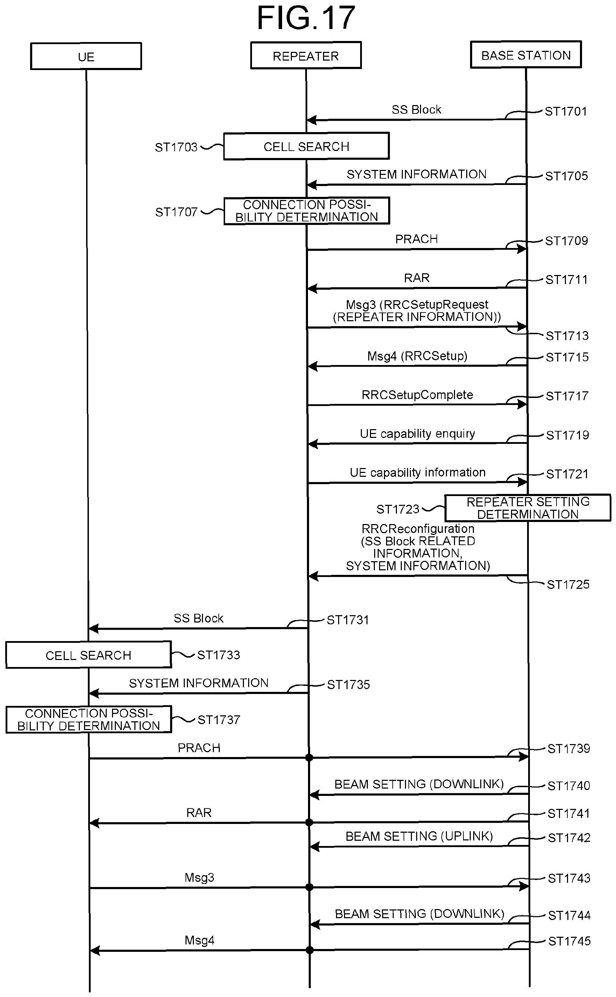

FIG. 17 is a diagram illustrating an example of a connection sequence of the repeater to the base station. FIG. 17 illustrates an operation in which the repeater connects to the base station and then the UE connects to the base station via the repeater. In FIG. 17, an arrow with a black circle indicates that signal transmission and reception between the base station and the UE are performed via the repeater.

In step ST1701 illustrated in FIG. 17, the repeater receives the SS block transmitted by the base station. In step ST1703, the repeater performs a cell search using the SS block in step ST1701. In step ST1705, the repeater receives the system information transmitted by the base station. In step ST1707, the repeater determines whether connection to the base station is possible using the system information in step ST1705. For the determination in the repeater, information related to the PLMN included in the system information may be used, or information related to non-public network (NPN) may be used. In the example illustrated in FIG. 17, the repeater determines that connection to the base station is possible.

In step ST1709 illustrated in FIG. 17, the repeater transmits a PRACH to the base station. The repeater may acquire information related to the time/frequency resources used for the PRACH transmission from step ST1705. The repeater may perform the PRACH transmission in step ST1709 by using the acquired information related to the resources. In step ST1711, the base station transmits an RAR to the repeater. In step ST1711, information related to the scheduling grant used for transmission of Msg3 may be included, or information related to the identifier (e.g. temporary C-RNTI) to be allocated to the repeater may be included.

In step ST1713 illustrated in FIG. 17, the repeater transmits Msg3 to the base station. The Msg3 may include signaling of the RRC setup request. The Msg3 may include information related to the repeater, for example, (A) to (G) described above. The foregoing items (A) to (G) may be included in the signaling of the RRC startup request. In step ST1715, the base station transmits Msg4 to the repeater. In response to reception in step ST1715, the repeater recognizes that the random access to the base station has succeeded. Step ST1715 may include signaling of RRC Setup. The repeater may perform RRC setup using the signaling. In step ST1717, the repeater notifies the base station of the completion of RRC setup. The notification may be given using, for example, signaling of RRC Setup Complete.

In step ST1719 illustrated in FIG. 17, the base station inquires of the repeater about the capability. The inquiry may be performed by using signaling of UE capability inquiry. In step ST1721, the repeater may notify the base station of the capability of the repeater itself. For the notification, for example, signaling of UE capability information may be used.

In step ST1723 illustrated in FIG. 17, the base station determines the setting to be configured for the repeater. In step ST1725, the base station instructs the repeater on the setting of the repeater. The instruction may include information related to the beam configured by the repeater, may include the above-described information items (1) to (14), may include information related to the SS block transmitted by the repeater, or may include system information transmitted by the repeater. The instruction in step ST1725 may be performed, for example, by using signaling of RRC Reconfiguration. The repeater uses the instruction to configure the setting of the repeater itself.

In step ST1731 illustrated in FIG. 17, the repeater transmits the SS block. The transmission may be performed using the information included in step ST1725. In step ST1733, the UE performs a cell search. The UE may perform the cell search in response to reception in step ST1731. In step ST1735, the UE receives the system information transmitted by the repeater. In step ST1737, the UE determines whether connection to the base station is possible using the system information in step ST1735. For the determination in the UE, information related to the PLMN included in the system information may be used, or information related to the NPN may be used. In the example illustrated in FIG. 17, the UE determines that connection to the base station is possible.

In step ST1739 illustrated in FIG. 17, the UE transmits a PRACH to the base station. The transmission in step ST1739 may be performed via the repeater. The repeater may perform transmission and reception in step ST1739 using the system information acquired in step ST1725.

In step ST1740 illustrated in FIG. 17, the base station instructs the repeater to configure the beam setting. The instruction may include information related to the beam used by the repeater, information indicating that the downlink signal is transmitted and received, or information related to time/frequency resources on which the repeater performs transmission and reception. In step ST1741, the base station transmits an RAR to the UE. The transmission in step ST1741 may be performed via the repeater. The repeater may perform transmission and reception in step ST1741 using the setting acquired in step ST1740.

In step ST1742 illustrated in FIG. 17, the base station instructs the repeater to configure the beam setting. The instruction may include information related to the beam used by the repeater, information indicating that the uplink signal is transmitted and received, or information related to time/frequency resources on which the repeater performs transmission and reception. In step ST1743, the UE transmits Msg3 to the base station. The transmission in step ST1743 may be performed via the repeater. The repeater may perform transmission and reception in step ST1743 using the setting acquired in step ST1742.

In step ST1744 illustrated in FIG. 17, the base station instructs the repeater to configure the beam setting. The instruction may include information related to the beam used by the repeater, information indicating that the downlink signal is transmitted and received, or information related to time/frequency resources on which the repeater performs transmission and reception. In step ST1745, the base station transmits Msg4 to the UE. The transmission in step ST1745 may be performed via the repeater. The repeater may perform transmission and reception in step ST1745 using the setting acquired in step ST1744.

In the example illustrated in FIG. 17, an example in which information related to the repeater itself is transmitted from the repeater to the base station in Msg3 has been described. However, the information may be transmitted in step ST1717 or may be transmitted in step ST1721. Consequently, for example, random access processing between the repeater and the base station can be promptly executed.

In the example illustrated in FIG. 17, an example in which the above-described items (A) to (G) are included as information related to the repeater itself transmitted from the repeater to the base station in step ST1713 has been described, but some of the above-described items (A) to (G) may be included. Some of the above-described items (A) to (G) may be transmitted in step ST1717, or some of the above-described items (A) to (G) may be transmitted in step ST1721. Consequently, for example, flexibility in the communication system can be improved.

In the example illustrated in FIG. 17, an example in which the base station notifies the repeater of information related to the SS block in step ST1725 has been described, but notification of information related to the SS block may not be provided. The repeater may directly receive the SS block and/or the system information transmitted from the base station and transmit the SS block and/or the system information to the UE. Consequently, for example, the amount of signaling for step ST1725 can be reduced.

A NAS connection the repeater and the AMF may not be performed. The repeater may not be registered in the core NW. Consequently, for example, connection of the repeater to the communication system can be promptly executed.

As another example, a NAS connection between the repeater and the AMF may be established. The repeater may be registered in the core NW. Consequently, for example, a repeater outside the communication system can be prevented from connecting to the communication system, and as a result, the robustness of the communication system can be secured.

After the NAS connection is established, the repeater may acquire information related to the policy from the core NW device. Information related to the policy may include a policy as a repeater. The repeater may perform the AL transmission and reception using the policy acquired from the core NW device. Consequently, for example, the core NW device can control the communication system by consideration of the presence of the repeater.

The base station may instruct the repeater to stop and/or deactivate the repeater. For the instruction, RRC signaling, MAC signaling, or L1/L2 signaling may be used. As an example in which RRC signaling is used, RRC Reconfiguration may be used, RRC Suspend may be used, or RRC Release may be used. The repeater may use the instruction from the base station to stop and/or deactivate the AL transmission and reception. Consequently, for example, it is possible to stop the repeater which has no subordinate UE, and as a result, it is possible to reduce power consumption in the communication system.

The base station may instruct the repeater to start and/or activate the repeater. For the instruction, RRC signaling, MAC signaling, or L1/L2 signaling may be used. As an example in which RRC signaling is used, RRC Reconfiguration may be used, RRC Resume may be used, or RRC Setup may be used. The repeater may use the instruction from the base station to start and/or activate the AL transmission and reception.

Disclosed below are other solutions. Random access may not be performed between the base station and the repeater.

The repeater may establish downlink synchronization with the base station. The repeater may establish downlink synchronization with the base station, for example, using the cell search of the base station.

The repeater may establish uplink synchronization with the base station. The repeater may transmit the SRS or the PUCCH to the base station. The resources (e.g. time, frequency, and code) used for the uplink transmission from the repeater to the base station may be determined in advance in a standard, or may be set using the method disclosed in the second modification of the first embodiment. The base station may notify the repeater of information related to TA. The repeater may use the information related to TA to modify the uplink transmission timing.

MAC signaling or L1/L2 signaling may be used for transmission of the information related to TA from the base station to the repeater. A new DCI may be provided and used.

According to the second embodiment, the repeater can be connected to the base station, and as a result, transmission and reception between the base station and the UE via the repeater can be performed.

### Third Embodiment.

L1/L2 signaling may be used to control the repeater from the base station. The repeater may have a protocol to process L1/L2 signaling.

However, there arises a problem that the repeater cannot process the signaling disclosed above, and as a result, connection processing of the repeater to the base station cannot be executed, and transmission and reception between the base station and the UE via the repeater cannot be performed.

The third embodiment discloses a method for solving this problem.

That is, in the communication system disclosed in the third embodiment, the repeater has a C-plane protocol stack.

The repeater may not have a U-plane protocol.

The repeater may have a PHY protocol or a MAC protocol. This enables, for example, control using MAC signaling from the base station to the repeater, and as a result, enables the base station to transmit a large amount of information to the repeater.

The repeater may have an RLC protocol, a PDCP protocol, or an RRC protocol. This enables, for example, control using RRC signaling from the base station to the repeater, and as a result, enables the base station to transmit a large amount of information to the repeater.

The repeater may have an RRC state. The RRC state of the repeater may be one or more of RRC_CONNECTED, RRC_INACTIVE, and RRC_IDLE. Consequently, for example, complexity in the control of the repeater in the communication system can be avoided.

The repeater may have a NAS protocol. The NAS protocol included in the repeater may be used, for example, for connection of the repeater to the communication system. This enables, for example, the repeater to be connected to the core NW, and as a result, the core NW device, for example, the AMF, can recognize the connection of the repeater, thereby avoiding the complexity related to management of the communication system.

The repeater may have a CM state. The CM state of the repeater may be, for example, CM_CONNECTED or CM_IDLE. Consequently, for example, complexity in the control of the repeater in the communication system can be avoided.

The repeater may have an RM state. The RM state of the repeater may be, for example, RM_REGISTERED or RM_DEREGISTERED. Consequently, for example, complexity in the control of the repeater in the communication system can be avoided.

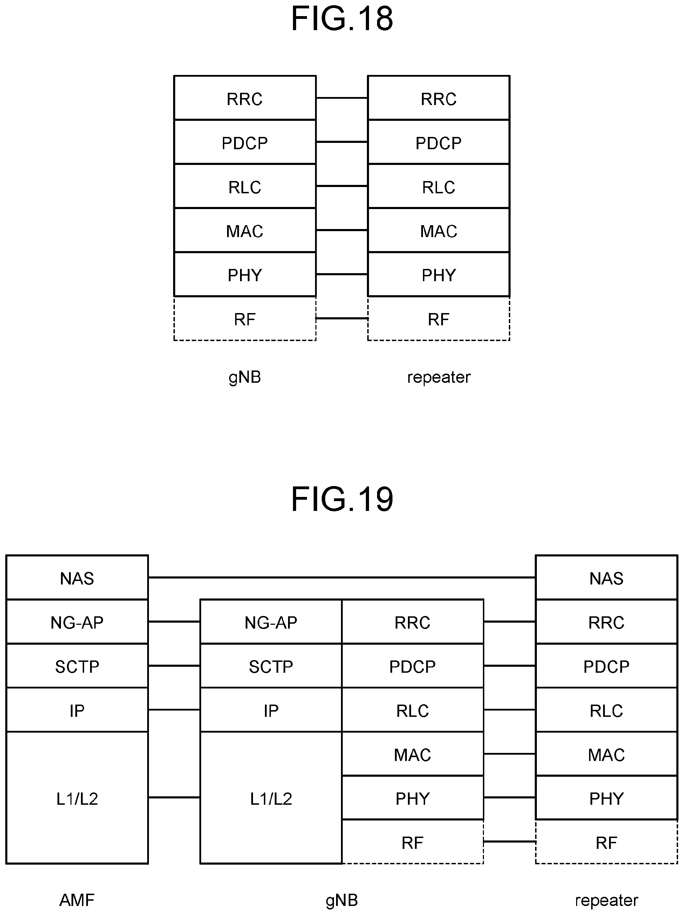

FIG. 18 is a diagram illustrating an example of the C-plane protocol stack of the base station (gNB) and the repeater. The protocol stack illustrated in FIG. 18 may be used, for example, at the time of connection of the repeater to the base station, or may be used in notification of system information from the base station to the repeater.

In the protocol stack illustrated in FIG. 18, the radio (RF), PHY, MAC, RLC, PDCP, and RRC protocols are terminated between the base station (gNB) and the repeater.

FIG. 19 is a diagram illustrating an example of the C-plane protocol stack of the AMF, the base station (gNB), and the repeater. The protocol stack illustrated in FIG. 19 may be used, for example, when the repeater is connected to the core NW.

In the protocol stack illustrated in FIG. 19, the radio (RF), PHY, MAC, RLC, PDCP, and RRC protocols are terminated between the base station (gNB) and the repeater. Between the base station and the AMF, protocols of L1/L2, IP, Stream Control Transmission Protocol (SCTP, see Non Patent Literature 32), and Next Generation Application Protocol (NG-AP, see Non Patent Literature 21 (3GPP TS38.413)) are terminated. The NAS protocol is terminated between the repeater and the AMF. Between the repeater and the base station, signaling of the NAS protocol (also referred to as NAS signaling) is encapsulated in signaling of the RRC protocol. Between the base station and the AMF, NAS signaling is encapsulated in signaling of the NG-AP protocol.

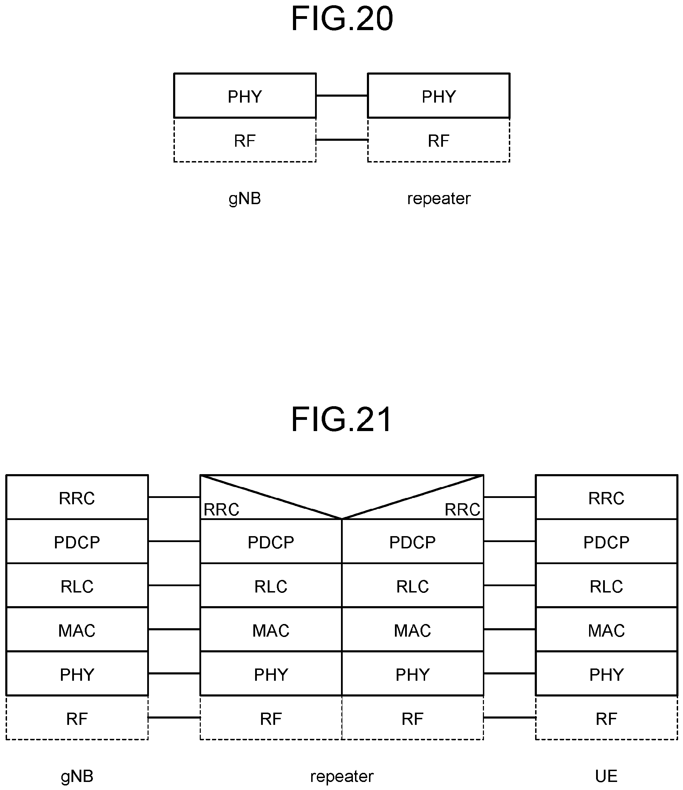

FIG. 20 is a diagram illustrating an example of the C-plane protocol stack of the base station (gNB) and the repeater. The protocol stack illustrated in FIG. 20 may be used, for example, in beam control from the base station to the repeater.

In the protocol stack illustrated in FIG. 20, the radio (RF) and PHY protocols are terminated between the base station (gNB) and the repeater. The control instruction of the beam from the base station to the repeater is given by using signaling of the PHY protocol, for example, L1/L2 signaling.

FIG. 21 is a diagram illustrating an example of the C-plane protocol stack of the base station (gNB), the repeater, and the UE. The protocol stack illustrated in FIG. 21 may be used, for example, in system information notification from the base station to the UE.

In the protocol stack illustrated in FIG. 21, the radio (RF), PHY, MAC, RLC, PDCP, and RRC protocols are terminated with each other between the base station and the repeater and between the repeater and the UE. The repeater may retain system information transmitted from the base station to the UE. The repeater may transmit the held system information to the UE.

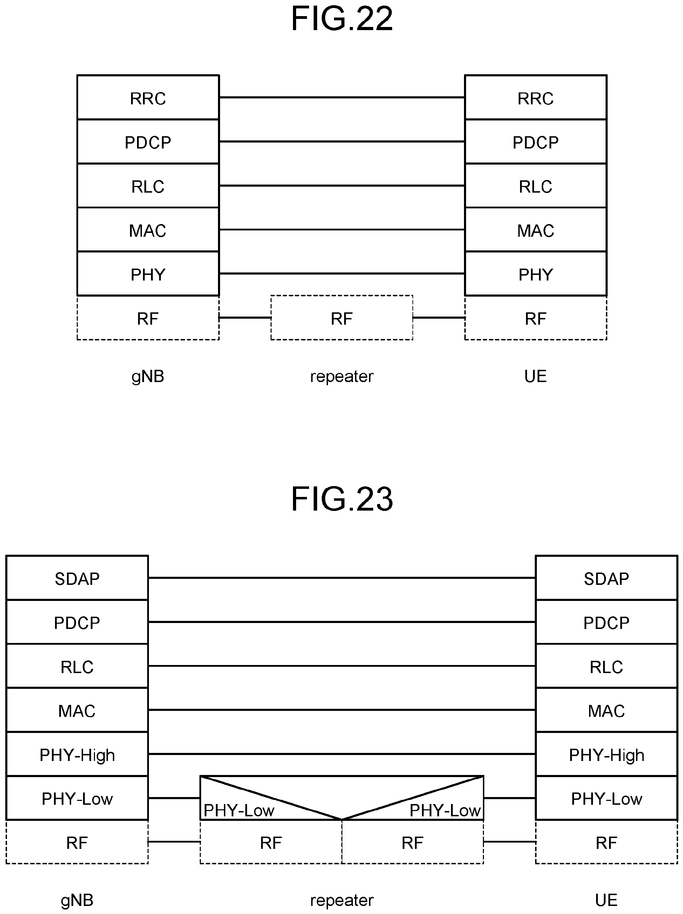

FIG. 22 is a diagram illustrating another example of the C-plane protocol stack of the base station (gNB), the repeater, and the UE. The protocol stack illustrated in FIG. 22 may be used, for example, in transmission and reception of RRC signaling between the base station and the UE.

In the protocol stack illustrated in FIG. 22, radios (RF) are terminated with each other between the base station and the repeater and between the repeater and the UE. The PHY, MAC, RLC, PDCP, and RRC protocols are terminated between the base station and the UE. The repeater may receive, amplify, and transmit RRC signaling transmitted from the base station to the UE. The repeater may receive and amplify the RRC signaling transmitted from the UE to the base station, and transmit the RRC signaling to the base station.

The repeater may not have a U-plane protocol. For U-plane transmission and reception between the base station and the UE via the repeater, for example, the protocol stack illustrated in FIG. 22 may be used by replacing RRC with SDAP.

The repeater may have a U-plane protocol. For example, the repeater may have a part of the PHY protocol. A part of the PHY protocol that the repeater has may be PHY-Low (see Non Patent Literature 33 ("O-RAN Fronthaul Specification Overview")). A part of the PHY protocol that the repeater has may include precoding, digital beamforming, inverse fast Fourier transform (IFFT), analog conversion, analog beamforming, or fast Fourier transform.

The repeater may perform reception processing using the PHY-Low protocol on the signal transmitted from the base station. For example, the repeater may perform reception processing using analog beamforming, may perform analog/digital conversion, may perform Fourier transform, or may perform reception processing using digital beamforming. The repeater may perform transmission processing using the PHY-Low protocol on the signal subjected to the reception processing of the PHY-Low protocol. For example, the repeater may perform precoding, transmission processing using digital beamforming, inverse Fourier transform, digital/analog conversion, or transmission processing using analog beamforming. The repeater may transmit the signal subjected to the transmission processing to the UE. The above-described operation may be performed in downlink communication.

The same operation as described above may be performed in uplink communication. For example, the repeater may perform reception processing using the PHY-Low protocol on the signal transmitted from the base station, may perform transmission processing using the PHY-Low protocol on the signal subjected to the reception processing of the PHY-Low protocol, or may transmit the signal subjected to the transmission processing to the base station.

The same operation as described above may be performed in sidelink communication, that is, in a repeater that relays a signal between two UEs that perform sidelink communication. For example, the repeater may perform reception processing using the PHY-Low protocol on the signal transmitted from the UE, may perform transmission processing using the PHY-Low protocol on the signal subjected to the reception processing of the PHY-Low protocol, or may transmit the signal subjected to the transmission processing to another UE.

This enables, for example, precoding and beamforming based on the respective radio wave environments between the base station and the repeater and between the repeater and the UE, and as a result, it is possible to improve quality in transmission and reception between the base station and the UE via the repeater.

FIG. 23 is a diagram illustrating an example of the U-plane protocol stack of the base station (gNB), the repeater, and the UE. FIG. 23 may be used, for example, in U-plane data transmission and reception between the base station and the UE. The protocol stack illustrated in FIG. 23 illustrates an example in which the repeater has PHY-Low.

In the protocol stack illustrated in FIG. 23, the radio (RF) and PHY-Low protocols are terminated with each other between the base station and the repeater and between the repeater and the UE. The PHY-High, MAC, RLC, PDCP, and SDAP protocols are terminated between the base station and the UE. The repeater performs PHY-Low protocol processing for reception on the U-plane data received from the base station. The repeater performs PHY-Low protocol processing for transmission on the U-plane data subjected to the PHY-Low protocol processing, and transmits the data to the UE. Similar processing is performed for the U-plane data transmitted from the UE to the base station.

The base station may notify the repeater of information related to the PHY-Low protocol processing. The information may include, for example, information related to precoding (e.g. precoding matrices) or information related to beamforming. The notification may be given using, for example, the methods disclosed in the first embodiment. The notification of the information may be given, for example, similarly to the notification of the information items (1) to (14) disclosed in the first embodiment. The repeater may perform PHY-Low protocol processing using the information.

U-plane communication may be performed between the base station and the repeater. The repeater may have a U-plane protocol. The U-plane protocol that the repeater has may be, for example, a U-plane protocol similar to that of the UE. The protocol may include, for example, SDAP or the PDU layer. A PDU session may be established between the repeater and the UDP.

The U-plane communication between the base station and the repeater may be used, for example, for updating data of the repeater, for example, for updating firmware. This makes it possible to update the firmware of the repeater, for example, without obstructing the C-plane communication band between the base station and the repeater.

According to the third embodiment, the repeater can receive the control signal from the base station, and as a result, transmission and reception between the base station and the UE via the repeater can be performed.

### Fourth Embodiment.

In 5G wireless access systems, communication for a wide variety of services is performed. In order to enable such communication, for example, support of high-speed mobile terminals and support of a large number of transmission reception points (TRPs) and the like have also been developed. Such systems are required to reduce the delay time, overhead, and interruption time in mobility control. In order to meet such a requirement, it has been proposed that inter-cell mobility control is performed by control technology not involving RRC (L1/L2 mobility) in 3GPP (Non Patent Literature 30). However, no specific method has been disclosed for executing inter-cell mobility control with L1/L2 mobility. This leads to a problem that inter-cell mobility control cannot be implemented by L1/L2 mobility, and the delay time or the like at the time of mobility cannot be reduced.

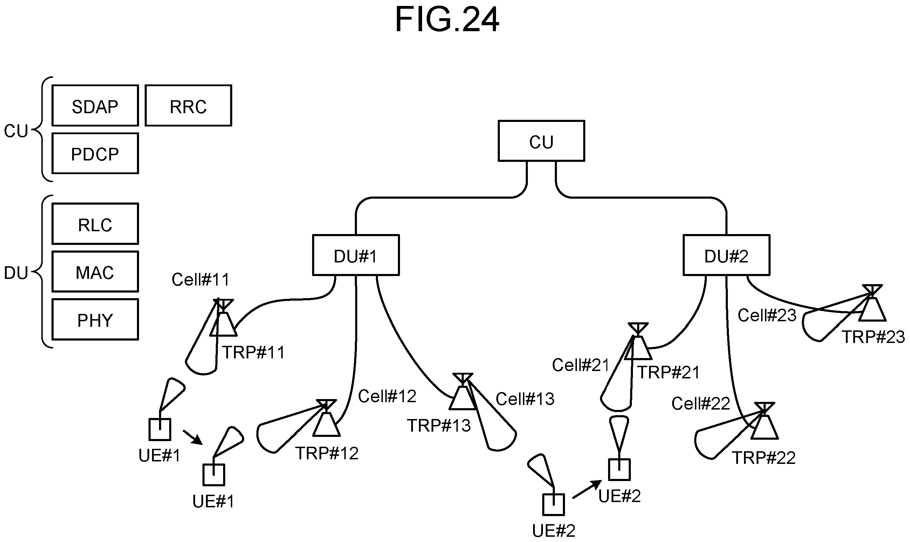

FIG. 24 is a conceptual diagram of inter-cell L1/L2 mobility. The inter-cell L1/L2 mobility is inter-cell mobility by L1/L2 processing, that is, cell change. FIG. 24 illustrates inter-cell L1/L2 mobility within one gNB. The gNB includes one CU and one or more DUs connected to the CU. The CU has protocols of RRC, SDAP, and PDCP. The DU has protocols of RLC, MAC, and PHY. The CU and the DU are connected by an F1 interface. In FIG. 24, two DUs (DU#1 and DU#2) are connected to the CU to form one gNB. The DU connects to one or more TRPs. In FIG. 24, DU#1 connects to TRP#11 to TRP#13. DU#2 connects to TRP#21 to TRP#23. The gNB constitutes one or more cells. For example, in FIG. 24, each TRP is used to constitute a cell. TRP#n is used to constitute cell #n. In a case where a cell is constituted using TRP, communication with UE in the cell is performed via the TRP constituting the cell.

Inter-cell L1/L2 mobility will be described. For example, UE#1 is connected to cell #11. The cell to which UE#1 connects is changed from cell #11 to cell #12 as UE#1 moves. The beam for use in communication with UE#1 is also changed. The cell change is performed by L1/L2 mobility processing. The cell change may be referred to as HO. The cell change may also be referred to as mobility.

Inter-cell L1/L2 mobility including a cell change between different DUs will be described. For example, UE#2 is connected to cell #13. The cell to which UE#2 connects is changed from cell #13 to cell #21 as UE#2 moves. The beam for use in communication with UE#2 is also changed. Cell #13 is constituted by DU#1, and cell #21 is constituted by DU#2. Therefore, the cell to which UE#2 connects is changed between different DUs. Thus, the cell change including a cell change between different DUs is performed by the L1/L2 mobility processing.

The gNB determines a cell that is a candidate for the target cell in the inter-cell L1/L2 mobility. The cell may be referred to as a candidate cell. The number of candidate cells may be one or more. The candidate cell may be a candidate for the PCell. The candidate cell may be a candidate cell for the case that the PCell is changed by mobility. The candidate cell may be for change of the PCell in the MCG. The candidate cell may be a candidate for the PSCell. The candidate cell may be a candidate cell for the case that the PSCell is changed by mobility. The candidate cell may be for change of the PSCell in the SCG.

Conventional mobility control includes conditional HO (CHO) (see Non Patent Literature 2 (3GPP TS 38.300)). A candidate cell is used in the CHO. However, CHO, which is L3 mobility that is conventional mobility control involving RRC, is not applicable to L1/L2 mobility. Preferably, a candidate cell for the target cell in the inter-cell L1/L2 mobility is determined separately from the candidate cell of the CHO. Hereinafter, unless otherwise specified, a candidate cell for the inter-cell L1/L2 mobility is referred to as a candidate cell.

The candidate cell may be limited to the serving cell. As another method, the candidate cell may be determined from the cell set as the serving cell. In this way, it is possible to simplify the setting process of the candidate cell and reduce the amount of signaling and information necessary for the process.

The gNB may determine one or more beams that are candidates for the target. The beam may be referred to as a candidate beam. The gNB may use some or all beams of the candidate cells as candidate beams. The gNB may determine one or more antenna ports that are candidates for the target. The antenna port may be referred to as a candidate antenna port (AP). The gNB may use some or all antenna ports of the candidate cells as candidate APs. The gNB may determine one or more antenna panels that are candidates for the target. The antenna panel may be referred to as a candidate panel. The gNB may use some or all of antenna panels of the candidate cells as candidate panels. Hereinafter, unless otherwise specified, candidate beams, candidate APs, and candidate panels may be included as candidate cells.

In the above description, the node for determining the candidate cell is the gNB. The source gNB (S-gNB) that is the HO source in the inter-cell L1/L2 mobility may determine the candidate cell or the like. The CU of the gNB may determine the candidate cell. In this way, for example, the cell subordinate to the CU can be easily set as the candidate cell. A candidate cell can be determined from more cells. As another method, the DU of the gNB may determine the candidate cell. Determining the candidate cell by the DU can facilitate, for example, determination of the candidate cell using the L1 measurement result.

Candidate cells and the like determined by the CU and the DU may differ. For example, the CU may determine a candidate cell, and the DU may determine a candidate beam and a candidate AP. For example, the determination of a candidate cell may be performed by RRC, and the determination of a candidate beam and a candidate AP may be performed by MAC or PHY. The DU may transmit information related to the determined candidate beam or candidate AP to the CU. Alternatively, the DU may transmit information related to the determined candidate beam or candidate AP to the UE. The DU may transmit information related to the candidate beam or candidate AP to the UE in association with the candidate cell determined by the CU. In this way, it is possible to flexibly set candidate cells in each process of the CU and the DU.

In 3GPP, a measurement method in which a measurement result is reported using an RRC message is provided as measurement of reception quality (see Non Patent Literature 2 (3GPP TS 38.300)). Hereinafter, the measurement method is referred to as L3 measurement. L3 measurement results include cell measurement results and beam measurement results.

In 3GPP, a measurement method in which a measurement result is included in UCI and reported is provided as measurement of reception quality (see Non Patent Literature 12 (3GPP TS 38.212)). Hereinafter, the measurement method is referred to as L1 measurement. L1 measurement results include CSI-RS measurement results and SSB measurement results.

Conventionally, L1/L2 mobility is processed in a MAC layer (which may be hereinafter referred to as MAC) and a PHY layer (which may be hereinafter referred to as PHY). Since the MAC and the PHY are configured for each DU, they are processed for each DU. When the inter-cell L1/L2 mobility is performed between different DUs, a source DU (S-DU) constituting a cell (source cell (S-Cell)) before the inter-cell L1/L2 mobility and a target DU (T-DU) constituting a cell (target cell (T-Cell)) after the inter-cell L1/L2 mobility are different. For this reason, without any contrivance, when the S-PCell (source PCell) (which may be the S-DU) determines the cell change in the inter-cell L1/L2 mobility between the DUs, the T-PCell (target PCell) (which may be the T-DU) cannot recognize the cell change. This leads to a problem that after the inter-cell L1/L2 mobility, the T-PCell cannot perform scheduling on the UE, and communication cannot be performed between the UE and the T-PCell.

The fourth embodiment discloses a method for solving this problem.

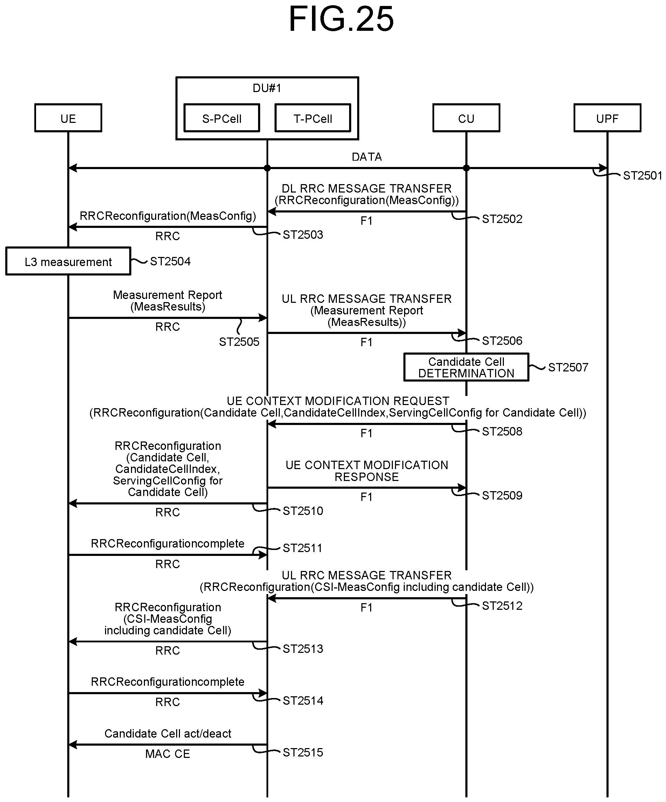

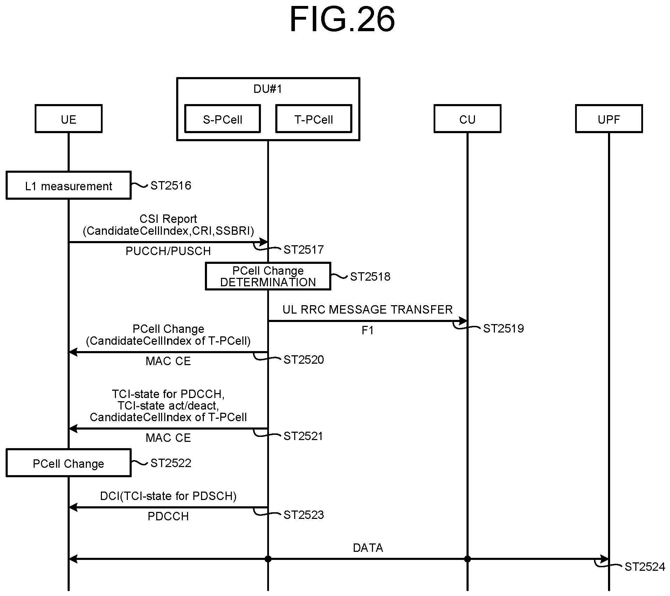

FIGS. 25 and 26 are sequence diagrams illustrating an example of an inter-cell L1/L2 mobility processing method in the DU according to the fourth embodiment. FIG. 25 illustrates the first half of the sequence, and FIG. 26 illustrates the second half of the sequence. In the example illustrated in FIGS. 25 and 26, the candidate cell is constituted in the same DU as the source cell (S-PCell). In step ST2501, the UE is connected to the source cell of DU#1, and data communication is performed between the source cell of DU#1, the CU, and the UPF. In steps ST2502 and ST2503, the CU transmits the measurement setting to the UE via the DU. In the example illustrated in FIG. 25, the L3 measurement setting is transmitted. In step ST2504, the UE performs L3 measurement using the received measurement setting. In step ST2505, the UE transmits the L3 measurement result to the source cell. In step ST2506, DU#1 constituting the source cell transmits the L3 measurement result received from the UE to the CU.

In step ST2507, the CU determines a candidate cell for inter-cell L1/L2 mobility. In the determination, the CU preferably uses the L3 measurement result received from the UE via DU#1. The number of candidate cells to be determined may be one or more. The candidate cells may include the source cell. Preferably, the CU determines the candidate cell, allocates the candidate cell identifier, and configures the setting of the candidate cell. In step ST2508, the CU notifies the DU of information instructing the UE to execute the inter-cell L1/L2 mobility processing. Preferably, information related to inter-cell L1/L2 mobility is transmitted. Preferably, the information related to inter-cell L1/L2 mobility includes, for example, the identifier of the target UE, the candidate cell identifier to be allocated to the determined candidate cell, the setting of the candidate cell, and the like. For the setting of the candidate cell, for example, information of ServingCellConfig that is used in the RRC message may be used. Consequently, DU#1 can start L1/L2 mobility processing between cells in DU#1 for the UE.

In step ST2509, DU#1 notifies the CU of a response to the inter-cell L1/L2 mobility processing setting instruction. The response may include notification of the completion of the inter-cell L1/L2 mobility processing setting. Whether the inter-cell L1/L2 mobility processing setting is allowed may be included in the response. Preferably, DU#1 transmits a positive response when the setting is allowed. When the setting is not allowed, a rejection response is preferably transmitted. Reason information may be included in the rejection response. In this way, the CU can recognize whether the setting of the candidate cell has been configured in DU#1.

In step ST2510, DU#1 notifies the UE of information instructing the UE to execute the inter-cell L1/L2 mobility processing from the source cell. Preferably, information related to inter-cell L1/L2 mobility is transmitted. Preferably, the information related to inter-cell L1/L2 mobility includes, for example, the candidate cell identifier to be allocated to the determined candidate cell, the setting of the candidate cell, and the like. For the setting of the candidate cell, for example, information of ServingCellConfig that is used in the RRC message may be used. Consequently, the UE can start L1/L2 mobility processing between cells in DU#1.

In step ST2511, the UE notifies the source cell of DU#1 of a response to the inter-cell L1/L2 mobility processing setting instruction. The response may include notification of the completion of the inter-cell L1/L2 mobility processing setting. In this way, DU#1 can recognize whether the setting of the candidate cell has been configured in UE.

DU#1 that has received the response to the inter-cell L1/L2 mobility processing setting instruction from the UE in step ST2511 may notify the CU that the UE has completed the inter-cell L1/L2 mobility processing setting. In this way, the CU can recognize whether the UE has completed the inter-cell L1/L2 mobility processing setting. The signaling in step ST2509 may be used for the notification. The signaling in step ST2509 may include information indicating whether the UE has completed the inter-cell L1/L2 mobility processing setting. The signaling in step ST2509 may be performed after step ST2511. The amount of signaling can be reduced.

In step ST2512, the CU transmits the L1 measurement setting for the inter-cell L1/L2 mobility of the candidate cell to DU#1. Information of CSI-MeasConfig that is used in the RRC message may be used for the transmission. In step ST2513, the source cell of DU#1 transmits, to the UE, the L1 measurement setting for the inter-cell L1/L2 mobility of the candidate cell. In this way, the UE can recognize the L1 measurement setting for the inter-cell L1/L2 mobility of the candidate cell. The UE configures the L1 measurement setting of the candidate cell received from the source cell of DU#1. In step ST2514, the UE that has configured the L1 measurement setting of the candidate cell transmits the L1 measurement setting completion of the candidate cell to the source cell of DU#1. Consequently, DU#1 can recognize that the UE has completed the L1 measurement setting of the candidate cell.

The transmission of the L1 measurement setting for the inter-cell L1/L2 mobility of the candidate cell may be included in the notification of the information instructing the UE to execute the inter-cell L1/L2 mobility processing. Steps ST2508 and ST2510 may include the setting of L1 measurement for the inter-cell L1/L2 mobility of the candidate cell. Signaling in steps ST2512, ST2513, and ST2514 can be reduced. The delay time of the inter-cell L1/L2 mobility processing can be reduced.

DU#1 that has received the response to the L1 measurement setting of the candidate cell from the UE in step ST2514 may notify the CU that the UE has completed the L1 measurement setting of the candidate cell. F1 signaling may be used for the notification. For example, a UL RRC MESSAGE TRANSFER message may be used. In this way, the CU can recognize whether the UE has completed the L1 measurement setting of the candidate cell.

In step ST2515, the source cell of DU#1 transmits the act/deact setting of the candidate cell to the UE. In the example illustrated in FIG. 25, MAC signaling is used. The UE that has received the act/deact setting of the candidate cell performs L1 measurement of the activated candidate cell in step ST2516. By transmitting the act/deact setting of the candidate cell, power consumption of the UE can be reduced.

The notification of the act/deact setting of the candidate cell in step ST2515 may be skipped. In this case, the UE that has received the L1 measurement setting of the candidate cell from the source cell of DU#1 in step ST2513 preferably performs the L1 measurement of all the candidate cells in step ST2516.

In step ST2517, the UE transmits the L1 measurement result of the candidate cell to the source cell. In step ST2518, DU#1 that has received the L1 measurement result of the candidate cell from the UE determines to change the cell for the UE. In the example illustrated in FIG. 26, the change of the PCell is determined.

In step ST2519, DU#1 may notify the CU of the cell change result. As the cell change result, the notification preferably includes information related to the cell change. For example, UL MESSAGE TRANSFER may be used for the notification. In this way, the CU can recognize the change of the cell of the UE.

DU#1 that has determined the cell change of the UE in step ST2518 may notify the UE that the cell has been changed to the target cell in step ST2520 from the source cell. The candidate cell identifier of the target cell may be transmitted in the notification. In the example illustrated in FIG. 26, MAC signaling is used for the notification. By using MAC signaling, DU#1 can transmit information of the determined target cell to the UE for which the cell change has been determined.

In step ST2521, DU#1 transmits the candidate cell identifier of the target cell, the TCI-state information of the target cell, and the act/deact information of the TCI-state from the source cell to the UE. By transmitting the TCI-state information, the UE can recognize the beam that is used in the target cell. In the example illustrated in FIG. 26, MAC signaling is used for the notification. By using MAC signaling, DU#1 can transmit information of the determined target cell and information of the beam in the target cell to the UE for which the cell change has been determined.

In step ST2522, the UE performs the PCell change to the target cell. In step ST2523, DU#1 transmits scheduling information from the target cell using the PDCCH. The UE receives the PDCCH of the target cell using the TCI-state received in step ST2521. In this way, the UE can receive the PDCCH of the beam of the target cell. The UE can acquire the scheduling information.

In step ST2524, the UE can perform data communication among the target cell (PCell after change) of DU#1, the CU, and the UPF.

In this way, the L1 measurement by the UE, the report of the L1 measurement result, and the determination of the cell change in steps ST2516 to ST2518, the notification of the cell change, the notification of the TCI-state information of the target cell, the cell change, and the PDCCH transmission from the beam of the target cell in steps ST2520 to ST2523 can be performed between the UE and DU#1. These can be performed only by the L1/L2 control. Therefore, inter-cell L1/L2 mobility can be executed early.

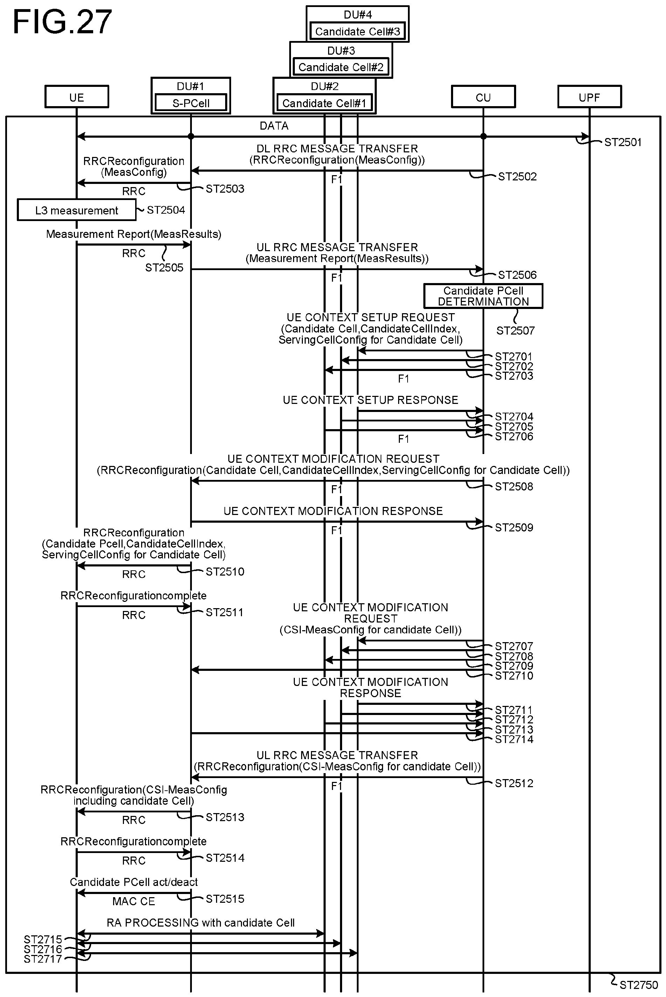

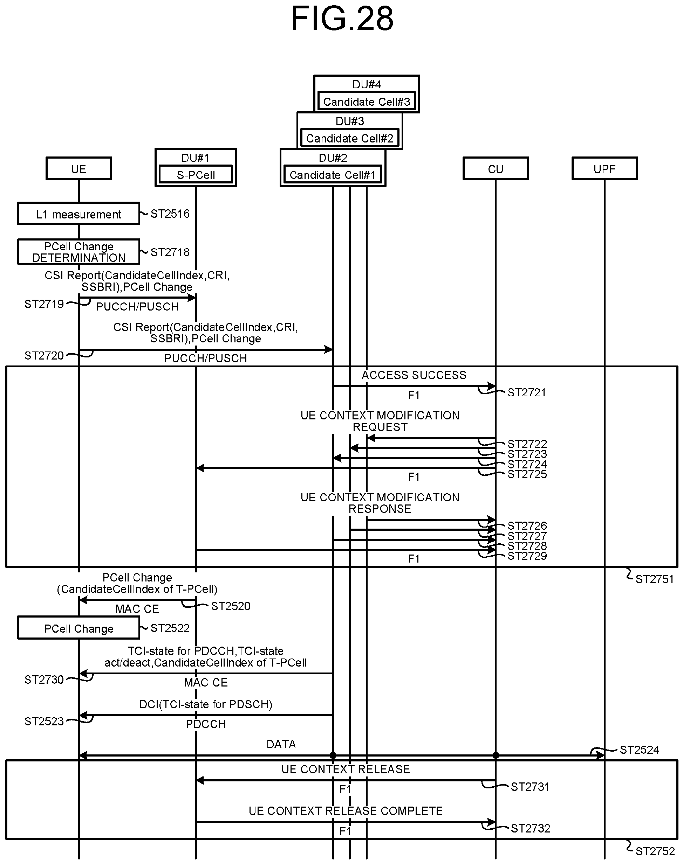

FIGS. 27 and 28 are sequence diagrams illustrating an example of an inter-cell L1/L2 mobility processing method including a cell change between different DUs according to the fourth embodiment. FIG. 27 illustrates the first half of the sequence, and FIG. 28 illustrates the second half of the sequence. Steps identical to those in FIGS. 25 and 26 are denoted by the same step numbers, and descriptions already provided are omitted. The example in FIGS. 27 and 28 discloses a case where the UE determines the cell change.

In step ST2507, the CU determines a candidate cell for inter-cell L1/L2 mobility. At this time, the CU may determine a cell constituted by a DU different from the DU constituting the source cell as the candidate cell. In the example illustrated in FIG. 27, three cells constituted by DU#2, DU#3, and DU#4 are determined as candidate cells (Candidate Cell #1, Candidate Cell #2, and Candidate Cell #3). In steps ST2701 to ST2703, the CU transmits information related to inter-cell L1/L2 mobility to candidate DUs (DU#2, DU#3, and DU#4) constituting the candidate cells. The CU may transmit information related to inter-cell L1/L2 mobility to the source DU (DU#1).

Each candidate DU that has received the information related to inter-cell L1/L2 mobility configures the setting of the candidate DU. In steps ST2704 to ST2706, each candidate DU notifies the CU of a response to the inter-cell L1/L2 mobility processing setting instruction. The response may include notification of the completion of the inter-cell L1/L2 mobility processing setting. Whether the inter-cell L1/L2 mobility processing setting is allowed may be included in the response. Preferably, each candidate DU transmits a positive response when the setting is allowed. When the setting is not allowed, a rejection response is preferably transmitted. Reason information may be included in the rejection response. In this way, the CU can recognize whether the setting of the candidate cell has been configured in each candidate DU.

In step ST2508, the CU notifies DU#1 of information instructing the UE to execute the inter-cell L1/L2 mobility processing including a cell change between different DUs. Preferably, information related to inter-cell L1/L2 mobility is transmitted. Preferably, the information related to inter-cell L1/L2 mobility includes, for example, the identifier of the target UE, the candidate cell identifier to be allocated to the determined candidate cell, the setting of the candidate cell, the identifier of the candidate DU constituting the candidate cell, and the like. For the setting of the candidate cell, for example, information of ServingCellConfig that is used in the RRC message may be used. Consequently, DU#1 can start the inter-cell L1/L2 mobility processing including a cell change between different DUs for the UE.

In step ST2510, DU#1 notifies the UE of information instructing the UE to execute the inter-cell L1/L2 mobility processing including a cell change between different DUs from the source cell. Preferably, information related to inter-cell L1/L2 mobility is transmitted. Preferably, the information related to inter-cell L1/L2 mobility includes, for example, the candidate cell identifier to be allocated to the determined candidate cell, the setting of the candidate cell, the identifier of the candidate DU constituting the candidate cell, and the like. For the setting of the candidate cell, for example, information of ServingCellConfig that is used in the RRC message may be used. Consequently, the UE can start the L1/L2 mobility processing between cells including between different DUs.

In steps ST2707 to ST2710, the CU transmits the L1 measurement setting for the inter-cell L1/L2 mobility of the candidate cell to the candidate DU. In the example illustrated in FIG. 27, DU#1 that is the source DU is also determined as the candidate DU. That is, DU#1 is the source DU and also the candidate DU. As another method, step ST2710 may be omitted. In step ST2512, the L1 measurement setting of the candidate cell may be transmitted to the source DU. Information of CSI-MeasConfig that is used in the RRC message may be used for the setting. Preferably, F1 signaling is used for the notification. For example, UE CONTEXT MODIFICATION REQUEST message may be used. In steps ST2711 to ST2714, each candidate DU notifies the CU whether the L1 measurement setting for the inter-cell L1/L2 mobility of the candidate cell has been completed. Preferably, F1 signaling is used for the notification. For example, UE CONTEXT MODIFICATION RESPONSE may be used.

Similarly to the method disclosed in the fourth embodiment, the transmission of the L1 measurement setting for the inter-cell L1/L2 mobility of the candidate cell may be included in the notification of the information instructing the UE to execute the inter-cell L1/L2 mobility processing. For example, the setting of L1 measurement for the inter-cell L1/L2 mobility of the candidate cell may be included in steps ST2701 to ST2703 and ST2510. In addition, step ST2508 may include the information of step ST2512. In addition, step ST2510 may include the information of step ST2513. A combination with the method of omitting step ST2710 described above may be used. In this way, signaling in steps ST2707 to ST2714 and steps ST2511 to ST2514 can be reduced. The delay time of the inter-cell L1/L2 mobility processing can be reduced.

In step ST2512, the CU transmits the L1 measurement setting for the inter-cell L1/L2 mobility of all the candidate cells to DU#1. Information of CSI-MeasConfig that is used in the RRC message may be used. In step ST2513, the source cell of DU#1 transmits, to the UE, the L1 measurement setting for the inter-cell L1/L2 mobility of all the candidate cells. In this way, the UE can recognize the L1 measurement setting for the inter-cell L1/L2 mobility of the candidate cell.

In steps ST2715 to ST2717, the UE may perform synchronization processing with the candidate cell of the candidate DU. The RA processing may be executed for the synchronization processing. Preferably, the uplink synchronization is performed by the RA processing, and the TA information is received from each candidate cell. In this way, synchronization between the UE and the candidate cell is possible. By performing this processing before executing the L1 measurement for the inter-cell L1/L2 mobility of the UE, it is possible to shorten the time to the start of communication with the target cell after executing the L1 measurement for the inter-cell L1/L2 mobility. As another method, the synchronization processing between the UE and the candidate cell may be performed after the cell change determination. The synchronization may be performed with only the target cell instead of all candidate cells or activated candidate cells. Processing of the UE can be facilitated. Power consumption of the UE can be reduced.

In step ST2516, the UE performs L1 measurement on the candidate cell of the activated candidate DU.

In step ST2718, the UE determines the cell change by using the L1 measurement result of the candidate cell. The UE that has determined the cell change transmits the L1 measurement result for inter-cell L1/L2 mobility to the source cell and the target cell in steps ST2719 and ST2720. Preferably, the L1 measurement result includes information related to the target cell after the cell change determination and the cell change. The L1 measurement result may include information related to the source cell. The L1 measurement result may include information related to the DU. For example, information related to the DU constituting the target cell may be included. For example, information related to the DU constituting the source cell may be included. The information related to the DU may be the identifier of the DU. In this way, the source cell and the target cell can recognize that the cell change to the target cell has been determined.

In step ST2721, the target DU (DU#2) constituting the target cell that has recognized that it has become the target cell by the cell change notifies the CU that the cell change has been determined by the inter-cell L1/L2 mobility. The target DU may transmit information related to the cell change to the CU. Consequently, the CU can recognize that the cell change of the target DU to the target cell has been determined. These notifications may be transmitted from the source DU (DU#1) constituting the source cell to the CU.

In steps ST2722 to ST2725, the CU may notify each candidate DU that the cell has been changed to the target DU and/or the target cell by the inter-cell L1/L2 mobility including a cell change between different DUs. The other candidate DU that has not been determined as the target DU can recognize the target DU and/or the target by the inter-cell L1/L2 mobility including a cell change between different DUs. The notification may include information of setting cancellation of the candidate cell. Consequently, the other candidate DU can cancel the setting of the candidate DU. The source DU may be included as the other candidate DU. The target DU may be included as the other candidate DU.

In steps ST2726 to ST2729, the other candidate cell notifies the CU of a response to the cell change notification. In a case where the cell change notification includes information of setting cancellation of the candidate cell, the response may include information as to whether the setting cancellation of the candidate cell has been completed. Consequently, the CU can recognize whether the candidate DU has canceled the setting of the candidate cell.

The source DU that has received the cell change of the UE in step ST2719 may notify the UE that the cell has been changed to the target cell in step ST2520 from the source cell. The candidate cell identifier of the target cell may be transmitted. The identifier of the target DU constituting the target cell may be transmitted.

In step ST2522, the UE changes the target cell.

The target DU that has received the cell change of the UE in step ST2720 transmits the candidate cell identifier of the target cell, the TCI-state information of the target cell, and the act/deact information of the TCI-state from the target cell to the UE in step ST2730. By transmitting the TCI-state information, the UE can recognize the beam that is used in the target cell.

In step ST2523, the target DU transmits scheduling information from the target cell by using the PDCCH. The UE receives the PDCCH of the target cell using the TCI-state received in step ST2730. In this way, the UE can receive the PDCCH of the beam of the target cell. The UE can acquire the scheduling information.

In step ST2524, the UE can perform data communication among the target cell of the target DU, the CU, and the UPF.

In this way, the L1 measurement for inter-cell L1/L2 mobility by the UE, the determination of the cell change, the report of the L1 measurement result for inter-cell L1/L2 mobility in steps ST2516 and ST2718 to ST2720, and the notification of the cell change, the cell change, the notification of the TCI-state information of the target cell, and the PDCCH transmission from the beam of the target cell in steps ST2520 to ST2523 including step ST2730 can be performed between the UE and the source DU and between the UE and the target DU. These can be performed only by the L1/L2 control. Therefore, inter-cell L1/L2 mobility including a cell change between different DUs can be executed early.

The processing in steps ST2721 to ST2729 described above may not be performed before the cell change of the inter-cell L1/L2 mobility. The processing may be performed after the cell change. The execution timing of the processing may be before or after notification of the TCI-state information to the UE. For example, the processing may be performed after step ST2730 or step ST2523. By reducing the load of the target DU, the cell change processing by the inter-cell L1/L2 mobility can be performed earlier.

If the target cell is not a cell constituted by the source DU, the CU may notify the source DU of the release of the UE CONTEXT in step ST2731. The source DU that has received the release releases the UE CONTEXT. In step ST2732, the source DU notifies the CU of the release completion of the UE CONTEXT. In this way, the UE context can be dismissed in the source DU. The storage capacity can be reduced in the source DU.

The S-PCell notifies the UE of information related to the cell after the cell change. The information related to the cell after the cell change includes information indicating the cell change to the target cell, the candidate cell identifier of the target cell, TCI-state information of the target cell, act/deact information of the TCI-state, a combination of these pieces of information, and the like. The UE notifies the T-PCell of information related to the cell after the cell change. The T-PCell that has received the information recognizes that the T-PCell is the target cell.

A method for notification of information related to the cell from the S-PCell to the UE is disclosed. The information related to the cell may be included in the MAC signaling and transmitted. For example, the information related to the cell may be included in the MAC CE and transmitted. The S-PCell may include the information related to the cell in the MAC CE and transmit the MAC CE to the UE by using the PDCCH. As another method, information related to the cell may be included in the DCI and transmitted. The S-PCell may include the information related to the cell in the DCI and transmit the DCI to the UE on the PDCCH. Information related to the cell can be transmitted to the UE early.

A method for notification of information related to the cell from the UE to the T-PCell is disclosed. The information related to the cell may be included in the UCI and transmitted. The UE may include the information related to the cell in the UCI and transmit the UCI to the T-PCell on the PUCCH or the PUSCH. The information can be transmitted to the T-PCell early.

The information related to the cell may be transmitted together with the SR. The SR and the information related to the cell may be multiplexed and transmitted on the PUCCH or the PUSCH. It is possible to notify the T-PCell of the cell change to the T-PCell and request scheduling.

The CU may determine the setting of the SR and/or PUCCH in each candidate cell configured for the UE. The setting may be the same for all candidate cells. SR transmission processing of the UE can be simplified. The setting may be different for each candidate cell. The setting can be configured according to the resource usage status in the candidate cells. The determination may be made when the CU determines a candidate cell for inter-cell L1/L2 mobility. For example, the determination may be made in step ST2507 in FIG. 27.

The CU may transmit the setting information to each candidate cell. For example, the CU may include the setting information in the information related to the inter-cell L1/L2 mobility to be transmitted to the candidate DU constituting the candidate cell. For example, the CU may transmit the setting information of each candidate cell to the candidate DU constituting each candidate cell in steps ST2701 to ST2703 in FIG. 27. For example, the candidate DU that has received the setting information preferably uses the setting information to receive the SR or the PUCCH from the UE when the candidate cell constituted becomes the T-PCell.

The candidate DU constituting the candidate cell may determine the setting of the SR and/or PUCCH in each candidate cell configured for the UE. The determination may be made when information related to inter-cell L1/L2 mobility is received from the CU. For example, each candidate DU may make the determination in response to reception in steps ST2701 to ST2703 in FIG. 27. The candidate DU transmits the setting information in the determined candidate cell to the CU. For example, the setting information may be transmitted as a response to the information related to the inter-cell L1/L2 mobility received from the CU. For example, transmission may be performed in steps ST2704 to ST2706 in FIG. 27. The CU can recognize the setting information of the candidate cell determined by the candidate DU.

The CU transmits the setting of the SR and/or PUCCH of the candidate cell to the UE. The CU may transmit the setting of the SR and/or PUCCH of the candidate cell to the UE through the S-PCell. The transmission of the setting information is preferably performed before the UE notifies the T-PCell of information related to the cell. For example, the setting information may be included in the information related to inter-cell L1/L2 mobility. For example, the setting information may be included in the setting of the candidate cell. The CU may include the setting information in the information related to the inter-cell L1/L2 mobility and transmit the setting information to the UE via the S-PCell. For example, the CU may transmit the setting information to the S-PCell in step ST2508 of FIG. 27. For example, the S-PCell may transmit the setting information to the UE in step ST2510 of FIG. 27. The UE that has received the setting information from the S-PCell can recognize the setting information of the candidate cell. The UE can transmit the SR using the SR setting information of the candidate cell that has become the T-PCell. The UE can multiplex the SR and the information related to the cell and transmit the SR using the PUCCH setting information of the candidate cell that has become the T-PCell.

The information related to the cell may be transmitted together with CSI-RS Reference Indicator (CRI). Information related to the cell may be transmitted along with CSI including CRI and/or SBBRI. The information related to the cell and the CRI and/or SBBRI may be multiplexed and transmitted on the PUCCH or the PUSCH. It is possible to notify the T-PCell of the cell change to the T-PCell and give notification of the measurement result of the RS. The T-PCell can recognize the measurement result of the RS in the UE.

The information related to the cell may be transmitted together with the TCI-state. The information related to the cell and the TCI-state may be multiplexed and transmitted on the PUCCH or the PUSCH. It is possible to notify the T-PCell of the cell change to the T-PCell and give notification of QCL information. It is possible to notify the T-PCell of which beam is used for transmission.

Another method for notification of information related to the cell from the UE to the T-PCell is disclosed. RA processing may be used to transmit information related to the cell. For example, information related to the cell may be associated with the PRACH. Information related to the cell may be associated with the sequence of PRACH. For example, a PRACH with a predetermined sequence is associated with information related to the cell. The UE transmits the PRACH having the predetermined sequence to the T-PCell. The T-PCell can recognize that the cell (which may be DU) has become the T-PCell by receiving the PRACH having the predetermined sequence. The predetermined sequence may be statically determined in advance in a standard or the like. Alternatively, the predetermined sequence may be included in the setting of the candidate cell in advance and provided as notification to the UE.

Another method for notification of information related to the cell from the UE to the T-PCell is disclosed. Four-step RA processing may be used to transmit information related to the cell. The information related to the cell may be included in the Msg3 of the four-step RA processing. The information related to the cell may be included in the Msg3 of the RA processing for the synchronization processing performed between the UE and the T-PCell. For example, the UE performs the RA processing with the T-PCell, which is the cell after the cell change, by the inter-cell L1/L2 mobility, and transmits the Msg3 including the information related to the cell to the T-PCell. The T-PCell can receive information related to the cell by receiving the Msg3. In this way, it is possible to give notification of information related to the cell together with the synchronization processing.

The information related to the cell may not be included in the RRC message. The Msg3 for notification of the information related to the cell may not include the RRC message. This makes it possible to perform processing without RRC. For example, it is not necessary for the DU to notify the CU of the RRC message. Therefore, processing can be performed early.

Two-step RA processing may be used to transmit information related to the cell. The information related to the cell may be included in MsgA of the two-step RA processing. The information related to the cell may be included in the MsgA of the RA processing for the synchronization processing performed between the UE and the T-PCell. For example, the UE performs the RA processing with the T-PCell, which is the cell after the cell change, by the inter-cell L1/L2 mobility, and transmits the MsgA including the information related to the cell to the T-PCell. The T-PCell can receive information related to the cell by receiving the MsgA. In this way, it is possible to give notification of information related to the cell together with the synchronization processing.

The information related to the cell may not be included in the RRC message. The MsgA for notification of the information related to the cell may not include the RRC message. This makes it possible to perform processing without RRC. For example, it is not necessary for the DU to notify the CU of the RRC message. Therefore, processing can be performed early.

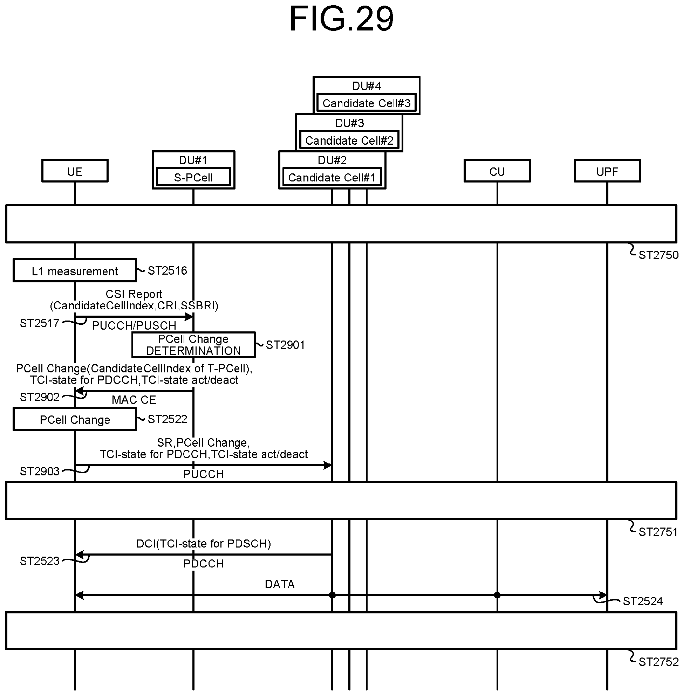

FIG. 29 is a sequence diagram illustrating an example of an inter-cell L1/L2 mobility processing method between different DUs according to the fourth embodiment. Steps identical to those in FIGS. 27 and 28 are denoted by the same step numbers, and descriptions already provided are omitted. In the example illustrated in FIG. 29, a method of transmitting information related to the cell from the UE to the target cell (T-PCell) together with the SR is illustrated. A case where candidate cell #1 becomes the T-PCell is illustrated. DU#1 is an S-DU constituting the S-PCell. DU#2 is a T-DU constituting the T-PCell.

In step ST2516, the UE performs L1 measurement on the candidate cell using the setting of the candidate cell of the inter-cell L1/L2 mobility received from the S-PCell. In step ST2517, the UE transmits the L1 measurement result of the candidate cell to the S-PCell. In step ST2901, the S-PCell determines the PCell change by using the L1 measurement result of the candidate cell received from the UE, and determines the T-PCell. Here, candidate cell #1 becomes a T-PCell.

In step ST2902, the S-PCell transmits information related to the cell to the UE. MAC signaling may be used for the transmission. In step ST2522, the UE performs the PCell change using the information received from the S-PCell.

In step ST2903, the UE transmits information related to the cell to the T-PCell. Here, the information is transmitted together with the SR. For example, the information is included in the UCI together with the SR and transmitted on the PUCCH. The T-PCell receives the information. In this way, the T-PCell recognizes that the PCell of the UE has been changed to the T-PCell. In addition, the T-PCell can recognize the TCI-state for the UE and the activation/deactivation of the TCI-state. The T-PCell can determine which beam is used for the UE. In addition, by transmitting the information together with the SR, the T-PCell can recognize that scheduling has been requested from the UE together with the change of the PCell. The T-PCell can be scheduled early for the UE.

In step ST2523, the T-PCell transmits scheduling information of the PDSCH for data transmission to the UE. TCI-state information of the PDSCH may be transmitted. In step ST2524, the T-PCell transmits data to the UE using the PDSCH. At this time, the beam corresponding to the TCI-state transmitted in step ST2523 is preferably used.

In this way, the PCell change can be transmitted from the S-PCell to the T-PCell via the UE. Even when the inter-cell L1/L2 mobility is performed between different DUs, it is possible to recognize that the T-PCell has become the PCell after the inter-cell L1/L2 mobility. The T-PCell can be scheduled for the UE, and communication can be continued between the UE and the T-PCell.

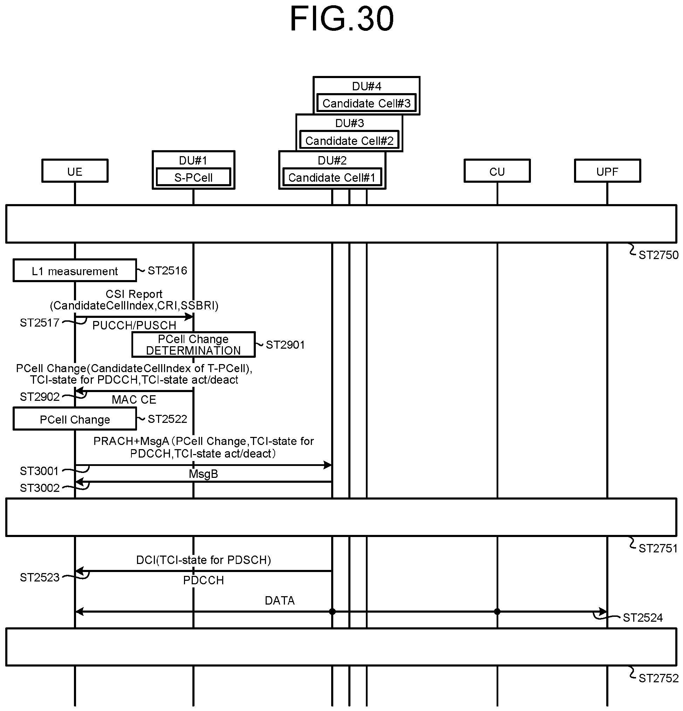

FIG. 30 is a sequence diagram illustrating another example of an inter-cell L1/L2 mobility processing method between different DUs according to the fourth embodiment. Steps identical to those in FIG. 29 are denoted by the same step numbers, and descriptions already provided are omitted. The example illustrated in FIG. 30 illustrates a method of transmitting the information related to the cell from the UE to the T-PCell using two-step RA processing.

In step ST3001, the UE performs RA processing on the T-PCell. Here, two-step RA processing is performed. In the RA processing, the UE transmits information indicating that the PCell is changed to the T-PCell, the TCI-state information in the T-PCell, and the activation/deactivation information of the TCI-state. Here, information related to the cell is included in MsgA and transmitted. The T-PCell receives the information transmitted from the UE. In this way, the T-PCell recognizes that the PCell of the UE has been changed to the T-PCell. In addition, the T-PCell can recognize the TCI-state for the UE and the activation/deactivation of the TCI-state. The T-PCell can determine which beam is used for the UE. In addition, by transmitting the information by the RA processing, the T-PCell can recognize early that the T-PCell has become the PCell.

In the processing of step ST2750, for example, in steps ST2715 to ST2717, the UE may not perform the RA processing on the candidate cell. The UE becomes able to synchronize with the T-PCell by performing the RA processing on the T-PCell in steps ST3001 and ST3002. The UE becomes able to perform transmission to the T-PCell.

Disclosed below is another method for solving the above problem. An interface is provided between the DUs. A Uu interface between the base station and the UE may be applied as an interface between the DUs. The DU is preferably configured to have some or all of the functions of the UE. The S-DU preferably transmits information related to the cell to the T-DU using the inter-DU interface. The T-DU receives the information related to the cell transmitted from the S-DU. In this way, information related to the cell can be directly transmitted and received between the DUs. For example, since it is not necessary to give notification of the information related to the cell via the CU, the information can be transmitted and received early with a low delay.

An interface between IAB nodes may be applied as an interface between the DUs. Signaling processing between IAB nodes may be applied. The DU preferably has some or all of the functions of the IAB-DU and some or all of the functions of the IAB-MT (IAB-Mobile Termination). In the IAB-DU and the IAB-MT, RLC, MAC, and PHY may be configured. These protocols and functions are preferably used for the interface between the DUs. By applying the existing standard in this manner, it is possible to avoid complication of processing.

By adopting the methods disclosed in the present embodiment, the inter-cell L1/L2 mobility between different DUs can be executed. In addition, since mobility processing without RRC and mobility processing without a CU can be executed, inter-cell L1/L2 mobility between different DUs can be performed early with a low delay. Communication interruption time and communication delay time by inter-cell L1/L2 mobility processing between different DUs can be reduced.

### Fifth Embodiment.

Conventional L1/L2 mobility, which is mobility within the same cell, has the same per-cell identifier for UEs. However, inter-cell L1/L2 mobility involves a cell change, which leads to a problem, for example, that a per-cell identifier for the UE used in the source cell cannot be used in the target cell, and the UE cannot communicate with the target cell.

The fifth embodiment discloses a method for solving this problem.

The same per-cell identifier for the UE is used before and after inter-cell L1/L2 mobility. For example, the per-cell identifier for the UE used in the S-PCell is also used in the T-PCell. The per-cell identifier for the UE may hereinafter be referred to as the UE identifier. The per-cell identifier for the UE is exemplified by RNTI. Examples include C-RNTI, TC-RNTI, and CS-RNTI.

A method of using the UE identifier used in the S-PCell in the T-PCell is disclosed. The source DU (S-DU) constituting the S-PCell transmits the UE identifier in the S-PCell to the DU (candidate DU) constituting the candidate cell. The UE identifier may be transmitted by using the inter-DU interface disclosed above. The candidate DU can recognize the UE identifier used in the S-PCell by receiving the UE identifier from the S-DU. The number of candidate DUs may be one or more. The number of candidate cells may also be one or more.

The candidate cell may include the S-PCell. When the S-PCell is set as a candidate cell and is determined as the target PCell by the inter-cell L1/L2 mobility, the L1/L2 mobility is within the same cell. For example, a beam change may be performed in the S-PCell for the UE.

The S-DU may transmit the UE identifier in the S-PCell to the CU. The CU transmits the UE identifier in the S-PCell to the candidate DU. An F1 interface may be used for transmission from the S-DU to the CU. An F1 interface may be used for transmission from the CU to the candidate DU. The transmission of the UE identifier from the S-DU to the CU may be included in the inter-cell L1/L2 mobility request of the UE and transmitted. The transmission of the UE identifier from the CU to the candidate DU may be included in the inter-cell L1/L2 mobility setting to the candidate DU and transmitted. The candidate DU can recognize the UE identifier used in the S-PCell by receiving the UE identifier from the S-DU.

When the PCell is changed by the inter-cell L1/L2 mobility, the candidate DU constituting the target T-PCell uses the UE identifier in the S-PCell as the UE identifier in the T-PCell. In this manner, by transmitting the UE identifier in the S-PCell to the candidate DU in advance, regardless of which candidate DU constitutes the cell that has become the T-PCell by the inter-cell L1/L2 mobility, the DU constituting the T-PCell can acquire the UE identifier in the S-PCell, and the UE identifier can be used for communication in the T-PCell.

A different UE identifier may be set for each cell in the gNB. For example, in a case where the gNB constitutes k cells and the settable range of UE identifiers is zero to N, zero to M_1-1 are set in cell #1, M_1-1 to M_2-1 are set in cell #2, and M_(k-1) to M_k-1 are set in cell #k. M_k-1 only needs to be N or less. In this way, the UE identifiers in the S-PCell and the T-PCell do not collide. Therefore, for example, in the inter-cell L1/L2 mobility, even in a case where the UE identifier in the S-PCell is used as the UE identifier in the T-PCell, the UE of the mobility target can be identified in the T-PCell.

Disclosed below is another method for solving the above problem. The candidate DU determines a UE identifier in the candidate cell. The UE identifier in the candidate cell may be set by the DU constituting the candidate cell. For example, setting may be configured by MAC. The candidate DU notifies the S-DU of the UE identifier for use when the candidate cell becomes the T-PCell. The UE identifier may be transmitted by using the inter-DU interface disclosed above. The S-DU can recognize the UE identifier for use when the candidate cell becomes the T-PCell by receiving the UE identifier from the candidate DU.

The S-DU may transmit the UE identifier in the S-PCell to the candidate DU. The UE identifier in the S-PCell may be transmitted by using the inter-DU interface disclosed above. The S-DU may transmit the UE identifier in the S-PCell to the candidate DU through the CU. F1 signaling may be used for transmission from the S-DU to the CU. For example, the transmission may be performed in step ST2506 of FIG. 25. F1 signaling may be used for transmission from the CU to the candidate DU. For example, transmission may be performed in steps ST2701 to ST2703 in FIG. 27. The candidate DU receives the UE identifier in the S-PCell. The candidate DU may or may not consider the UE identifier in the S-PCell when determining the UE identifier in the candidate cell. For example, the UE identifier in the candidate cell may be the same as the UE identifier in the S-PCell. When notifying the UE of the UE identifier in the candidate cell from the S-PCell, information indicating that the UE identifier is the same as that in the S-PCell may be transmitted. There is no need to transmit the UE identifier in the candidate cell to the UE, and the amount of information can be reduced. The candidate DU may make, for example, the UE identifier in the candidate cell a UE identifier different from the UE identifier used for other UEs in the candidate cell. It is possible to avoid collision of UE identifiers with other UEs.

The candidate DU may transmit the UE identifier in the candidate cell to the CU. The CU transmits the UE identifier in the candidate cell to the S-DU. The F1 interface may be used to transmit the UE identifier from the candidate DU to the CU and/or from the CU to the S-DU. The transmission of the UE identifier from the candidate DU to the CU may be included in the candidate cell setting for the inter-cell L1/L2 mobility and transmitted. The transmission of the UE identifier from the CU to the S-DU may be included in the inter-cell L1/L2 mobility setting and transmitted. The S-DU can recognize the UE identifier for use in the candidate cell by receiving the UE identifier from the candidate DU.

The S-DU transmits the UE identifier in the candidate cell to the UE. The S-PCell may transmit the UE identifier in the candidate cell to the UE. The UE identifier may be included in the setting of the candidate cell of the inter-cell L1/L2 mobility and transmitted. The information related to the candidate cell and the UE identifier in the candidate cell are transmitted preferably in association with each other. RRC signaling may be used for the transmission. More information can be transmitted. As another method, MAC signaling may be used. The UE identifier can be transmitted early. The UE receives the UE identifier for use in the candidate cell. The UE stores the UE identifier for use in the candidate cell.

The UE preferably uses the UE identifier in the candidate cell that has become the T-PCell in the communication with the T-PCell after the inter-cell L1/L2 mobility. When the PCell is changed by the inter-cell L1/L2 mobility, the candidate DU constituting the T-PCell uses the UE identifier in the candidate cell that has become the T-PCell as the UE identifier in the T-PCell. In this manner, by transmitting the UE identifier in the candidate cell from the candidate DU to the S-DU in advance, regardless of which candidate DU constitutes the cell that has become the T-PCell by the inter-cell L1/L2 mobility, the UE identifier set by the candidate DU can be used for communication between the UE and the T-PCell.

When the UE successfully communicates with the T-PCell after the inter-cell L1/L2 mobility, the setting of other candidate cells may be cleared. The setting may be discarded. When the UE successfully communicates with the T-PCell after the inter-cell L1/L2 mobility, the UE identifier in other candidate cells may be cleared. The UE identifier may be discarded. In this way, the storage capacity required by the UE can be reduced.

The candidate DU does not allocate the UE identifier to other UEs until the candidate DU recognizes that the candidate cell constituted by the candidate DU has not become the T-PCell. Alternatively, the UE identifier is not allocated to other UEs until the candidate DU recognizes that the candidate cell constituted by the candidate DU has become the T-PCell. The UE to be subjected to the inter-cell L1/L2 mobility may use the UE identifier until the connection with the T-PCell is released or another UE identifier is set from the T-PCell. In this way, even when there is a period from the setting of the candidate cell until the PCell change is performed by the inter-cell L1/L2 mobility, it is possible to avoid collision between the identifier of the UE to be subjected to the mobility and the identifier of other UEs.

The UE identifier in the candidate cell may be set by the CU. The RRC of the CU may configure the setting. The CU transmits the UE identifier in the candidate cell constituted by the candidate DU to the candidate DU. The candidate cell and the UE identifier may be transmitted in association with each other. When the candidate cell becomes the T-PCell, the candidate DU that has received the UE identifier in the candidate cell uses the UE identifier for the UE.

The CU transmits the UE identifier in the candidate cell to the S-DU. The UE identifier in the candidate cell and the candidate cell may be transmitted in association with each other. The CU may include the UE identifier in the candidate cell in the setting of the candidate cell and transmit the UE identifier to the S-DU. F1 signaling may be used for transmission of the UE identifier in the candidate cell from the CU to the S-DU. For example, the UE identifier in the candidate cell may be included in the RRC message. The RRC message may be encapsulated and transmitted by F1 signaling.

The S-DU transmits, to the UE, the identifier in the candidate cell received from the CU. The S-DU transmits the UE identifier in the candidate cell from the S-PCell to the UE. The UE identifier in the candidate cell and the candidate cell may be transmitted in association with each other. The S-DU may include the UE identifier in the candidate cell in the setting of the candidate cell and transmit the UE identifier to the UE. The UE identifier in the candidate cell may be included in the RRC message. RRC signaling may be used for transmission of the UE identifier in the candidate cell from the S-DU to the UE. As another method, MAC signaling may be used for transmission of the UE identifier in the candidate cell from the S-DU to the UE. For example, the UE identifier may be included in the MAC CE and transmitted. The UE identifier can be transmitted early. As another method, the UE identifier in the candidate cell may be included in the DCI. PDCCH may be used for transmission of the UE identifier in the candidate cell from the S-DU to the UE.

In this way, the CU can determine the UE identifier in the candidate cell. The UE can use the UE identifier in the candidate cell determined by the CU when any candidate cell becomes the T-PCell.

Disclosed below is another method for solving the above problem. The S-PCell transmits the UE identifier in the T-PCell to the UE. The S-PCell determines the T-PCell after PCell change by inter-cell L1/L2 mobility. The S-PCell transmits information related to the change of the PCell to the UE. The identifier of the T-PCell, the TCI-state information in the T-PCell, and the activation/deactivation information of the TCI-state are transmitted as the information related to the change of the PCell. The S-PCell transmits the UE identifier in the T-PCell to the UE together with the information related to the change of the PCell or included in the information related to the change of the PCell. As a transmission method, for example, MAC signaling may be used. The MAC CE may include the UE identifier in the T-PCell. Some or all of the UE identifier in the T-PCell, the identifier of the T-PCell, the TCI-state information, and the activation/deactivation information of the TCI-state may be combined and included in the MAC CE. The UE can receive the UE identifier in the T-PCell together with the PCell change instruction from the S-PCell.

The S-DU may derive the UE identifier in the T-PCell from the UE identifier in the candidate cell. The UE identifier in the candidate cell is preferably acquired by appropriately applying the above-described methods.

In this way, the UE can acquire the UE identifier in the T-PCell. The UE can communicate with the T-PCell using the UE identifier in the T-PCell received from the S-PCell.

Disclosed below is another method for solving the above problem. The T-DU sets the UE identifier in the T-PCell. After inter-cell L1/L2 mobility, the UE communicates with the T-PCell by using the UE identifier in the T-PCell set by the T-DU.

The T-DU transmits the UE identifier in the T-PCell to the UE. A transmission method is disclosed. The UE performs T-PCell and RA processing in the PCell change by inter-cell L1/L2 mobility processing. The T-PCell transmits the UE identifier in the T-PCell to the UE in the RA processing. Four-step RA processing may be performed as the RA processing. In the four-step RA processing, the T-PCell preferably includes the UE identifier in the Msg2 and transmit the Msg2 to the UE. As the RA processing, two-step RA processing may be performed. In the two-step RA processing, the T-PCell preferably includes the UE identifier in the MsgB and transmit the MsgB to the UE. The UE receives the UE identifier from the T-PCell in the RA processing.

The UE preferably uses the RNTI for the RA processing to receive the Msg2 or the MsgB. The RNTI for the RA processing may be statically determined in advance in a standard or the like. Alternatively, the RNTI for the RA processing may be transmitted from the S-PCell to the UE in advance.

In this way, the UE can receive the UE identifier from the T-PCell in the RA processing. The UE preferably uses the UE identifier set by the T-PCell for communication with the T-PCell. The UE becomes able to communicate with the T-PCell.

It has been disclosed that the T-PCell uses the RA processing to transmit the UE identifier in the T-PCell to the UE. The method may be appropriately applied as a method in which the UE receives the UE identifier (which may be the UE identifier for the case that the candidate cell becomes the T-PCell) in the candidate cell from the candidate cell. The candidate cell may use RA processing to transmit the UE identifier in the candidate cell to the UE. The UE may perform the RA processing with the candidate cell before the PCell is changed by the inter-cell L1/L2 mobility. For example, the UE may perform the RA processing with the candidate cell before the PCell is changed, to perform measurement on the candidate cell or to transmit the measurement result of the candidate cell to the candidate cell. Each candidate cell transmits the UE identifier in the candidate cell to the UE in the RA processing. Preferably, the methods disclosed above are appropriately applied to the setting of the UE identifier in the candidate cell. In this way, the candidate cell can transmit the UE identifier in the candidate cell to the UE. Therefore, the candidate cell that has become the T-PCell by the inter-cell L1/L2 mobility can communicate with the UE by using the UE identifier.

Disclosed below are other methods. After PCell change by inter-cell L1/L2 mobility, the T-DU transmits the UE identifier in the T-PCell to the UE. The T-PCell transmits the UE identifier in the T-PCell to the UE. For the transmission, for example, MAC signaling may be used. Notification of the UE identifier can be provided to the UE early. Alternatively, RRC signaling may be used for the transmission. The UE identifier may be included in a message for RRC reconfiguration and transmitted. For example, the UE identifier may be included in RRC Reconfiguration, which is an existing message. The UE identifier in the T-PCell may be transmitted together with the RRC reconfiguration in the T-PCell. Alternatively, L1/L2 signaling may be used for the transmission. The UE identifier in the T-PCell may be included in the DCI and transmitted on the PDCCH. Notification of the UE identifier can be provided to the UE earlier.

A method for the UE to acquire the UE identifier to be used until the UE identifier in the T-PCell is received from the T-PCell is disclosed. The UE identifier to be used until the UE identifier in the T-PCell is received from the T-PCell may be statically determined in a standard or the like. For example, a default UE identifier may be provided. As another method, the S-DU may set the UE identifier, include the UE identifier in the setting of the candidate cell, and notify the UE from the S-PCell. As another method, the T-DU may set the UE identifier, include the UE identifier in the setting of the candidate cell, and notify the UE via the S-PCell. As another method, the CU may set the UE identifier, include the UE identifier in the setting of the candidate cell, and notify the S-DU and the T-DU. The S-DU may include the UE identifier in the setting of the candidate cell, and notify the UE from the S-PCell.

In this way, the UE can acquire the UE identifier in the T-PCell after the inter-cell L1/L2 mobility, and can communicate with the T-PCell.

The foregoing method is applicable to inter-cell L1/L2 mobility within the same DU, and also to inter-cell L1/L2 mobility between different DUs. In either case, similar effects can be obtained.

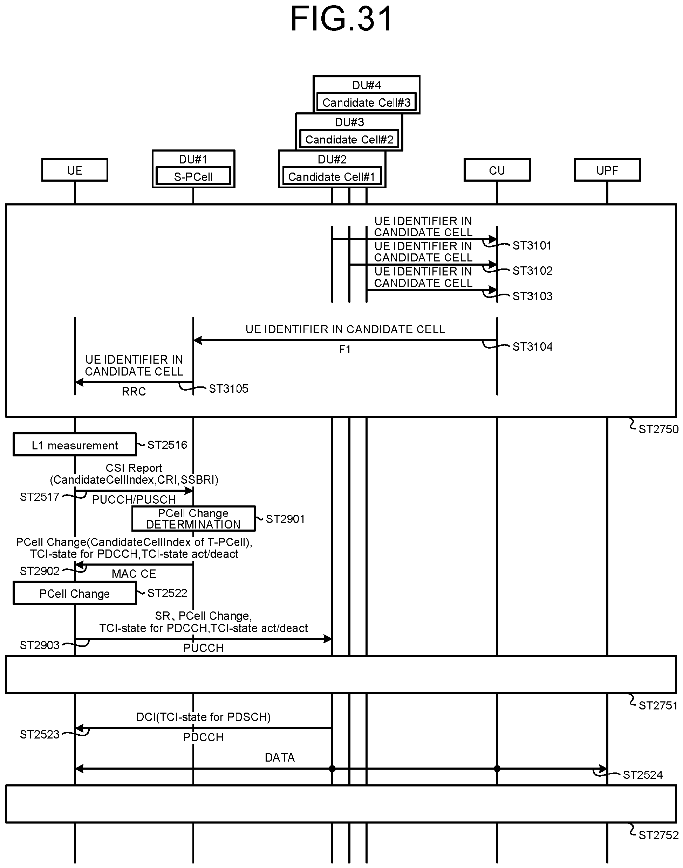

FIG. 31 is a sequence diagram illustrating an example of a method for notification of the UE identifier in the T-PCell in inter-cell L1/L2 mobility between different DUs according to the fifth embodiment. Steps identical to those in FIG. 29 are denoted by the same step numbers, and descriptions already provided are omitted. In the example illustrated in FIG. 31, an example of a method for transmitting the UE identifier in the candidate cell from the S-PCell to the UE is disclosed.

In steps ST3101 to ST3103, the candidate DUs (DU#2, DU#3, and DU#4) determine the UE identifier of the UE to be subjected to the inter-cell L1/L2 mobility for use in the candidate cell constituted by the candidate DU, and transmit the UE identifier to the CU. The candidate DU may transmit the candidate cell and the UE identifier in association with each other. Steps ST3101 to ST3103 may be performed in the processing of step ST2750 which is the processing described above with reference to FIG. 27. The candidate DU that has received the inter-cell L1/L2 mobility setting request from the CU preferably transmits the UE identifier. For example, in steps ST2701 to ST2703 illustrated in FIG. 27, the candidate DU that has received the inter-cell L1/L2 mobility setting request from the CU determines the UE identifier of the UE to be subjected to the inter-cell L1/L2 mobility for use in the candidate cell constituted by the candidate DU. In the inter-cell L1/L2 mobility setting request response in steps ST2704 to ST2706, the candidate DU may transmit the UE identifier for use in the candidate cell to the CU. In this way, the CU can recognize the UE identifier for use in each candidate cell.

In step ST3104 of FIG. 31, the CU transmits the UE identifier for use in the candidate cell to the S-DU (DU#1). Step ST3104 may be performed in the processing of step ST2750 described above. For example, in the inter-cell L1/L2 mobility setting in step ST2508 described in FIG. 27, the CU may transmit the UE identifier for use in the candidate cell to the S-DU. In this way, the S-DU can recognize the UE identifier for use in each candidate cell.

In step ST3105, the S-DU transmits the UE identifier for use in the candidate cell from the S-PCell to the UE. Step ST3105 may be performed in the processing of step ST2750 described above. The identifier of the candidate cell may be transmitted in step ST3105. The identifier of the candidate cell and the UE identifier for use in the candidate cell may be transmitted in association with each other. For example, in the inter-cell L1/L2 mobility setting in step ST2510 described in FIG. 27, the S-DU may transmit the UE identifier for use in the candidate cell to the UE. In this way, the UE can recognize the UE identifier for use in each candidate cell.

The UE uses the UE identifier of the candidate cell to be the T-PCell for reception from the T-PCell after the PCell change. Thereafter, the UE preferably uses the UE identifier for communication with the T-PCell. In order to receive the PDCCH from the T-PCell in step ST2523, the UE preferably uses the UE identifier of the candidate cell to be the T-PCell received from the S-PCell in step ST3105.

In this way, the UE can acquire the UE identifier in the T-PCell after the inter-cell L1/L2 mobility, and can communicate with the T-PCell.

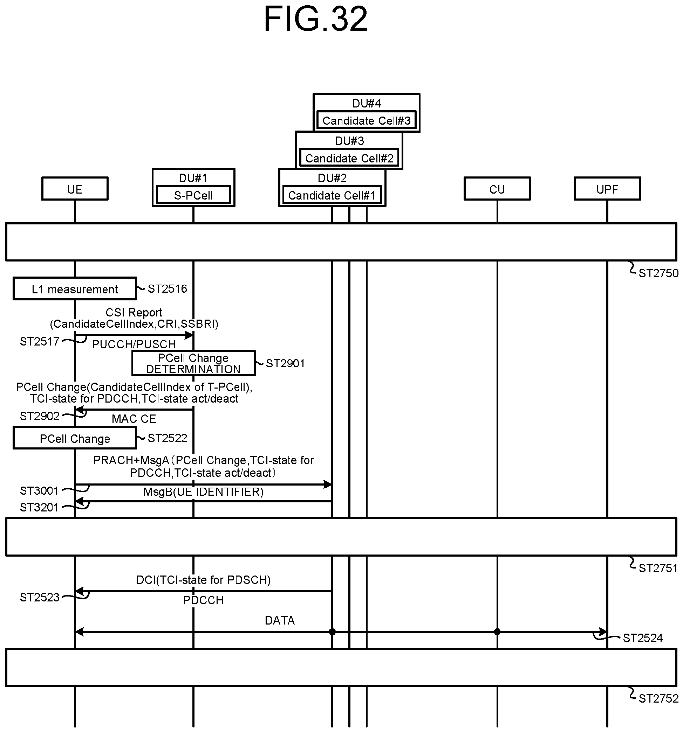

FIG. 32 is a sequence diagram illustrating another example of a method for notification of the UE identifier in the T-PCell in inter-cell L1/L2 mobility between different DUs according to the fifth embodiment. Steps identical to those in FIG. 30 are denoted by the same step numbers, and descriptions already provided are omitted. The example illustrated in FIG. 32 discloses an example of a method in which the T-DU (DU#2) sets the UE identifier in the T-PCell and transmits the UE identifier to the UE.

In step ST3001, the UE performs two-step RA processing on the T-PCell. The T-DU that has received the PCell change included in the MsgA from the UE determines the UE identifier for use in the T-PCell. In step ST3201, the T-PCell transmits the determined UE identifier to the UE. Here, the UE identifier is included in, for example, MsgB and transmitted in the RA processing.

The UE preferably uses a preset UE identifier to receive the MsgB from the T-PCell in step ST3201. For example, a UE identifier determined in advance in a standard is used. For example, a UE identifier (RA-RNTI: Random Access Radio Network Temporary Identifier) for RA processing is preferably used. In this way, the UE can receive the MsgB in step ST3201. Thereafter, the UE uses the UE identifier received from the T-PCell for communication with the T-PCell. In order to receive the PDCCH from the T-PCell in step ST2523, the UE preferably uses the UE identifier received from the T-PCell in step ST3201.

In this way, the UE can acquire the UE identifier in the T-PCell after the inter-cell L1/L2 mobility, and can communicate with the T-PCell.

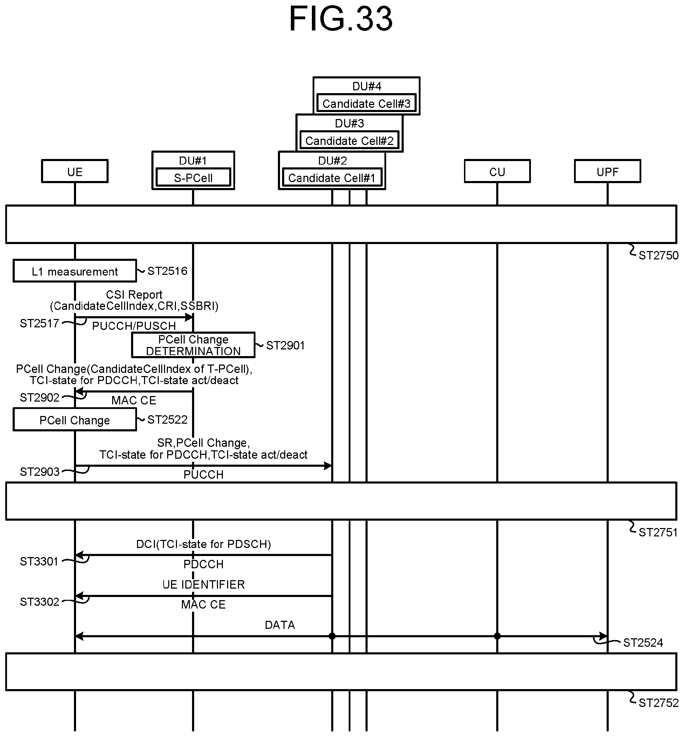

FIG. 33 is a sequence diagram illustrating another example of a method for notification of the UE identifier in the T-PCell in inter-cell L1/L2 mobility between different DUs according to the fifth embodiment. Steps identical to those in FIG. 29 are denoted by the same step numbers, and descriptions already provided are omitted. The example illustrated in FIG. 33 discloses an example of a method in which the T-DU (DU#2) transmits the UE identifier in the T-PCell to the UE after the PCell change by the inter-cell L1/L2 mobility.

In step ST2903, the UE notifies the T-PCell of the PCell change. The T-DU that has received the PCell change from the UE determines the UE identifier for use in the T-PCell. In step ST3301, the T-PCell transmits scheduling information for transmitting the determined UE identifier to the UE. TCI-state information of the PDSCH may be transmitted together with the scheduling information. The UE preferably uses a preset UE identifier to receive the PDCCH from the T-PCell in step ST3301. The UE uses the preset UE identifier until the UE identifier is received from the T-PCell. In this way, the UE can communicate with the T-PCell until the UE identifier is received from the T-PCell.

In step ST3302, the T-PCell transmits the determined UE identifier to the UE. The notification may be transmitted by MAC signaling. For example, the identifier may be included in the MAC CE and transmitted. The UE receives the UE identifier in step ST3302 by using the scheduling information received in step ST3301. The UE recognizes the UE identifier for use in the T-PCell by receiving the UE identifier in step ST3302. Thereafter, the UE uses the UE identifier received from the T-PCell for communication with the T-PCell. The UE preferably uses the UE identifier received from the T-PCell for communication with the T-PCell in step ST2524.

The UE identifier in step ST3302 may be multiplexed with data from the T-PCell to the UE in step ST2524. For example, multiplexing may be performed in the MAC layer. It is possible to perform data communication between the UE and the T-PCell early.

In this way, the UE can acquire the UE identifier for use in the T-PCell after the inter-cell L1/L2 mobility, and can communicate with the T-PCell.

By adopting the methods disclosed in the fifth embodiment, the UE can acquire the UE identifier for use in the T-PCell, and can communicate with the T-PCell using the UE identifier. Even in a case where L1/L2 mobility is performed between cells, communication continuity can be ensured.

### Sixth Embodiment.

Conventional L1/L2 mobility is mobility within the same cell, that is, does not involve a cell change, and thus retransmission processing is performed in the cell. However, inter-cell L1/L2 mobility involves a cell change. Therefore, there is a problem in how to perform the retransmission processing in the S-PCell or the T-PCell, and without any contrivance, the retransmission processing at the time of cell change by the inter-cell L1/L2 mobility does not operate. In such a case, for example, undelivered data may occur in the S-PCell. Without a method of processing data that is not delivered in the S-PCell, there is a problem that transmission and reception of data between the UE and the RAN are discontinuous at the time of inter-cell L1/L2 mobility.

The sixth embodiment discloses a method for solving this problem.

The S-PCell notifies the UE of the change of the PCell. When receiving the PCell change from the S-PCell, the UE receives the PDCCH of the T-PCell. The PCell change may be transmitted by MAC signaling. The PCell change may be included in the MAC CE and transmitted. For the UE, the S-PCell changes the cell for receiving the PDCCH in the MAC CE.

Before changing the PCell, the retransmission processing is executed by the PCell (S-PCell) before the change. The retransmission processing is preferably executed according to the PDCCH including the DCI from the cell before the change. After changing the PCell, the retransmission processing is executed by the PCell (T-PCell) after the change. The retransmission processing is preferably executed according to the PDCCH including the DCI from the cell after the change. The retransmission processing may be, for example, a HARQ process. The process number in the HARQ process is preferably set for each cell. Since the same process as the conventional HARQ process can be applied, complicated processing can be avoided. The setting of the first transmission or retransmission of the PDSCH may be configured using the NDI included in the DCI. Since the conventional retransmission processing can be applied, complicated processing can be avoided.

HARQ process processing that is not completed in the S-PCell is disclosed.

The buffer of the HARQ process may be cleared (flushed). The HARQ buffer may be cleared. The buffer of the HARQ process used for UL transmission/reception may be cleared. The buffer of the HARQ process used for DL transmission/reception may be cleared. As the HARQ buffer, the soft buffer (which may also be referred to as HARQ soft buffer) of the transport block (TB) may be cleared. The HARQ buffer of the UE may be cleared. The HARQ buffer of the S-PCell may be cleared.

A method for processing data that has not been delivered by the S-PCell is disclosed.

The DU changes the data undelivered by the S-PCell to the T-PCell and performs transmission. The data may be TB. Data for which HARQ processing is not completed in the S-PCell can be transmitted from the T-PCell. The UE receives the data undelivered from the S-PCell from the T-PCell. The UE buffers the HARQ process in the T-PCell to a new HARQ buffer.

The above-described method is preferably applied to processing of data undelivered by the S-PCell at the time of PCell change in inter-cell L1/L2 mobility in the DU. The DU transmits, from the T-PCell to the UE, data that could not be delivered by the S-PCell due to PCell change by inter-cell L1/L2 mobility in the DU. The UE receives, from the T-PCell, data that could not be delivered by the S-PCell due to PCell change by inter-cell L1/L2 mobility in the DU. In this way, the UE can continuously receive data from the DU. It is possible to avoid discontinuous transmission and reception of data in the inter-cell L1/L2 mobility in the DU.

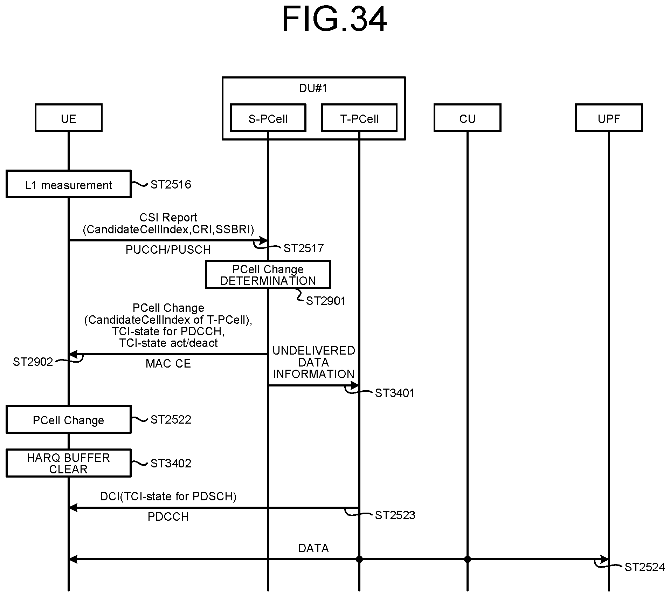

FIG. 34 is a sequence diagram illustrating an example of a data transmission method in inter-cell L1/L2 mobility processing according to the sixth embodiment. Steps identical to those in FIG. 26 are denoted by the same step numbers, and descriptions already provided are omitted. The example of FIG. 34 illustrates a method in which DU#1 changes the data undelivered by the S-PCell to the T-PCell by the PCell change of the inter-cell L1/L2 mobility and performs transmission.

In step ST2901, the S-PCell that has determined to change the PCell for the UE to be subjected to the inter-cell L1/L2 mobility transmits the undelivered data information to the T-PCell in step ST3401. The transmission may be after the transmission of the PCell change from the S-PCell to the UE in step ST2902. The UE may clear the HARQ buffer of the S-PCell in step ST3402 after changing the PCell in step ST2522. After changing the PCell in step ST2522, the UE performs data communication with the T-PCell in steps ST2523 and ST2524. In step ST2524, the T-PCell transmits the data undelivered in the S-PCell to the UE.

When the PCell change is performed in the same DU, DU#1 may have the undelivered data information. DU#1 preferably transmits the data undelivered in the S-PCell from the T-PCell.

In this way, it is possible to transmit the data undelivered in the S-PCell to the UE from the T-PCell.

Although it has been disclosed that the HARQ buffer of the S-PCell is cleared in step ST3402 after the PCell change in the UE, the timing of clearing the HARQ buffer of the S-PCell in the UE is not limited thereto, and may be after the PCell change determination in the UE. For example, the UE may clear the HARQ buffer of the S-PCell upon starting communication with the T-PCell after the PCell change. For example, the UE may clear the HARQ buffer of the S-PCell when receiving the control information for communication from the T-PCell after the PCell change. For example, the UE may clear the HARQ buffer of the S-PCell when receiving the DCI from the T-PCell in step ST2523. For example, the UE may clear the HARQ buffer of the S-PCell when receiving data from the T-PCell after the PCell change. For example, the UE may clear the HARQ buffer of the S-PCell when receiving the first data from the T-PCell in step ST2524. For example, the UE may clear the HARQ buffer of the S-PCell upon receiving the data undelivered from the S-PCell from the T-PCell. In this way, it is possible to avoid continuing to maintain data without clearing the HARQ buffer.

In the S-PCell, after the PCell change of the UE, the HARQ buffer of the UE may be cleared. When transmitting the PCell change to the UE in step ST2902, the S-PCell preferably clears the HARQ buffer of the UE in the S-PCell. The timing of clearing the HARQ buffer of the UE in the S-PCell is not limited thereto, and may be any timing after the PCell change determination is made for the UE. For example, the S-PCell may clear the HARQ buffer of the UE when transmitting the undelivered data information in the S-PCell to the T-PCell. For example, when the undelivered data information is transmitted from the S-PCell to the T-PCell in step ST3401, the S-PCell may clear the HARQ buffer of the UE. In this way, it is possible to avoid continuing to maintain data without clearing the HARQ buffer.

In the S-PCell, the buffer holding the data for which HARQ is completed with the UE and data delivery is completed may be cleared. In the UE, the buffer holding the data for which HARQ is completed with the S-PCell and data reception is completed may be cleared. The buffer clearing disclosed herein may be performed at the same time as the above-described HARQ buffer clearing. In this way, it is possible to reliably clear the buffer used for the data communication between the S-PCell and the UE after the PCell change, and it is possible to reduce the buffer amount of the S-PCell or the UE.

In addition, in a case where the inter-cell L1/L2 mobility is performed between the DUs, the DU constituting the S-PCell and the DU constituting the T-PCell are different, and thus, there is a problem in a method of processing data that is not delivered in the S-PCell between the DUs. Here, a method for solving such a problem is disclosed.

The same data is duplicated and transmitted from the CU to the S-DU and the candidate DU. The data may be duplicated by PDCP. Alternatively, a duplication protocol may be newly provided. For example, a duplication protocol may be provided between the PDCP and the RLC, and the protocol may duplicate the PDCP PDU received from the PDCP and transmit the duplicated data to the RLC of the S-DU and the RLC of the candidate DU.

The same data identifier is allocated to the duplicated data by the S-DU and the candidate DU. The same data identifier may be allocated in the S-DU and the candidate DU to the bearer that is the target of the UE to be subjected to the inter-cell L1/L2 mobility. For example, the RLC of the S-DU and the RLC of the candidate DU are configured the same for the bearer that is the target of the UE to be subjected to the inter-cell L1/L2 mobility. The RLC of the S-DU and the RLC of the candidate DU allocate the same Radio Link Control Sequence Number (RLC SN) to the PDCP PDU transmitted from the CU. In the case of RLC segmentation, the same segment processing is performed on the S-DU and the candidate DU, and the same RLC SN is allocated. In this way, the same data identifier can be allocated to the duplicated data by the S-DU and the candidate DU.

After the PCell change by the inter-cell L1/L2 mobility, the UE transmits, to the T-PCell, the data identifier of the data that could not be received from the S-PCell of the S-DU and/or the data that could be received. The UE may transmit the data identifier of the data not delivered in the S-PCell and/or the delivered data to the T-PCell. The data identifier may be RLC SN. The state information of the RLC SN may be used. The information of the data identifier may be transmitted as a bitmap. For example, zero may be mapped to the data identifier of the data that could not be received, and one may be mapped to the data identifier of the data that could be received. The lowest data identifier of the data that could not be received may be transmitted. For example, the bitmap may be information from the lowest data identifier of the data that could not be received. Information of the number of bits of the bitmap may be included as the information of the data identifier. As another method, the number of bits of the bitmap may be statically determined in a standard or the like. For example, the data identifier may be a sequence number, and a difference between the largest data identifier of the data that could be received and the smallest data identifier of the data that could not be received may be the bit number of the bitmap. In this way, it is possible to indicate data that cannot be discontinuously received.

A method of transmitting the data identifier of the data that could not be received from the S-PCell and/or the data that could be received from the UE to the T-PCell is disclosed. The data identifier is transmitted by MAC signaling. For example, the UE identifier may be included in the MAC CE and transmitted. As another method, the data identifier may be included in the UCI. The data identifier may be included in the UCI and transmitted on the PUCCH or the PUSCH. The data identifier can be transmitted earlier. As another method, the data identifier may be transmitted in the RA processing. For example, the data identifier may be transmitted by using the PRACH or by being included in the Msg3 or MsgA. Regarding these methods, the UE identifier notification methods disclosed in the fourth embodiment may be appropriately applied. In this way, the data identifier can be transmitted by the access processing to the T-PCell.

The T-PCell receives the data identifiers of these data from the UE. RLC SN is received as the data identifier. The T-DU can recognize data that the UE could not receive from the S-PCell. The T-DU retransmits, from the T-PCell to the UE, data that the UE could not receive from the S-PCell. The data is preferably RLC PDU. The UE can receive data that could not be received by the S-PCell from the T-PCell.

Disclosed below is another method for solving the above problem. The method of duplicating and transmitting the same data from the CU to the S-DU and the candidate DU and the method of allocating the same data identifier to the duplicated data by the S-DU and the candidate DU described above are appropriately applied.

For the UE to be subjected to the inter-cell L1/L2 mobility, the MAC of the candidate DU may be set to be the same as the MAC of the S-DU. The MAC of the S-DU and the MAC of the candidate DU perform the same MAC processing on the RLC PDU transmitted from the RLC. The same process is preferably allocated as the HARQ process. The same HARQ process identifier is preferably allocated to the duplicated data in the S-DU and the candidate DU.

After the PCell change by the inter-cell L1/L2 mobility, the UE transmits, to the T-PCell, the HARQ process identifier of the data that could not be received from the S-PCell of the S-DU and/or the data that could be received. The UE may transmit the HARQ process identifier of the data not delivered in the S-PCell and/or the delivered data to the T-PCell. The information of the HARQ process identifier may be transmitted as a bitmap. For example, zero may be mapped to the HARQ process identifier of the data that could not be received, and one may be mapped to the HARQ process identifier of the data that could be received. The HARQ process identifier of the lowest data that could not be received may be transmitted. For example, the bitmap may be information from the HARQ process identifier of the lowest data that could not be received.

Preferably, the above-described methods are appropriately applied to the method of transmitting the HARQ process identifier of the data that could not be received from the S-PCell and/or the data that could be received from the UE to the T-PCell.

The T-PCell receives these HARQ process identifiers from the UE. In this way, the T-DU can recognize the HARQ process identifier of the data that the UE could not receive from the S-PCell. The T-DU retransmits data of the HARQ process that could not be received from the S-PCell from the T-PCell to the UE. The UE can receive the data of the HARQ process that could not be received by the S-PCell from the T-PCell.

Disclosed below is another method for solving the above problem. The above-described method of duplicating and transmitting the same data from the CU to the S-DU and the candidate DU is appropriately applied.

The CU transmits the identifier of the transmitted duplicated data to the candidate DU. The identifier of the duplicated data may be the identifier assigned to the PDCP PDU. The PDCP configured in the CU may transmit the identifier of the PDCP PDU of the duplicated data to the RLC configured in the candidate DU. The identifier may be a PDCP PDU SN. The candidate DU receives the identifier assigned to the duplicated data. In this way, the candidate DU can recognize the identifier of the duplicated data received from the CU.

The candidate DU may associate the identifier assigned to the duplicated data with the identifier allocated to the duplicated data by the RLC. The candidate DU associates the PDCP PDU SN of the duplicated data with the RLC SN. The candidate DU may store the association. The RLC of the candidate DU may store the association. In this way, the candidate DU can derive the RLC SN from the PDCP PDU SN or the PDCP PDU SN from the RLC SN.

The method disclosed above regarding the candidate DU may also be performed for the S-DU. The S-DU can derive the RLC SN from the PDCP PDU SN or the PDCP PDU SN from the RLC SN.

After the PCell change by the inter-cell L1/L2 mobility, the UE transmits, to the T-PCell, the data identifier of the data that could not be received from the S-PCell of the S-DU and/or the data that could be received. The UE may transmit the data identifier of the data not delivered in the S-PCell and/or the delivered data to the T-PCell. The data identifier may be a PDCP PDU SN. The state information may be the state information of the PDCP PDU SN. The information of the data identifier may be transmitted as a bitmap. For example, zero may be mapped to the data identifier of the data that could not be received, and one may be mapped to the data identifier of the data that could be received. The lowest data identifier of the data that could not be received may be transmitted. For example, the bitmap may be information from the lowest data identifier of the data that could not be received. Information of the number of bits of the bitmap may be included as the information of the data identifier. As another method, the number of bits of the bitmap may be statically determined in a standard or the like. For example, the data identifier may be a sequence number, and a difference between the largest data identifier of the data that could be received and the smallest data identifier of the data that could not be received may be the bit number of the bitmap. In this way, it is possible to indicate data that cannot be discontinuously received.

Preferably, the methods disclosed above are appropriately applied to the method of transmitting the data identifier of the data that could not be received from the S-PCell and/or the data that could be received from the UE to the T-PCell. As another method, the UE may transmit the identifier to the T-PCell in the RLC Contorol PDU. For example, this may be applied in a case where the identifier is an RLC SN. In addition, as another method, the UE may transmit the identifier to the T-PCell in the PDCP Contorol PDU. For example, this may be applied in a case where the identifier is a PDCP PDU SN. It is possible to avoid complication of transmission processing of the identifier.

The T-PCell receives the PDCP PDU SNs of these data from the UE. The T-DU can recognize the PDCP PDU SN of data that the UE could not receive from the S-PCell. In this way, the T-DU can recognize the PDCP PDU of the data that the UE could not receive from the S-PCell. The T-DU retransmits the PDCP PDU of the data that cannot be received from the S-PCell from the T-PCell to the UE. The T-DU may derive the RLC SN associated with the PDCP PDU SN. The T-DU transmits the data allocated the derived RLC SN to the UE. In this way, the T-DU can transmit the PDCP PDU of the data that the UE could not receive from the S-PCell from the T-PCell. The UE can receive the PDCP PDU of the data that could not be received by the S-PCell from the T-PCell.

The above-disclosed method, for example, of configuring the RLC of the S-DU and the RLC of the candidate DU the same for the bearer that is the target of the UE to be subjected to the inter-cell L1/L2 mobility and allocating the same data identifier between the S-DU and the candidate DU to the data duplicated by the PDCP of the CU may be appropriately applied.

After the PCell change by the inter-cell L1/L2 mobility, the UE transmits, to the T-PCell, the RLC SN of the data that could not be received from the S-PCell of the S-DU. The UE may transmit, to the T-PCell, the RLC SN of the data not delivered in the S-PCell. The state information of the RLC SN may be transmitted.

The T-PCell receives the RLC SNs of these data from the UE. The T-DU can recognize the RLC SN of the data that the UE could not receive from the S-PCell. The T-DU may derive the PDCP PDU SN associated with the RLC SN. The T-DU transmits data of the derived PDCP PDU SN to the UE. All the RLC PDUs assigned the RLC SN associated with the PDCP PDU SN are transmitted. In this way, the T-DU can transmit the PDCP PDU that the UE could not receive from the S-PCell from the T-PCell. The UE can receive the PDCP PDU that could not be received by the S-PCell from the T-PCell.

In this way, even when inter-cell L1/L2 mobility is performed between different DUs, the UE can continuously receive data from different DUs. It is possible to avoid discontinuous transmission and reception of data in the inter-cell L1/L2 mobility between different DUs.

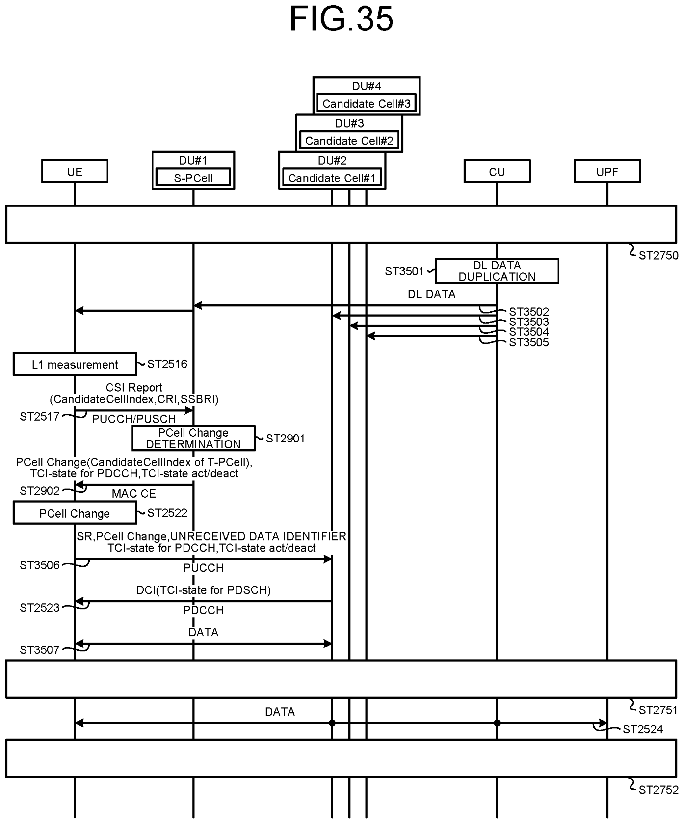

FIG. 35 is a sequence diagram illustrating another example of a data transmission method in inter-cell L1/L2 mobility processing according to the sixth embodiment. Steps identical to those in FIG. 29 are denoted by the same step numbers, and descriptions already provided are omitted. The example of FIG. 35 illustrates a case where PCell change is performed by inter-cell L1/L2 mobility between different DUs.

In step ST3501, the CU duplicates downlink (DL) data for the UE. The data is preferably duplicated by PDCP. The data identifier of the DL data is also duplicated and assigned to the DL data. The data identifier is preferably a PDCP PDU SN. In step ST3502, the CU transmits the DL data to the S-DU (DU#1) in order to communicate with the UE. The S-DU transmits the received DL data from the SPCell to the UE. In steps ST3503 to ST3505, the CU transmits the duplicated DL data to the candidate DUs (DU#2, DU#3, and DU#4). The candidate DU holds the received DL data. The candidate DU may store the received DL data. In this way, the same data and data identifier as the DL data transmitted to the S-DU are transmitted to the candidate DU.

The processing in steps ST3501 to ST3505 is not limited to the timing illustrated in FIG. 35, and may be performed after the setting of the inter-cell L1/L2 mobility is configured for the UE in step ST2750. For example, in step ST2750 (see FIG. 27), the above-described processing of steps ST3501 to ST3505 may be performed in response to the transmission in step ST2508. For example, the processing may be performed in response to the reception in step ST2509. In response to the activation of the setting of the inter-cell L1/L2 mobility for the UE, it becomes possible to transmit the duplicated data to the candidate DU.

The processing of steps ST3501 to ST3505 may be performed after setting candidate cells. For example, in step ST2750 (see FIG. 27), the processing may be performed in response to the transmission in steps ST2701 to ST2703. For example, the processing may be performed in response to the transmission in steps ST2704 to ST2706. The duplicated data can be transmitted to the candidate DU early as the candidate DU is set.

Returning to the description of FIG. 35, in step ST2522, the UE changes the PCell. The UE may clear the HARQ buffer of the S-PCell after the PCell change. The UE may perform the processing of step T3402 disclosed in FIG. 34 subsequent to the processing of step ST2522. In a case where the inter-cell L1/L2 mobility is performed between different DUs, preferably, the method of clearing the HARQ buffer of the UE or the S-PCell disclosed above is appropriately applied. Another method for clearing the HARQ buffer of the UE in the S-PCell is disclosed. The S-PCell may clear the HARQ buffer of the UE when receiving a notification related to successful access to the UE from the T-PCell. For example, the S-PCell may clear the HARQ buffer of the UE when receiving a UE context modification request from the CU in step ST2725 in step ST2751. As another method, the S-PCell may clear the HARQ buffer of the UE when receiving a notification related to release of the context of the UE from the CU. For example, the S-PCell may clear the HARQ buffer of the UE when the UE context release is received from the CU in step ST2731 in step ST2752. In this way, the buffer amount of the UE and the S-PCell can be reduced. In step ST3506, the UE transmits the PCell change to the T-PCell. The UE transmits the data identifier of the data not received with the S-PCell to the T-PCell. The data identifier of the data not received with the S-PCell may be transmitted together with the change of the PCell. In step ST3506, the T-PCell receives the data identifier of the data not received with the S-PCell from the UE. In this way, the T-PCell can recognize the data identifier of the data not received with the S-PCell by the UE.

The T-PCell derives data that could not be delivered to the UE from the duplicated data received from the CU in step ST3503 by using the data identifier of the data not received with the S-PCell received from the UE. In step ST3507, the T-PCell transmits the duplicated data corresponding to the data that could not be delivered to the UE. In step ST2751, the CU recognizes that the PCell has been changed to the T-PCell. In step ST2524, the CU transmits data to the T-DU (DU#2) constituting the T-PCell. The T-DU transmits the data received from the CU from the T-PCell to the UE.

The CU may transmit a request for discarding the duplicated data to the candidate DU in steps ST2722 to ST2725 (see FIG. 28) included in step ST2751. The candidate DU that has received the request for discarding the duplicated data preferably discards the duplicated data. The storage capacity can be reduced. The request for discarding the duplicated data may be transmitted together with the release of the setting of the candidate cell transmitted from the CU to the candidate DU or included in the release of the setting of the candidate cell. The amount of signaling can be reduced. The release of the setting of the candidate cell transmitted from the CU to the candidate DU may be regarded as the request for discarding the duplicated data. The candidate DU that has received the release of the setting of the candidate cell from the CU preferably discards the duplicated data.

In this way, in the inter-cell L1/L2 mobility between different DUs, the UE can receive the data that could not be received from the S-PCell from the T-PCell. When inter-cell L1/L2 mobility is executed between different DUs, continuous communication can be performed without losing data.

Disclosed below is another method for solving the above problem. The S-PCell transmits, to the UE, the data identifier of the data confirmed to have been delivered with the S-PCell and/or the data unconfirmed to have been delivered. The data identifier may be transmitted by MAC signaling. For example, the identifier may be included in the MAC CE and transmitted. The data identifier can be transmitted early. As another method, the data identifier may be included in the DCI. The data identifier may be included in the DCI and transmitted on the PDCCH. The S-PCell may transmit the data identifier to the UE together with the PCell change setting or included in the PCell change setting.

The UE transmits, to the T-PCell, the data identifier of the data confirmed to have been delivered with the S-PCell and/or the data unconfirmed to have been delivered. The T-DU receives the data identifier from the UE. Consequently, the T-DU can recognize data that is not delivered to the UE in the S-PCell. The T-DU transmits, from the T-PCell to the UE, data that is not delivered in the S-PCell. The UE can receive, from the T-PCell, the data not delivered in the S-PCell.

Preferably, the methods disclosed above are appropriately applied to which data identifier the data identifier is to be, information of the data identifier, the transmission method therefor, and the like.

In this way, even when inter-cell L1/L2 mobility is performed between different DUs, the UE can continuously receive data from different DUs. It is possible to avoid discontinuous transmission and reception of data in the inter-cell L1/L2 mobility between different DUs.

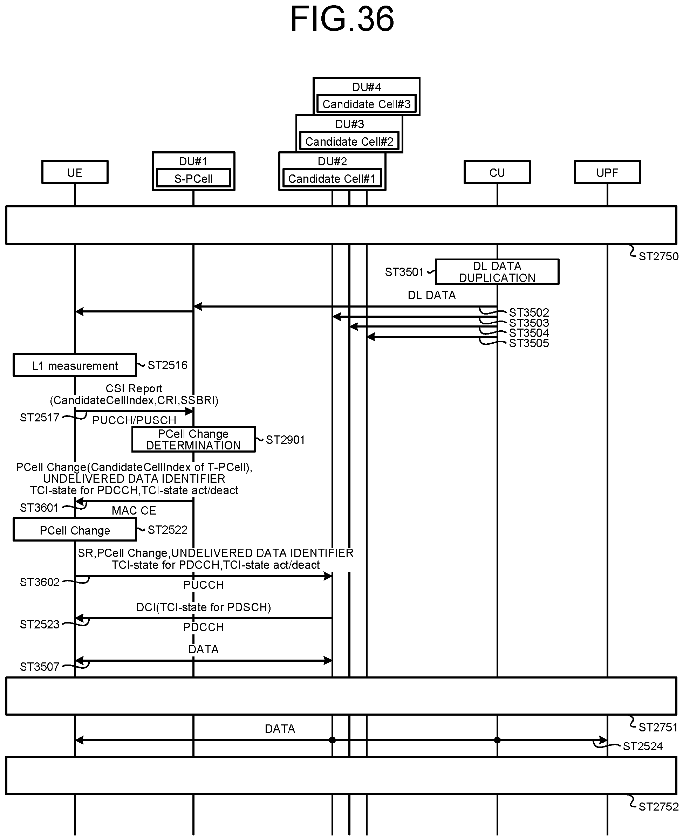

FIG. 36 is a sequence diagram illustrating another example of a data transmission method in inter-cell L1/L2 mobility processing according to the sixth embodiment. Steps identical to those in FIG. 35 are denoted by the same step numbers, and descriptions already provided are omitted. The example of FIG. 36 illustrates a method for notification of the data identifier of undelivered data from the S-PCell via the UE.

In step ST3601, the S-PCell transmits the data identifier of the data undelivered in the S-PCell to the UE. The S-PCell may transmit the data identifier of the data undelivered in the S-PCell to the UE together with the change of the PCell. The UE receives the data identifier of the data undelivered in the S-PCell from the S-PCell. In this way, the UE can recognize the data identifier of the data undelivered in the S-PCell.

In step ST2522, the UE changes the PCell. In step ST3602, the UE transmits the PCell change to the T-PCell. The UE transmits the data identifier of the data undelivered in the S-PCell to the T-PCell. The data identifier of the data undelivered in the S-PCell may be transmitted together with the PCell change. In step ST3602, the T-PCell receives the data identifier of the data undelivered in the S-PCell from the UE. In this way, the T-PCell can recognize the data identifier of the data undelivered in the S-PCell.

The T-PCell derives data that could not be delivered to the UE from the duplicated data received from the CU in step ST3503 by using the data identifier of the data undelivered in the S-PCell received from the UE. In step ST3507, the T-PCell transmits the duplicated data corresponding to the data that could not be delivered to the UE. In step ST2751, the CU recognizes that the PCell has been changed to the T-PCell. In step ST2524, the CU transmits data to the T-DU (DU#2) constituting the T-PCell. The T-DU transmits the data received from the CU from the T-PCell to the UE.

In this way, in inter-cell L1/L2 mobility between different DUs, the S-PCell can transmit undelivered data to the UE from the T-PCell. When inter-cell L1/L2 mobility is executed between different DUs, continuous communication can be performed without losing data.

The foregoing has disclosed methods of processing data that is not delivered in the S-PCell. Here, other methods are disclosed.

At the time of PCell change by inter-cell L1/L2 mobility, the HARQ buffer may not be cleared. The HARQ buffer of the UE may not be cleared. The HARQ buffer of the S-PCell may not be cleared. After the PCell change, the UE executes HARQ processing on the data received from the S-PCell before the PCell change. After the PCell change, the HARQ processing is also executed in the T-PCell. The UE performs HARQ processing in both the S-PCell and the T-PCell until HARQ processing of the S-PCell ends. The UE receives data from both the S-PCell and the T-PCell. In this way, it is not necessary to notify the T-DU of data that is not delivered in the S-PCell. It is possible to reduce the signaling load and avoid processing complexity.

Disclosed below are other methods. Transmission of data of the last RLC SN of the S-PCell before the PCell change is executed by the S-PCell. Alternatively, transmission of data of the last PDCP PDU SN of the S-PCell before the PCell change is executed by the S-PCell. The HARQ processing of these data is preferably performed by the S-PCell. Even after the PCell change, the UE receives the data transmitted from the S-PCell before the PCell change. After the PCell change, data is also received from the T-PCell. The UE receives data from both the S-PCell and the T-PCell until the reception of the data from the S-PCell is completed. The UE preferably discards one of the data received redundantly from the S-PCell and the T-PCell. For example, data received later is discarded. It is possible to receive data early by using the data received earlier. In this way, it is not necessary to notify the T-DU of data that is not delivered in the S-PCell. It is possible to reduce the signaling load and avoid processing complexity.

If the UE receives data from the S-PCell after the PCell change, the reception of the data may end in failure. This can occur, for example, when the maximum number of times of retransmission in the HARQ process is exceeded, or when the maximum number of times of retransmission in the RLC is exceeded. In such a case, data undelivered in the S-PCell is preferably transmitted from the S-DU to the T-DU. Preferably, the methods disclosed above are appropriately applied for the transmission method.

In this way, even when inter-cell L1/L2 mobility is performed between different DUs, the UE can continuously receive data from different DUs. It is possible to avoid discontinuous transmission and reception of data in the inter-cell L1/L2 mobility between different DUs.

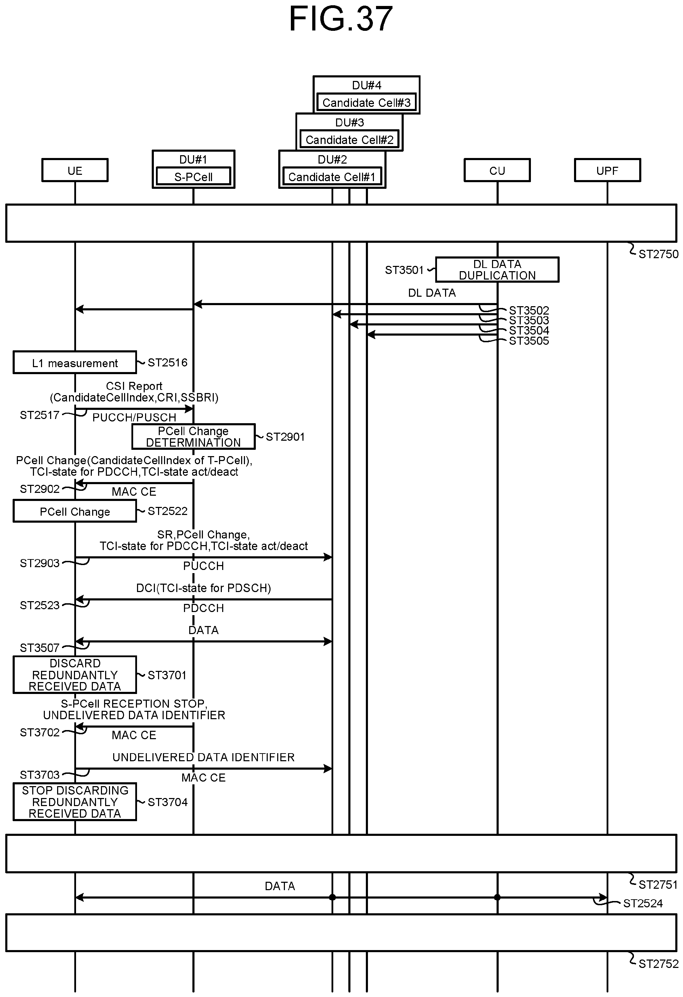

FIG. 37 is a sequence diagram illustrating another example of a data transmission method in inter-cell L1/L2 mobility processing according to the sixth embodiment. Steps identical to those in FIG. 36 are denoted by the same step numbers, and descriptions already provided are omitted. The example of FIG. 37 illustrates a method of transmitting data from the S-PCell after the PCell change. After the PCell change, the UE receives data from both the S-PCell and the T-PCell until the data reception from the S-PCell is completed.

In step ST2522, the UE changes the PCell. After the PCell change, the UE does not stop receiving data from the S-PCell until receiving an S-PCell reception stop request. The S-PCell transmits the data received from the CU before the PCell change to the UE. In step ST3507, the T-PCell transmits the duplicated data received from the CU in step ST3503 to the UE. The UE continues to receive data from the S-PCell and also receives data from the T-PCell.

In step ST3701, the UE discards one of the data received redundantly from the S-PCell and the T-PCell. For example, data received later is preferably discarded. The S-PCell that has transmitted the data received from the CU before the PCell change to the UE transmits an S-PCell reception stop request to the UE in step ST3702. The S-PCell may transmit the data identifier of the data that could not be transmitted to the UE together with the S-PCell reception stop request. The UE that has received the S-PCell reception stop request from the S-PCell stops the reception from the S-PCell. In step ST3703, the UE may transmit, to the T-PCell, the data identifier of the data undelivered in the S-PCell to the UE. The T-PCell can recognize data that could not be delivered from the S-PCell to the UE. The T-PCell preferably confirms whether data that could not be delivered from the S-PCell to the UE has already been transmitted, and transmits the data if the data has not been transmitted. It is possible to reliably transmit data that could not be transmitted by the S-PCell.

In step ST3704, the UE stops discarding the data received redundantly from the S-PCell and the T-PCell.

In the foregoing example, it has been disclosed that the UE does not stop receiving the S-PCell until receiving the S-PCell reception stop request after the PCell change. The S-PCell reception stop request may be transmitted from the T-PCell to the UE. For example, when receiving the PCell change from the UE, the T-PCell may transmit an S-PCell reception stop request to the UE. The UE can stop the reception from the S-PCell early. Power consumption of the UE can be reduced. In step ST2751 (see FIG. 28), the CU that has recognized that the PCell has been changed to the T-PCell may transmit a transmission stop request for the UE to the S-DU constituting the S-PCell. The S-DU that has received the request stops the data transmission from the S-PCell to the UE.

As another method, the S-PCell reception stop request may be transmitted from the S-PCell to the UE in step ST2751. In step ST2751, the CU that has recognized that the PCell has been changed to the T-PCell may transmit a transmission stop request for the UE to the S-DU constituting the S-PCell. The S-DU that has received the request transmits a data reception stop request from the S-PCell to the UE from the S-PCell. In addition, the S-PCell stops the data transmission to the UE. In this way, for example, data transmission from the S-PCell to the UE can be continued until data is transmitted from the CU to the T-PCell by the change of the PCell. The UE can receive data more reliably by receiving data redundantly from the S-PCell and the T-PCell.

In this way, when inter-cell L1/L2 mobility is executed between different DUs, continuous communication can be performed more reliably without losing data.

A method for transmitting and receiving UL data during inter-cell L1/L2 mobility is disclosed. The HARQ buffer at the UE is cleared. The HARQ buffer of the S-PCell may be cleared. At the time of PCell change, the UE transmits the identifier of the data unconfirmed to have been delivered to the T-PCell. At the time of PCell change, the UE transmits the data unconfirmed to have been delivered to the T-PCell. The data may be data undelivered by PDCP. This is effective in inter-cell L1/L2 mobility within the DU or between DUs. The data may be data undelivered by RLC. This is effective in inter-cell L1/L2 mobility within the DU. The data may be data for which HARQ processing is not completed. This is effective in inter-cell L1/L2 mobility within the DU.

The HARQ buffer at the UE may not be cleared. The HARQ buffer of the S-PCell may not be cleared. The UE may perform HARQ processing with both the S-PCell and the T-PCell. The UE executes HARQ processing in the S-PCell until HARQ processing in the S-PCell ends. After the PCell change, the HARQ processing is executed with the T-PCell. The UE performs data transmission to both the S-PCell and the T-PCell until HARQ processing of the S-PCell ends.

Disclosed below are other methods. At the time of PCell change, the UE executes transmission of data of the last RLC SN of the S-PCell by the S-PCell. After the PCell change, data is transmitted to the T-PCell. The UE performs data transmission to both the S-PCell and the T-PCell until the transmission of the data of the last RLC SN in the S-PCell ends.

Disclosed below are other methods. At the time of PCell change, the UE executes transmission of data of the last PDCP PDU SN of the S-PCell by the S-PCell. After the PCell change, data is transmitted to the T-PCell. The UE performs data transmission to both the S-PCell and the T-PCell until the transmission of the data of the last RLC SN in the S-PCell ends.

The CU preferably discards one of the data received redundantly from the S-DU and the T-DU. For example, data received later is discarded. It is possible to receive data early by using the data received earlier.

If the UE transmits data to the S-PCell after the PCell change, the transmission of the data may end in failure. This can occur, for example, when the maximum number of times of retransmission in the HARQ process is exceeded, or when the maximum number of times of retransmission in the RLC is exceeded. In such a case, data undelivered in the S-PCell is preferably transmitted from the UE to the T-DU. Preferably, the methods disclosed above are appropriately applied for the transmission method.

In this way, even when inter-cell L1/L2 mobility is performed between different DUs, the UE can continuously transmit data from different DUs. It is possible to avoid discontinuous transmission and reception of data in the inter-cell L1/L2 mobility between different DUs.

By adopting the methods disclosed in the sixth embodiment, continuity of data between the UE and the RAN by inter-cell L1/L2 mobility is maintained. In the inter-cell L1/L2 mobility, communication can be performed without losing data.

### Seventh Embodiment.

In conventional inter-cell mobility, the carrier aggregation (CA) setting is released, and CA is set again after mobility. In the inter-cell mobility, the setting of packet duplication (see Non Patent Literature 2 (3GPP TS 38.300)) is also released, and the setting of packet duplication is required again after the mobility. This leads to a problem that packet duplication is interrupted due to inter-cell mobility, and reliability of communication is lowered or delay is increased.

The seventh embodiment discloses a method for solving this problem.

The CA setting is not released in the inter-cell L1/L2 mobility. The CA setting of DL and/or UL is not released. The setting of the serving cell may not be released. It may be statically determined in advance in a standard or the like that the CA setting is not released in the inter-cell L1/L2 mobility. In this way, in the inter-cell L1/L2 mobility processing, it is not necessary to perform the RRC processing for releasing the CA setting. Inter-cell L1/L2 mobility is enabled early. The method of not releasing the CA setting in the inter-cell L1/L2 mobility may be limited to a case where the inter-cell L1/L2 mobility is performed in one or more configured serving cells.

The CA setting may not be released in the inter-cell L1/L2 mobility. The CA setting of DL and/or UL may be released. The setting of the serving cell may be released. It may be statically determined in advance in a standard or the like that the CA setting is released in the inter-cell L1/L2 mobility. For example, the UE releases the CA setting when the setting of the inter-cell L1/L2 mobility is configured. When the gNB configures the setting of the inter-cell L1/L2 mobility for the UE, the gNB releases the CA setting for the UE. In this way, it is not necessary to perform the RRC processing at the time of PCell change by the inter-cell L1/L2 mobility.

As another method, for example, the gNB may determine whether to release the CA setting. The gNB may be a CU. The gNB notifies the UE in advance that the CA setting is released in the inter-cell L1/L2 mobility. For example, the gNB notifies the UE that the CA setting is released when notification of the setting of the inter-cell L1/L2 mobility is given. Releasing the CA setting may be transmitted together with or included in the setting. When receiving from the gNB the information indicating that the CA setting is released, the UE releases the CA setting. When transmitting to the UE that the CA setting is released, the gNB releases the CA setting for the UE. In this way, it is not necessary to perform the RRC processing at the time of PCell change by the inter-cell L1/L2 mobility.

Whether to release the CA setting in the inter-cell L1/L2 mobility may be configurable. For example, the gNB may determine whether to release the CA setting. The gNB may be a CU. The gNB notifies the UE in advance whether the CA setting is released in the inter-cell L1/L2 mobility. For example, the gNB notifies the UE whether the CA setting is released when notification of the setting of the inter-cell L1/L2 mobility is given. Whether to release the CA setting may be transmitted together with or included in the setting. When receiving from the gNB the information indicating that the CA setting is released, the UE releases the CA setting. When the information indicating that the CA setting is not released is received, the CA setting is not released. When transmitting to the UE that the CA setting is released, the gNB releases the CA setting for the UE. When transmitting to the UE that the CA setting is not released, the gNB does not release the CA setting for the UE. In this way, it is possible to control the CA setting at the time of inter-cell L1/L2 mobility. In addition, it is not necessary to perform the RRC processing at the time of PCell change by the inter-cell L1/L2 mobility.

The setting of packet duplication is not released in the inter-cell L1/L2 mobility. The setting of packet duplication by the CA may not be released. It may be statically determined in advance in a standard or the like that the setting of packet duplication is not released in the inter-cell L1/L2 mobility. In this way, in the inter-cell L1/L2 mobility processing, it is not necessary to perform the RRC processing for releasing the setting of packet duplication. Inter-cell L1/L2 mobility is enabled early.

The setting of packet duplication may be released in the inter-cell L1/L2 mobility. It may be statically determined in advance in a standard or the like that the setting of packet duplication is released in the inter-cell L1/L2 mobility. For example, the UE releases the setting of packet duplication when the setting of the inter-cell L1/L2 mobility is configured. When the gNB configures the setting of the inter-cell L1/L2 mobility for the UE, the gNB releases the setting of packet duplication for the UE. In this way, it is not necessary to perform the RRC processing at the time of PCell change by the inter-cell L1/L2 mobility.

As another method, for example, the gNB may determine whether to release the setting of packet duplication. The gNB may be a CU. The gNB notifies the UE in advance that the setting of packet duplication is released in the inter-cell L1/L2 mobility. For example, the gNB notifies the UE that the setting of packet duplication is released when notification of the setting of the inter-cell L1/L2 mobility is given. Releasing the setting of packet duplication may be transmitted together with or included in the setting. When receiving from the gNB the information indicating that the setting of packet duplication is released, the UE releases the setting of packet duplication. When transmitting to the UE that the setting of packet duplication is released, the gNB releases the setting of packet duplication for the UE. In this way, it is not necessary to perform the RRC processing at the time of PCell change by the inter-cell L1/L2 mobility.

Whether to release the setting of packet duplication in the inter-cell L1/L2 mobility may be configurable. For example, the gNB may determine whether to release the setting of packet duplication. The gNB may be a CU. The gNB notifies the UE in advance whether to release the setting of packet duplication in the inter-cell L1/L2 mobility. For example, the gNB notifies the UE whether to release the setting of packet duplication when notification of the setting of the inter-cell L1/L2 mobility is given. Whether to release the setting of packet duplication may be transmitted together with or included in the setting. When receiving from the gNB the information indicating that the setting of packet duplication is released, the UE releases the setting of packet duplication. When receiving the information indicating that the setting of packet duplication is not released, the setting of packet duplication is not released. When transmitting to the UE that the setting of packet duplication is released, the gNB releases the setting of packet duplication for the UE. When transmitting to the UE that the setting of packet duplication is not released, the gNB does not release the setting of packet duplication for the UE. In this way, it is possible to control the setting of packet duplication at the time of inter-cell L1/L2 mobility. In addition, it is not necessary to perform the RRC processing at the time of PCell change by the inter-cell L1/L2 mobility.

Whether to release the packet duplication setting may be set for each type of bearer in the inter-cell L1/L2 mobility. For example, the setting is configured such that the packet duplication setting is released for the SRB and the packet duplication setting is not released for the Data Radio Bearer (DRB). In this way, it is possible to flexibly configure the setting of packet duplication for each bearer. For example, in a case where the required reliability and delay performance differ between bearers in the inter-cell L1/L2 mobility, it is possible to flexibly configure the setting so as to satisfy these performances.

Depending on whether to release the CA setting in the inter-cell L1/L2 mobility, whether to release the setting of packet duplication in the inter-cell L1/L2 mobility may be set. For example, when the CA setting is not released in the inter-cell L1/L2 mobility, the setting of packet duplication is not released in the inter-cell L1/L2 mobility. When the CA setting is released in the inter-cell L1/L2 mobility, the setting of packet duplication is released in the inter-cell L1/L2 mobility. Conversely, whether to release the CA setting in the inter-cell L1/L2 mobility may be set according to whether to release the setting of packet duplication in the inter-cell L1/L2 mobility. For example, when the setting of packet duplication is not released in the inter-cell L1/L2 mobility, the CA setting is not released in the inter-cell L1/L2 mobility. When the setting of packet duplication is released in the inter-cell L1/L2 mobility, the CA setting is released in the inter-cell L1/L2 mobility. In this way, setting of CA and packet duplication can be simplified.

Although it has been disclosed that the setting of packet duplication is not released in the inter-cell L1/L2 mobility, packet duplication may be continued. The activation of packet duplication may be continued. The packet duplication may be continued when the serving cell used for transmission of Logical Channel (LCH) for packet duplication is not released.

In the change of the PCell by the inter-cell L1/L2 mobility, packet duplication may be performed using the T-PCell. This may be applied in a case where packet duplication is performed in the S-PCell. When the activation of the packet duplication is set in the S-PCell, the activation of the packet duplication may be continued using the T-PCell in the change of the PCell by the inter-cell L1/L2 mobility. When the activation of the packet duplication is set in the S-PCell, the S-PCell may be deactivated in the change of the PCell by the inter-cell L1/L2 mobility. These methods may be applied to the SRB or the DRB. This may be applied according to the type of bearer. Flexible packet duplication can be performed according to the type of bearer. In this way, it is possible to continue packet duplication with inter-cell L1/L2 mobility.

When the packet duplication is not performed in the S-PCell, the packet duplication is preferably continued using the same cell before and after the change of the PCell by the inter-cell L1/L2 mobility. When the packet duplication is not activated in the S-PCell, the packet duplication is preferably continued using the same cell before and after the change of the PCell by the inter-cell L1/L2 mobility. These methods may be applied to the DRB. In this way, packet duplication can be performed with a cell other than the PCell. It is possible to continue packet duplication with inter-cell L1/L2 mobility.

At the time of inter-cell L1/L2 mobility, packet duplication may be deactivated. Some or all of the DRBs with a packet duplication setting may be deactivated. Some or all of the RLCs for packet duplication may be deactivated. Deactivation of packet duplication at the time of inter-cell L1/L2 mobility may be statically determined in a standard or the like. It is possible to make signaling unnecessary.

The gNB may notify the UE of deactivation of packet duplication at the time of inter-cell L1/L2 mobility. The notification may be given for some or all of the DRBs with a packet duplication setting, or may be performed for some or all of the RLCs for packet duplication. The notification may be performed only for the DRB to be subjected to the inter-cell L1/L2 mobility. In this way, the deactivation of the packet duplication can be flexibly set according to the radio wave propagation environment and the load of the RAN at the time of inter-cell L1/L2 mobility. In addition, since it is not necessary to release the setting of packet duplication, the control processing can be simplified.

The gNB that gives notification of deactivation of packet duplication at the time of inter-cell L1/L2 mobility may be a CU. The CU notifies the UE of deactivation of packet duplication at the time of inter-cell L1/L2 mobility. The gNB that gives notification of deactivation of packet duplication at the time of inter-cell L1/L2 mobility may be a DU. The DU notifies the UE of deactivation of packet duplication at the time of inter-cell L1/L2 mobility.

An RRC message may be used for notification of deactivation of packet duplication at the time of inter-cell L1/L2 mobility. For example, the CU may give notification of deactivation of packet duplication together with or included in the setting of the inter-cell L1/L2 mobility transmitted to the UE via the S-DU. In this way, the notification can be given early before the PCell change is determined.

MAC signaling may be used for notification of deactivation of packet duplication at the time of inter-cell L1/L2 mobility. For example, the notification may be given by the MAC CE. A new MAC CE may be provided for the notification. Alternatively, an existing MAC CE may be used. For example, the notification may be given by the MAC CE for the DRB. For example, the notification may be given by the MAC CE for RLC. Only the MAC CE for the DRB may be used. By using the existing MAC CE, it is possible to avoid complication of processing. For example, the DU may give notification to the UE together with or included in the notification of the PCell change. In this way, the notification can be given together with the PCell change. For example, it is possible to give notification of the deactivation of the packet duplication by consideration of which PCell is the change destination.

The T-PCell may acquire the DRB and/or RLC information in which the packet duplication is deactivated before the PCell change. A method for the T-PCell to acquire the DRB and/or RLC information in which the packet duplication is deactivated is disclosed. After the PCell change, the UE notifies the T-PCell of the DRB and/or RLC information in which the packet duplication is deactivated. An RRC message may be used for notification of the information. For example, the transmission may be performed in the RA processing performed by the UE with the T-PCell. As another method, MAC signaling may be used for notification of the information. For example, the notification may be transmitted together with or included in the PCell change notification transmitted by the UE to the T-PCell. As another method, the information may be included in the UCI. The data identifier may be included in the UCI and transmitted on the PUCCH or the PUSCH. As this transmission method, preferably, the method of transmitting the UE identifier to the T-PCell disclosed in the fifth embodiment is appropriately applied. In this way, the T-PCell can acquire the DRB and/or RLC information in which the packet duplication is deactivated before the PCell change.

Another acquisition method is disclosed. The CU preferably transmits the information to the T-DU. This may be applied in a case where the CU determines the DRB and/or RLC in which the packet duplication is deactivated. Preferably, F1 signaling is used for the transmission. The T-PCell can acquire the information.

Another acquisition method is disclosed. The S-DU preferably transmits the information to the CU. The CU transmits the information to the T-DU. This may be applied in a case where the DU determines the DRB and/or RLC in which the packet duplication is deactivated. Preferably, F1 signaling is used for the transmission. The T-PCell can acquire the information.

Another acquisition method is disclosed. The S-DU preferably transmits the information to the T-DU. This may be applied in a case where the DU determines the DRB and/or RLC in which the packet duplication is deactivated. The interface between DUs disclosed in the fourth embodiment is preferably used for the transmission. The T-PCell can acquire the information.

Another acquisition method is disclosed. The DRB and/or RLC in which the packet duplication is deactivated may be statically determined in advance in a standard or the like. This allows for recognition of the UE, DU, and CU.

The DRB in which the packet duplication is deactivated may be a part or the whole. The RLC in which the packet duplication is deactivated may be a part or the whole. The RLC in which the packet duplication is deactivated may be an S-RLC. In this way, it is possible to flexibly configure the setting of deactivation of packet duplication at the time of inter-cell L1/L2 mobility.

The T-DU may determine the DRB and/or RLC in which the packet duplication is activated by using the acquired information of the DRB and/or RLC in which the packet duplication is deactivated. The DRB and/or RLC to be activated may not be the same before and after the PCell change. In this way, it is possible to flexibly configure the setting of activation and deactivation of packet duplication at the time of inter-cell L1/L2 mobility.

After PCell change by inter-cell L1/L2 mobility, the activation of packet duplication may be given as notification. The T-PCell may notify the UE. After the T-PCell receives the PCell change from the UE, the activation of the packet duplication may be given as notification to the UE. An RRC message may be used for the notification from the T-PCell to the UE. For example, the RRC message may be transmitted in the RA processing. MAC signaling may be used for the notification from the T-PCell to the UE. The notification may be included in the MAC CE. The notification can be transmitted early. The notification from the T-PCell to the UE may be included in the DCI. The notification may be included in the DCI and transmitted on the PDCCH. The notification can be transmitted earlier.

In this way, the activation and deactivation of the packet duplication can be flexibly set according to the radio wave propagation environment and the load of the RAN at the time of inter-cell L1/L2 mobility. In addition, since it is not necessary to release the setting of packet duplication, the control processing can be simplified.

The packet duplication may not be deactivated at the time of inter-cell L1/L2 mobility. Deactivation may not be performed without releasing the setting of packet duplication in the inter-cell L1/L2 mobility. The packet duplication may not be deactivated without releasing the serving cell used for transmission of LCH for packet duplication. The activation of the packet duplication can be continued.

The methods of activating and deactivating packet duplication at the time of inter-cell L1/L2 mobility have been disclosed above. These methods may be appropriately applied to activation and deactivation of the serving cell at the time of inter-cell L1/L2 mobility. For example, by applying the methods to the activation and deactivation of the serving cell of the CA, the UE does not need to process the unnecessary serving cell without releasing the CA. Power consumption of the UE can be reduced.

Whether the packet duplication is activated or deactivated may be set according to whether the serving cell used for transmission of LCH for packet duplication is activated or deactivated at the time of the inter-cell L1/L2 mobility. For example, in a case where the serving cell used for transmission of LCH for packet duplication is activated (may be continued) at the time of the inter-cell L1/L2 mobility, the packet duplication may be activated (may be continued) or deactivated. In a case where the serving cell used for transmission of LCH for packet duplication is deactivated at the time of the inter-cell L1/L2 mobility, the packet duplication is deactivated. For example, in a case where the packet duplication is activated (may be continued) at the time of the inter-cell L1/L2 mobility, the serving cell used for transmission of LCH for packet duplication is activated (may be continued). In a case where the packet duplication is deactivated at the time of the inter-cell L1/L2 mobility, the serving cell used for transmission of LCH for packet duplication may be activated (may be continued) or deactivated. In this way, it is possible to avoid complicated processing of activating and deactivating the CA and packet duplication. It is possible to reduce malfunction.

By adopting the methods disclosed in the present embodiment, interruption of packet duplication can be eliminated by performing mobility between cells with L1/L2 mobility. By eliminating the interruption of packet duplication, it is possible to avoid an increase in time to packet duplication again. At the time of inter-cell L1/L2 mobility, it is possible to avoid a decrease in communication reliability and an increase in delay time.

The fourth to seventh embodiments disclose a case where the inter-cell L1/L2 mobility is performed in one gNB. The gNB may be an MCG or an SCG. In the SCG, appropriate application may be performed by replacing the PCell with the PSCell. For example, application to the change of the SPCell by inter-cell L1/L2 mobility in the SCG may be performed.

In the present disclosure, a part described as a smart repeater may be either a reflector or a reconfigurable intelligent surface (RIS) unless otherwise specified. Consequently, for example, the coverage of the base station can be expanded while reducing the power consumption in the communication system.

In the present disclosure, a part described as a gNB or a cell may be either a gNB or a cell unless otherwise specified.

The above-described embodiments and modifications thereof are merely examples, and the embodiments and modifications thereof can be freely combined. Any component of the embodiments and modifications thereof can be appropriately changed or omitted.

For example, in the above-described embodiments and modifications thereof, a subframe is an example of a unit of time for communication in the fifth-generation communication systems. A subframe may be a unit of scheduling. In each of the above-described embodiments and modifications thereof, subframe-unit processes may be performed as TTI-unit, slot-unit, subslot-unit, or minislot-unit processes.

For example, the methods disclosed in above-described embodiments and modifications thereof may be applied not only to vehicle-to-everything (V2X) services but also to services using SL communication. For example, the methods may be applied to SL communication that is used in various types of services such as proximity-based services, public safety, communication between wearable terminals, and communication between factory devices.

Hereinafter, various aspects of the present disclosure will be collectively described as supplements.

### (Supplement 1)

A communication system including:
a base station to be applied to a fifth-generation wireless access system; and
a smart repeater having a beamforming function and to perform relay processing between the base station and a communication terminal or between a communication terminal connected to the base station and another communication terminal, wherein
the base station transmits information related to a beam used in the relay processing to the smart repeater, and
the smart repeater forms a beam based on the information related to the beam received from the base station and performs the relay processing.

### (Supplement 2)

The communication system according to supplement 1, wherein
an identifier is allocated to the smart repeater, and
the smart repeater determines whether a control signal transmitted from the base station is a control signal directed to the smart repeater based on the identifier allocated to the smart repeater.

### (Supplement 3)

The communication system according to supplement 2, wherein
the base station transmits resource information to the smart repeater, the resource information being information related to a resource for transmission and reception of the control signal, and
the smart repeater receives the control signal using a resource indicated by the resource information received from the base station.

### (Supplement 4)

The communication system according to any one of supplements 1 to 3, wherein
the smart repeater transmits a synchronization signal block for the communication terminal to perform a cell search.

### (Supplement 5)

The communication system according to any one of supplements 1 to , wherein
the smart repeater performs a cell search using a synchronization signal block transmitted from the base station, connects to the base station, acquires system information from the base station, and transmits the system information acquired to the communication terminal.

### (Supplement 6)

The communication system according to any one of supplements 1 to 5, wherein
the smart repeater includes a protocol stack of a control plane for use in signaling processing with the base station.

### (Supplement 7)

A communication system including:
a base station to be applied to a fifth-generation wireless access system; and
a communication terminal to connect to the base station, wherein
when a cell that is a connection destination of the communication terminal in communication via any one of a plurality of cells constituted by the base station is changed,
the base station transmits, to the communication terminal, information related to a cell that is a new connection destination to which the communication terminal changes the connection destination, and
the communication terminal transmits, to the cell that is the new connection destination, the information related to the cell that is the new destination received from the base station.

### (Supplement 8)

The communication system according to supplement 7, wherein
a per-cell identifier used by the communication terminal in the cell before changing the connection destination is used as a per-cell identifier of the communication terminal used in the cell that is the new connection destination to which the connection destination is changed.

### (Supplement 9)

The communication system according to supplement 7, wherein
an identifier different from the per-cell identifier used by the communication terminal in the cell before changing the connection destination is used as a per-cell identifier of the communication terminal used in the cell that is the new connection destination to which the connection destination is changed, and
before the communication terminal changes the cell that is the connection destination, the base station notifies the communication terminal of the identifier used by the communication terminal in the cell that is the new connection destination to which the connection destination is changed.

### (Supplement 10)

The communication system according to any one of claims 7 to 9, wherein
when the communication terminal changes the cell that is the connection destination during execution of data retransmission processing, the base station transmits, from the cell that is the new connection destination to which the connection destination is changed to the communication terminal, data undelivered to the communication terminal in the cell before changing the connection destination.

### (Supplement 11)

The communication system according to any one of claims 7 to 10, wherein
when carrier aggregation is set in the communication terminal that changes the cell that is the connection destination, the base station maintains setting of carrier aggregation after the connection destination is changed.

### Reference Signs List

202 communication terminal device (mobile terminal); 210 communication system; 213, 240-1, 240-2, 750, 801 base station device (NR base station, base station); 214 5G core unit; 215 central unit; 216 distributed unit; 217 central unit for control plane; 218 central unit for user plane; 219 TRP; 301, 403 protocol processing unit; 302 application unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 526 control unit; 401 EPC communication unit; 402 other base station communication unit; 412 5GC communication unit; 521 Data Network communication unit; 522 base station communication unit; 523 user plane communication unit; 523-1 PDU processing unit; 523-2 mobility anchoring unit; 525 control plane control unit; 525-1 NAS security unit; 525-2 idle state mobility management unit; 527 session management unit; 527-1 PDU session control unit; 527-2 UE IP address allocating unit; 751-1 to 751-8, 1105, 1107, 1205, 1209 beam; 752 cell; 803 coverage; 805, 806, 811, 812, 905, 906 UE; 807, 808 UL/DL communication; 810, 814 SL communication; 901 IAB donor CU; 902 IAB donor DU; 903, 904 IAB node; 1101, 1103, 1108, 1201, 1208 control signal; 1102, 1106, 1202, 1206, 1210 PDCCH; 1104, 1109, 1204, 1207, 1211 PDSCH.

## Claims

1. A communication system comprising:
a base station to be applied to a fifth-generation wireless access system; and
a smart repeater having a beamforming function and to perform relay processing between the base station and a communication terminal or between a communication terminal connected to the base station and another communication terminal, wherein
the base station transmits information related to a beam used in the relay processing to the smart repeater, and
the smart repeater forms a beam based on the information related to the beam received from the base station and performs the relay processing.

2. The communication system according to claim 1, wherein
an identifier is allocated to the smart repeater, and
the smart repeater determines whether a control signal transmitted from the base station is a control signal directed to the smart repeater based on the identifier allocated to the smart repeater.

3. The communication system according to claim 2, wherein
the base station transmits resource information to the smart repeater, the resource information being information related to a resource for transmission and reception of the control signal, and
the smart repeater receives the control signal using a resource indicated by the resource information received from the base station.

4. The communication system according to claim 1, wherein
the smart repeater transmits a synchronization signal block for the communication terminal to perform a cell search.

5. The communication system according to claim 1, wherein
the smart repeater performs a cell search using a synchronization signal block transmitted from the base station, connects to the base station, acquires system information from the base station, and transmits the system information acquired to the communication terminal.

6. The communication system according to claim 1, wherein
the smart repeater includes a protocol stack of a control plane for use in signaling processing with the base station.

7. A communication system comprising:
a base station to be applied to a fifth-generation wireless access system; and
a communication terminal to connect to the base station, wherein
when a cell that is a connection destination of the communication terminal in communication via any one of a plurality of cells constituted by the base station is changed,
the base station transmits, to the communication terminal, information related to a cell that is a new connection destination to which the communication terminal changes the connection destination, and
the communication terminal transmits, to the cell that is the new connection destination, the information related to the cell that is the new destination received from the base station.

8. The communication system according to claim 7, wherein
a per-cell identifier used by the communication terminal in the cell before changing the connection destination is used as a per-cell identifier of the communication terminal used in the cell that is the new connection destination to which the connection destination is changed.

9. The communication system according to claim 7, wherein
an identifier different from the per-cell identifier used by the communication terminal in the cell before changing the connection destination is used as a per-cell identifier of the communication terminal used in the cell that is the new connection destination to which the connection destination is changed, and
before the communication terminal changes the cell that is the connection destination, the base station notifies the communication terminal of the identifier used by the communication terminal in the cell that is the new connection destination to which the connection destination is changed.

10. The communication system according to claim 7, wherein
when the communication terminal changes the cell that is the connection destination during execution of data retransmission processing, the base station transmits, from the cell that is the new connection destination to which the connection destination is changed to the communication terminal, data undelivered to the communication terminal in the cell before changing the connection destination.

11. The communication system according to claim 7, wherein
when carrier aggregation is set in the communication terminal that changes the cell that is the connection destination, the base station maintains setting of carrier aggregation after the connection destination is changed.
